Europäisches Patentamt

European Patent Office

Office européen des brevets

(11) Numéro de publication: **0 276 616 B1**

# FASCICULE DE BREVET EUROPEEN

(45) Date de publication de fascicule du brevet:
27.11.91

(51) Int. Cl.⁵: **D06B 5/16**

(21) Numéro de dépôt: 87402993.7

(22) Date de dépôt: 28.12.87

(54) Installation perfectionnée de traitement au mouillé de matières textiles disposées sur des porte-matières.

(30) Priorité: 30.12.86 FR 8618338
22.01.87 FR 8700733
12.03.87 FR 8703382

(43) Date de publication de la demande:
03.08.88 Bulletin 88/31

(45) Mention de la délivrance du brevet:
27.11.91 Bulletin 91/48

(84) Etats contractants désignés:
BE CH DE ES FR GB GR IT LI SE

(56) Documents cités:
EP-A- 0 110 058    EP-A- 0 225 246
FR-A- 2 427 417    FR-A- 2 429 283
FR-A- 2 580 004    GB-A- 2 062 036

(73) Titulaire: M. P. DURAND & Cie
17 Rue de la Libération
F-69270 Fontaines sur Saone(FR)

(72) Inventeur: Barriquand, Bernard
46, rue Pierre Depierre
F-42300 Roanne(FR)
Inventeur: Durantet, Bernard
6, rue des Noix Riorges
F-42153 Roanne(FR)
Inventeur: Villard, François
3, rue Beaulieu Riorges
F-42300 Roanne(FR)

(74) Mandataire: Laurent, Michel et al
Cabinet LAURENT et CHARRAS, 20, rue Louis
Chirpaz B.P. 32
F-69131 Ecully Cedex(FR)

**Description**

L'invention a pour objet une installation perfectionnée de traitement au mouillé de matières textiles disposées sur des porte-matières.

Elle vise, en particulier, une installation pour le traitement de matières textiles à base de fils ou fibres, naturels, synthétiques ou artificiels ou de leurs mélanges, que lesdites matières soient sous forme de fils, de bourres, de peignés, de rubans, de câbles, de gâteaux de filature, de pièces tissées ou tricotées, d'ensouples, d'écheveaux, etc,... et l'invention qui prévoit l'application à de telles matières traitées chacune seule ou, en variante, de manière mixte, envisage également pour celles-ci, en particulier, mais non exclusivement, des traitements comme la teinture, le blanchiment, la fixation, etc...

On connaît déjà des installations de lavage, teinture ou blanchiment de matières textiles dans lesquelles les traitements sont réalisés dans un autoclave par circulation d'un fluide de traitement à travers lesdites matières disposées sur des porte-matières, par exemple des dispositifs à baïonnettes ou clarinettes pour le traitement de bobines de fils. De tels autoclaves sont soit à disposition horizontale, c'est-à-dire à enceinte ou cuve de traitement d'axe horizontal, soit à disposition verticale.

Dans ce dernier cas, ils sont généralement érigés sur des fosses de plus ou moins grande profondeur, couvertes par une passerelle ou un plancher à partir duquel sont actionnés des ponts-roulants, portiques ou analogues de manipulation des porte-matières pour leur introduction et/ou leur extraction dans et hors de l'autoclave. L'encombrement est important et, étant donné que les travaux de génie civil et d'aménagement d'une installation comprenant de tels autoclaves, de même que les frais d'exploitation et d'entretien augmentent de façon importante avec la profondeur des fosses et/ou la hauteur sous plafond lorsque les autoclaves sont de plain-pied, il est avantageux de réduire autant que faire se peut l'encombrement des autoclaves, de sorte que des installations peuvent être construites ou des installations déjà existantes étendues, à moindre frais.

Dans le cas d'installations à autoclaves horizontaux, pour le traitement au mouillé de matières textiles disposées sur des chariots analogues à des wagonnets, par exemple pour le traitement de pièces de tissus, mais aussi pour le traitement d'autres matières textiles, comme décrit par exemple dans EP-A1-0 225 246 opposable au titre de l'Article 54(3) et (4) CBE pour tous les pays désignés de la présente demande à l'exception de GR et SE, les autoclaves sont généralement des appareils complexes, encombrants, bien appropriés à un mode de fonctionnement mais à un tel mode seulement, de sorte qu'ils répondent mal aux exigences d'exploitation des installations modernes dans lesquelles plus de souplesse est requise.

Si, quel que soit le type d'installation, l'on cherche en outre à mettre en oeuvre un rapport de bain aussi court que possible, c'est-à-dire à diminuer autant que faire se peut le rapport du poids de liquide de traitement au poids de matières textiles traitées, alors le volume "utile" de l'autoclave de l'installation, c'est-à-dire le volume dans lequel sont placés les porte-matières garnis de leur charge doit être aussi voisin que possible de celui desdits porte-matières chargés, tout en permettant cependant un fonctionnement satisfaisant, en particulier une expansion dudit bain de traitement lorsque celui-ci est mis en température, par exemple dans des opérations de teinture.

A l'obtention d'un résultat satisfaisant contribue aussi la bonne circulation du fluide de traitement dans l'autoclave et dans les matières à traiter, en particulier d'un bain liquide lorsque le traitement au mouillé est une teinture, ledit liquide étant mis en mouvement par une pompe, turbine ou analogue qui le fait circuler suivant une boucle fermée sur laquelle est éventuellement interposé un échangeur de chaleur. Si la pression dynamique du fluide mis en mouvement par la pompe, turbine ou analogue ne doit pas entraîner des incidents de fonctionnement, il importe que les porte-matières et leur charge soient immobilisés simplement mais de manière sûre dans l'autoclave et cela quel que soit le sens de circulation du fluide, -qui doit en outre pouvoir être inversé-, par exemple dans le cas du traitement de bobines de fils, pour réaliser une circulation de l'intérieur vers l'extérieur des bobines ou vice-versa.

Etant donné, complémentairement, que dans le cas d'un traitement sous pression statique, par exemple d'air comprimé ou de gaz inerte, -comme de l'azote-, le coût pour des quantités importantes n'est pas négligeable, une installation satisfaisante doit non seulement permettre de remplir les conditions mentionnées ci-dessus mais également mettre en oeuvre une quantité de gaz aussi faible que possible.

C'est, par conséquent, un but de l'invention de fournir une installation perfectionnée pour le traitement au mouillé de matières textiles qui soit d'une exploitation économique, eu égard au rapport de bain nécessaire pour sa mise en oeuvre et qui, en outre, soit propre à résoudre simultanément les différents problèmes évoqués ci-dessus d'une telle installation.

C'est, aussi, un but de l'invention de fournir une telle installation qui s'intègre parfaitement dans un ensemble industriel moderne de fabrication de matières textiles où le traitement au mouillé représente une des phases de la fabrication entre, par exemple, la filature et le tissage ou le tricotage.

C'est, à cet égard, un but de l'invention de fournir une telle installation perfectionnée dans laquelle les manipulations de matières textiles soient facilitées au cours de la totalité du processus de fabrication et qui, en outre, est conçue pour la plus grande automatisation possible.

C'est, aussi, un but de l'invention de fournir un autoclave perfectionné pour une telle installation dont l'encombrement soit aussi réduit que possible et qui, en particulier, n'exige pas pour sa mise en place ou son exploitation d'importants travaux de maçonnerie, comme des fosses ou puits tels qu'actuellememement requis sur les autoclaves connus.

C'est, également, un but de l'invention de fournir un autoclave perfectionné pour une telle installation qui non seulement soit d'exploitation simple en ce qui concerne le traitement dans l'autoclave mais permette également des gains de productivité importants, lors des phases qui précèdent et/ou qui suivent ledit traitement, par exemple un séchage ou analogue. On sait, en effet, que les opérations de chargement et de déchargement des matières à traiter sur leurs supports respectifs, lorsque ceux-ci doivent être adaptés à des machines différentes, introduisent des accroissements de temps de travail, d'une part, et de coûts de main d'oeuvre, d'autre part, qui sont autant d'obstacles à un rendement de fabrication élevé.

C'est pourquoi c'est également un but de l'invention de fournir un autoclave perfectionné pour une telle installation de traitement au mouillé de matières textiles qui pallie l'inconvénient mentionné ci-dessus et qui, de ce fait, permette une rationalisation des traitements successifs au sein d'une même unité de production.

C'est, encore, un but de l'invention de fournir un autoclave perfectionné qui, pour le traitement au mouillé dans l'installation, permette la mise en oeuvre de courts ou très courts rapports de bain, avec tous les avantages économiques qui leur sont attachés.

C'est, aussi, un but de l'invention de fournir un autoclave perfectionné qui, nonobstant le court ou très court rapport de bain mis en oeuvre dans l'installation, c'est-à-dire l'utilisation de faibles ou très faibles quantités d'agents actifs pour le traitement, conduise à d'excellents résultats en ce qui concerne les produits finis, en raison notamment d'une bonne circulation et distribution du bain de traitement dans l'ensemble de l'autoclave.

C'est, également, un but de l'invention de fournir une installation de traitement au mouillé de matières textiles qui soit d'un encombrement nettement plus faible que celui des installations connues.

C'est, enfin, un but de l'invention de fournir une telle installation adaptée à tous les types de traitement actuellement mis en oeuvre dans le domaine de l'ennoblissement des matières textiles, y compris les traitements à haute température et sous pression et qui, de plus, permette d'effectuer ces traitements dans des rapports de bains, de l'ordre de 1:3, dans le cas d'un traitement "matières non immergées", comme actuellement souhaité pour des raisons d'économie d'énergie, d'eau, de colorants, de produits chimiques, de même que de maintien à une faible valeur des effluents dont certains peuvent être polluants.

Une installation perfectionnée de traitement au mouillé de matières textiles disposées sur des porte-matières comportant une cuve à axe sensiblement horizontal dont au moins une extrémité est munie d'une porte d'entrée et de sortie d'au moins un porte-matières sur lequel sont chargées les matières textiles à traiter, avec un appareillage de mise en mouvement au travers desdites matières par l'intermédiaire d'une pompe, turbine ou analogue d'un fluide de traitement circulant en boucle fermée et, le cas échéant, un échangeur de chaleur interposé sur ladite boucle, avec pour chaque porte-matières une embase en caisson munie d'au moins une ouverture de raccordement à une ouverture d'un porte-matières adjacent ou de raccordement à une première tubulure de l'appareillage de mise en mouvement du fluide qui débouche dans un volume de traitement pour établir un premier trajet de circulation du fluide dans un sens, la circulation dudit fluide dans l'autre sens se faisant suivant un second trajet qui comporte au moins une seconde tubulure dudit appareillage débouchant également dans ledit volume, est caractérisée, pour GR et SE, en ce que ce dernier est limité latéralement par des parois régnant entre le plancher et la voûte de la cuve et en ce que ladite première tubulure et au moins ladite seconde tubulure débouchent chacune dans ledit volume par un ou des passages ménagés au voisinage du plancher de la cuve.

Pour les Etats contractants désignés de la demande, autres que GR et SE, l'invention est caractérisée en ce que ladite première tubulure et au moins ladite seconde tubulure débouchent chacune dans ledit volume par un ou des passages ménagés au voisinage du plancher de la cuve, au moins un desdits passages étant prévu au voisinage de l'extrémité longitudinale de la cuve opposée à celle présentant la porte d'entrée et de sortie du ou des porte-matières.

Dans une réalisation préférée, la cuve est de forme générale parallélépipédique, à section droite quadrangulaire ; du fait que son aire est peu différente de celle des porte-matières chargés, le rapport de bain mis en oeuvre dans une telle installation est extrêmement faible.

Il est encore diminué, dans certains cas, par exemple celui du traitement d'ensouples, ou de quantités réduites de fil par l'adjonction dans la cuve d'un ou de corps mort(s) disposé(s) au voisinage de l'ensouple ou des bobines de fil, le ou les corps mort(s) étant distinct(s) du porte-matières ou, en variante, solidaire(s) de ce dernier.

Une telle disposition permet en outre, avec un corps mort fermé résistant à la pression et dans le cas d'un traitement sous pression statique, par exemple d'air comprimé ou de gaz inerte, comme de l'azote, de diminuer la quantité de gaz mise en oeuvre et ainsi réduire d'autant le coût d'exploitation de l'installation.

En variante, la cuve est de forme générale cylindrique à section droite circulaire, elle aussi d'aire peu différente de celle des porte-matières chargés.

Dans encore une autre forme de réalisation, la cuve est cylindrique à section droite circulaire mais enferme des réducteurs de bains dont la section droite est conformée suivant des segments circulaires, de sorte qu'ils limitent un volume utile parallélépipédique de section droite également peu différente de celle des porte-matières chargés.

Pour diminuer l'encombrement au sol d'une installation perfectionnée selon l'invention, on prévoit en outre de rapporter sur la partie supérieure de la cuve un récipient de préparation de bain, relié fonctionnellement à la cuve par des canalisations, vannes et pompes usuelles d'introduction de bain, de vidange, etc... .

Dans une telle réalisation, et en particulier lorsque la cuve est à section droite quadrangulaire et est destinée à fonctionner en autoclave, la tenue à la pression est obtenue à l'aide de raidisseurs transversaux et éventuellement de renforts longitudinaux disposés sur sa périphérie, la partie basse des raidisseurs ou de certains d'entre eux servant de support, sur le sol, de l'ensemble cuve-récipient de préparation de bain.

Dans une forme de réalisation préférée, la cuve est à fond plat et celui-ci est muni sur sa face interne de moyens de roulement avec lesquels sont propres à coopérer deux chemins ménagés sur le caisson des porte-matières, lors de l'introduction et/ou de l'extraction de ceux-ci dans et/ ou hors de la cuve.

Lesdits porte-matières sont alors de structure particulièrement simple, puisque constitués principalement par le caisson formant leur partie inférieure.

Lorsque les matières à traiter sont des bobines ou analogues, l'invention prévoit que sur l'embase soient érigées des baïonnettes ou clarinettes, à disposition régulière de rangées et colonnes, ou à disposition en quinconce, destinées à matérialiser l'axe des piles de bobines, ainsi que les canaux de circulation de fluide intérieurs auxdites bobines.

Lorsque, de façon plus spécifique, les matières à traiter sont des rubans de peignés, de la bourre ou du câble, l'embase est munie, en correspondance, de moyens de maintien desdits rubans, de la bourre ou du câble, comme des viroles ou analogues.

Dans une autre réalisation, également destinée au traitement de bobines de fils ou analogues, les porte-matières sont dépourvus de baïonnettes ou clarinettes mais sont alors prévus pour être équipés de modules munis de moyens de maintien des piles de bobines à disposition régulière de rangées et colonnes ou en quinconce.

Dans encore une autre réalisation, elle aussi destinée au traitement de bobines de fils ou analogues, les porte-matières sont conçus pour le support des bobines non plus verticalement mais sous forme de rangées horizontales et les embases à caisson des porte-matières sont alors munis d'organes correspondants pour le maintien des broches portant les bobines, d'une part, et l'amenée et/ou le retour de fluide de traitement auxdites bobines, d'autre part.

Dans une autre réalisation, destinée au traitement d'écheveaux, les porte-matières comportent sur les faces latérales longitudinales des embases à caissons des moyens de support des "bâtons" rectilignes portant les écheveaux et qui sont disposés parallèlement les uns aux autres et perpendiculairement à l'axe de la cuve de traitement.

Dans un mode d'exécution de l'installation, prévu pour une utilisation mixte, à savoir le traitement de matières sous forme de bobines de fils ou de peignés mais aussi d'ensouples, on prévoit d'associer à l'appareillage de mise en mouvement du fluide une troisième tubulure, laquelle débouche dans la paroi de la cuve en regard du tube porte-ensouple avec des moyens de vannes pour établir le trajet de fluide approprié aux matières textiles en cours de traitement à partir de la turbine ou analogue que comporte ledit appareillage.

Dans un tel mode d'exécution, le porte-ensouple et l'ensouple formée sur celui-ci sont à section droite quadrangulaire, avantageusement carrée ou rectangulaire.

Dans une variante de réalisation, une pluralité d'ensouples sont disposées sur un même porte-ensouple, lequel est à section droite généralement quadrangulaire, avec les ensouples avantageusement placées aux angles de la section carrée ou rectangulaire.

Dans une réalisation également préférée, on prévoit d'associer à la ou aux tubulure(s) non reliée(s) aux ouvertures du ou des porte-matières une ou des tôles déflectrices, orientée(s) vers le fond de la cuve, de sorte que la pression dynamique du fluide de traitement engendrée par la pompe, turbine ou analogue de l'appareillage de mise en mouvement du fluide ne provoque pas d'endommagement des matières textiles disposées au voisinage des débouchés desdites tubulures dans le volume de traitement enfermant le ou les porte-matière(s).

Dans un mode d'exécution préféré, on prévoit de rapporter au voisinage de l'extrémité de la cuve opposée à celle présentant la porte d'entrée et de sortie des porte-matières une cloison sensiblement verticale et une cloison sensiblement horizontale au-dessus desdites tôles déflectrices pour diminuer le volume de bain de traitement, dans le cas d'un traitement des matières avec immersion totale, la cloison verticale permettant, en outre, un rinçage continu, si l'on prévoit dans l'espace limité par cette cloison et qui n'est pas celui contenant les porte-matières une pompe ou analogue de reprise de fluide.

Dans une autre réalisation d'une installation perfectionnée selon l'invention, la circulation du fluide de traitement dans un sens a lieu dans un conduit longitudinal qui règne sensiblement dans le plan médian et dans le fond de la cuve, la circulation de fluide dans l'autre sens se faisant au moyen d'au moins un et de préférence deux canaux longitudinaux qui règnent eux aussi dans la cuve au voisinage dudit conduit médian.

Dans une telle structure, la liaison du conduit longitudinal médian à ou aux porte-matières, pour le passage du fluide de traitement, s'effectue à partir d'un ou avantageusement plusieurs orifices ménagé(s) dans une paroi limitant ledit conduit et auxquels sont propres à être abouchés, avec interposition de moyens d'étanchéité, des embouts de liaison prévus sur chaque caisson ou analogue de répartition du fluide de traitement associé à un porte-matières.

Dans un mode d'exécution, l'invention prévoit en outre que les moyens d'étanchéité soient rendus automatiquement opératoires lorsque sont actionnés des moyens d'immobilisation du ou des porte-matières prévus en partie haute de la cuve ou, en variante, prévus sur la porte d'entrée et de sortie des porte-matières au voisinage des moyens de fermeture étanche de ladite porte.

Dans un mode d'exécution préféré, la liaison du conduit aux porte-matières est réalisée à l'aide de raccords mobiles montés à étanchéité dans ledit conduit avec lequel ils communiquent et propres à venir coopérer avec les embouts solidaires desdits porte-matières.

Dans un autre mode d'exécution, les canaux sont limités par le fond de la cuve et/ou un berceau qui en est solidaire et par lequel il repose sur le sol, d'une première part, par les parois dudit conduit médian, de seconde part, et par des plaques perforées, des grilles ou analogues, de troisième part, lesquelles règnent entre lesdites parois du conduit médian et l'enceinte de la cuve sur la totalité ou quasi totalité de la longueur de celle-ci.

Dans une variante, qui ne prévoit pas lesdites plaques perforées, grilles ou analogues, les canaux latéraux de circulation du fluide de traitement sont limités par les parois du conduit médian, l'enceinte de la cuve et la face inférieure du ou des porte-matières.

Le ou les canaux latéraux de circulation du fluide de traitement peuvent également être limités par les faces latérales et/ou de dessus des porte-matières.

Dans une exécution préférée, le conduit médian longitudinal de circulation du fluide dans un sens est à section droite en forme de segment circulaire et la circulation du fluide dans l'autre sens a lieu au-dessus dudit conduit médian.

Dans un autre mode d'exécution, les moyens de mise en mouvement du fluide de traitement, comme une turbine ou analogue, l'échangeur de chaleur et les moyens associés sont disposés à une extrémité de la cuve, sensiblement dans un plan médian longitudinal de cette dernière.

Dans un autre mode d'exécution, lesdits moyens sont placés latéralement par rapport à la cuve, laquelle peut alors être munie d'une porte d'entrée et de sortie de porte-matières à chacune de ses extrémités longitudinales.

Dans une réalisation préférée, dans laquelle le fluide de traitement est un bain liquide, on associe à la cuve, à la partie supérieure de celle-ci, un récipient de préparation de bain porté par des arceaux fixés sur la partie haute de la cuve. L'appareillage est alors particulièrement compact, bien approprié pour des traitements de teinture, et d'encombrement au sol inférieur à celui des autoclaves de teinture connus, même si l'on prévoit, au voisinage de la cuve, un petit bassin de reponchonnage.

Quel que soit le mode de réalisation de l'installation, l'invention prévoit qu'elle puisse être mise en oeuvre en utilisant le conduit médian longitudinal pour la distribution du fluide de traitement, c'est à dire l'amenée de ce dernier à travers les matières à traiter, la reprise du fluide, c'est-à-dire l'évacuation après traitement, s'effectuant par retour au circuit de mise en mouvement à l'aide du ou des canaux longitudinaux ou latéraux.

Dans un second mode de mise en oeuvre, la distribution du fluide de traitement est effectuée à l'aide des canaux longitudinaux ou latéraux et la reprise par le conduit médian longitudinal.

Dans l'un et l'autre cas, une réalisation particulièrement préférée de l'invention envisage l'utilisation de porte-matières dont le chargement et/ou le déchargement a lieu au moyen de modules, c'est-à-dire de dispositifs permettant la manipulation simultanée d'un grand nombre d'ensembles unitaires, comme des bobines de fils ou analogues. Dans un tel cas de traitement de bobines les modules sont organisés pour, dans une première réalisation, coopérer avec des porte-matières à baïonnettes érigées sur un caisson de répartition de bain du porte-matières.

Dans une seconde réalisation, chaque module de manutention de bobines, -destiné à équiper un porte-matières ne présentant pas de baïonnettes, mais uniquement un caisson de répartition de bain et un embout de liaison au circuit de fluide de traitement-, est muni de moyens de maintien des piles de bobines auxquels sont associés des chapeaux de serrage et d'étanchéité.

Plusieurs de ces derniers sont de préférence réunis entre eux, suivant un dispositif du type "araignée" propre à être fixé en partie haute desdits moyens de maintien de piles.

Pour une telle réalisation, les moyens d'immobilisation du ou des porte-matières dans la cuve, prévus en partie haute de celle-ci, comprennent alors un plateau de forme et dimensions conjuguées de celles du porte-matières et/ou des modules, déplaçable perpendiculairement à l'axe de la cuve pour l'amener au contact desdits modules, ainsi que, le cas échéant, des piles de bobines, assurant alors simultanément l'immobilisation des porte-matières, le serrage des bobines et leur étanchéité.

L'invention sera bien comprise par la description qui suit, faite à titre d'exemple et en référence au dessin annexé dans lequel :

- la figure 1 est une vue schématique en coupe longitudinale d'une installation perfectionnée selon l'invention ;
- la figure 2 en est une vue schématique de dessus, certaines parties ayant été ôtées dans un but de clarté ;
- la figure 3 est une vue en coupe selon la ligne 3-3 de la figure 1 mais à plus grande échelle ;
- la figure 4 est une vue schématique en coupe selon la ligne 4-4 de la figure 1 mais à plus grande échelle ;
- la figure 5 est une vue analogue à celle de la figure 1 mais pour une autre forme de réalisation ;
- la figure 6 est une vue en coupe selon la ligne 6-6 de la figure 5 mais à plus grande échelle ;
- la figure 7 est une vue schématique en perspective d'un porte-matières d'une installation perfectionnée selon l'invention pour une première forme de réalisation ;
- la figure 8 est une vue en coupe transversale du porte-matière montrée sur la figure 7 ;
- la figure 9 est une vue en coupe longitudinale d'une variante de réalisation ;
- la figure 10 est une vue schématique en élévation d'une installation perfectionnée selon l'invention pour le traitement de câble ou de bourre ; ;
- la figure 10A en est une vue schématique de dessus correspondante ;
- la figure 10B est une vue correspondante par l'avant, c'est-à-dire du côté de la porte d'entrée et/ou de sortie des porte-matières ;
- la figure 11 est une vue analogue à celle de la figure 10A mais l'installation étant illustrée pour son application au traitement de rubans de peignée ;
- la figure 12 est une vue analogue à celle de la figure 10 mais illustrant l'utilisation de l'installation pour le traitement mixte d'écheveaux et de bobines de fil ;
- la figure 12A est une vue analogue à celle de la figure 10B mais illustrant l'utilisation de l'installation pour le traitement d'une pluralité d'ensouples horizontales;
- la figure 13 est une vue analogue aux figures 1 et 5 mais pour encore une autre forme de réalisation ;
- la figure 14 est une vue de dessus, certaines parties ayant été ôtées dans un but de clarté, de la réalisation montrée sur la figure 13 ;
- la figure 15 est une vue en coupe selon la ligne 15-15 de la figure 14 et à plus grande échelle ;
- la figure 16 est une vue analogue à celle de la figure 5 mais pour une autre forme de réalisation des porte-matières ;
- la figure 17 est une vue schématique, en plan, d'encore une autre forme de réalisation d'installation perfectionnée selon l'invention ;
- la figure 18 est une vue analogue à celle de la figure 16 mais pour encore une autre forme de réalisation ;
- la figure 19 est une vue en coupe selon la ligne 19-19 de la figure 18 mais à plus grande échelle ;
- la figure 20 est une vue en coupe selon la ligne 20-20 de la figure 16 mais à plus grande échelle ;
- la figure 21 est une vue à plus grande échelle, en coupe selon la ligne 21-21 de la figure 6 ;
- la figure 22 est une vue analogue à celle de la figure 21 mais prise le long de la ligne de coupe 22-22 de la figure 6 ;
- la figure 23 est une vue schématique en coupe longitudinale d'une installation perfectionnée selon l'invention pour une autre réalisation ;
- la figure 24 est une vue en coupe suivant la ligne 24-24 de la figure 23 ;

- la figure 25 est une vue analogue à celle de la figure 24 mais pour une variante de réalisation ;
- la figure 26 est une vue analogue à celle de la figure 23, mais pour une autre forme de réalisation ;
- la figure 27 est une vue analogue à celles des figures 23 et 26 mais pour encore une autre forme de réalisation ;
- la figure 28 est une vue analogue à celle de la figure 23 pour encore une autre forme de réalisation ;
- la figure 29 est une vue en coupe selon la ligne 29-29 de la figure 28, mais à plus grande échelle ;
- la figure 30 est une vue analogue à celle de la figure 28 pour une variante de réalisation ;
- la figure 31 est une vue en coupe selon la ligne 31-31 de la figure 30, mais à plus grande échelle ;
- la figure 32 est une vue semblable à celle de la figure 30 mais illustrant un autre mode de fonctionnement ;
- la figure 32A est une vue analogue à la figure 28 mais pour une variante ;
- la figure 33 est une vue semblable à celle des figures 30 et 32 mais pour encore une autre réalisation ;
- la figure 34 est une vue en coupe longitudinale d'un autoclave d'installation perfectionnée selon l'invention ;
- la figure 35 est une vue en coupe selon la ligne 35-35 de la figure 34 mais à plus grande échelle ;
- la figure 36 est une vue schématique analogue à celle de la figure 34 mais dont la partie droite correspond à une section suivant la ligne 36-36 de la figure 35, tandis que la partie gauche correspond à une section suivant la ligne 37-37 de la même figure 35 ;
- la figure 37 est une vue schématique en coupe par un plan médian horizontal, certaines parties ayant été ôtées dans un but de clarté ;
- la figure 38 est une vue partielle schématique analogue à la figure 34 et pour un premier type de portematière ;
- la figure 39 est une vue analogue à celle de la figure 38 mais pour une autre condition du porte-matières ;
- la figure 40 est une vue analogue à celle de la figure 38 mais pour un autre porte-matières ;
- la figure 41 illustre le chargement d'un autoclave d'installation perfectionnée selon l'invention ;
- la figure 42 est une vue schématique, de dessus, d'une autre forme de réalisation d'un autoclave ;

- la figure 43 est une vue analogue à la figure 34 mais pour une autre forme de réalisation ;
- la figure 44 est une vue en coupe selon la ligne 44-44 de la figure 43 mais à plus grande échelle ;
- la figure 45 est une vue schématique, en coupe, selon la ligne brisée 45-45 de la figure 43 ;
- la figure 45a est une vue partielle, en coupe, selon la ligne 45a-45a de la figure 43, et à plus grande échelle ;
- la figure 45b est une vue analogue à celle de la figure 44 mais pour une variante ;
- la figure 45c est une vue analogue aux deux précédentes, mais pour une autre variante, et très schématique ;
- les figures 46, 47 et 48 sont des vues analogues aux figures 34, 35 et 37 mais pour une autre forme de réalisation ;
- la figure 49 est une vue analogue à la figure 43, mais pour une autre réalisation ;
- la figure 50 est une vue en coupe selon la ligne 50-50 de la figure 49 mais à plus grande échelle ;
- la figure 51 est une vue de dessus correspondante ;
- la figure 52 est une vue analogue à la figure 49 mais pour encore une autre réalisation ;
- la figure 53 est une vue en coupe selon la ligne 53-53 de la figure 52 mais à plus grande échelle ;
- la figure 54 est une vue analogue à la figure 52 mais pour encore un autre mode d'exécution d'un autoclave perfectionné selon l'invention ;
- les figures 54A et 54B illustrent une autre forme de réalisation d'un autoclave perfectionné selon l'invention ;
- la figure 55 illustre le chargement d'un porte-matière du type à baïonnettes ;
- la figure 56 montre le porte-matières de la figure 55 partiellement garni de piles de bobines de fils ;
- la figure 57 est une vue partielle de dessus de l'ensemble montré sur la figure 56 ;
- la figure 58 est une vue schématique en élévation d'un module propre à équiper un porte-matière ;
- la figure 59 est une vue de dessus du module montré sur la figure 58 ;
- la figure 60 est une vue analogue à celle de la figure 58 mais montrant le module sur un porte-matière ;
- la figure 61 est une vue de dessus du dispositif montré sur la figure 60 ;
- la figure 62 montre un moyen de liaison d'un porte-matière d'un autoclave perfectionné selon l'inventionau circuit de fluide de traitement ;

- la figure 63 montre un moyen d'immobilisation d'un porte-matière ;
- la figure 64 est une vue schématique en plan illustrant le chargement d'un porte-matière à l'aide de modules garnis de bobines, préalablement à leur introduction dans un autoclave selon l'invention ;
- la figure 65 illustre un mode d'utilisation de l'autoclave d'une installation perfectionnée selon l'invention;

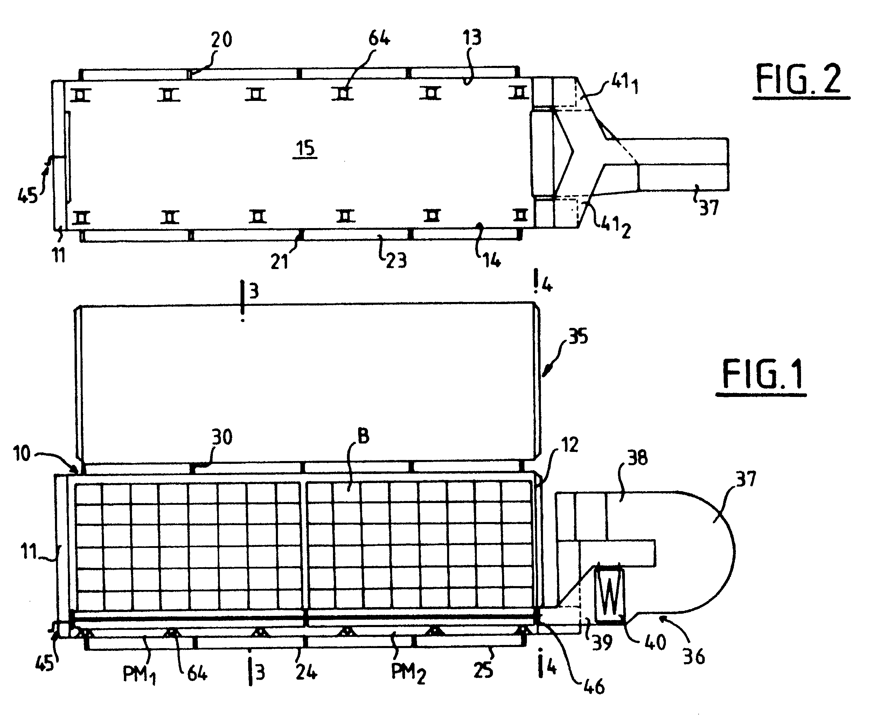

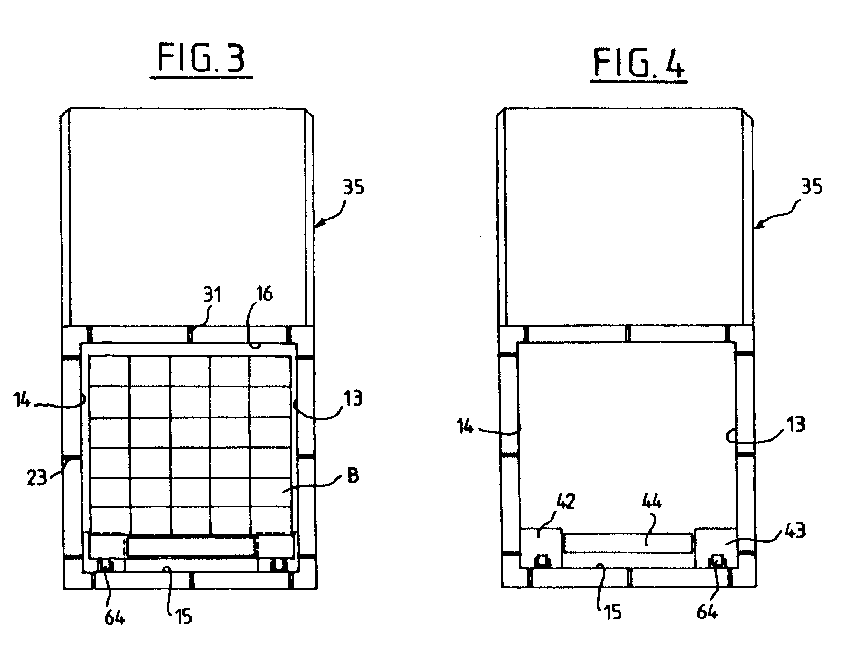

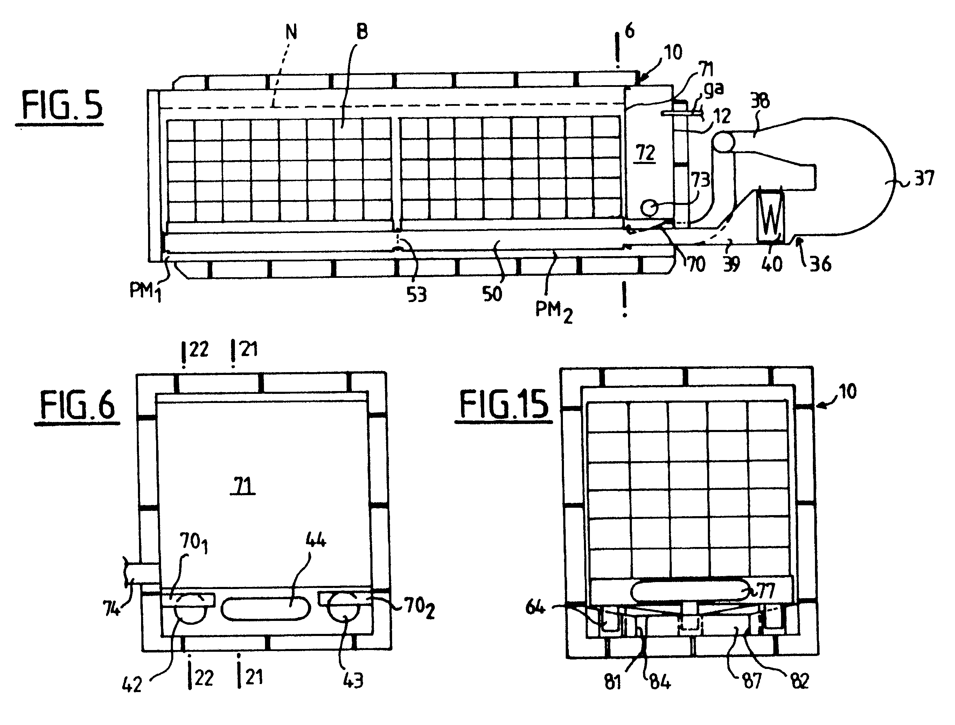

On se réfère d'abord aux figures 1 à 4 qui illustrent la structure générale d'une installation perfectionnée selon l'invention pour le traitement au mouillé de matières textiles disposées sur des porte-matières, dans une première réalisation. Celle-ci comprend une cuve 10 à axe longitudinal sensiblement horizontal et qui repose directement sur le sol S d'une usine de traitement au mouillé de matières textiles comme une teinturerie ou analogue, sans que cette indication ait, bien entendu, quelque caractère limitatif que ce soit. La cuve 10 est munie à une de ses extrémités longitudinales d'une porte 11, avantageusement du type à pivotement ou à guillotine et, à son autre extrémité, d'une paroi frontale 12. Comme bien visible sur les figures 3 et 4, la cuve 10 est avantageusement parallélépipédique et limitée par des parois verticales latérales 13, 14, un plancher plan 15 et une voute plane 16.

Comme bien visible sur ces mêmes figures, la cuve 10 est munie de raidisseurs transversaux 20, 21, etc... dont certains peuvent servir pour faire reposer la cuve sur le sol et, éventuellement de renforts longitudinaux comme ceux montrés en 23, 24 et 25.

En partie haute de la cuve, c'est-à-dire au-dessus de la voute 16, les raidisseurs 30 et les renforts éventuels 31 servent, complémentairement, à porter un récipient 35 de préparation de bain, lequel est relié par des tuyauteries, des vannes et des moteurs, non représentés, à la cuve 10, d'une part, et à un appareillage 36, d'autre part, prévu pour la mise en mouvement du fluide de traitement dans la cuve. Ledit appareillage comprend une pompe ou turbine 37 à tubulure 38 d'aspiration ou de refoulement et à tubulure 39 de refoulement ou d'aspiration, respectivement, avec sur l'une et/ou l'autre desdites tubulures, ici la tubulure 39, un échangeur de chaleur 40, les deux tubulures 38 et 39 dans lesquelles le fluide de traitement circule suivant un circuit en boucle fermée étant reliées au volume intérieur à la cuve 10 où sont logées les matières à traiter.

Dans la réalisation considérée, la tubulure 38 est sous forme d'une culotte d'où sont issues deux branches 41₁ et 41₂ qui aboutissent à des passages 42 et 43 ménagés dans la paroi frontale 12 de la cuve 10 tandis que la tubulure 39 aboutit à un passage 44, également ménagé dans ladite paroi, sous forme d'une boutonnière dont la plus grande dimension est dirigée perpendiculairement à l'axe de ladite cuve, figure 4. La paroi frontale 12 étant plane on peut donner et on donne effectivement au passage 44 une longueur importante qui, si le passage était ménagé sur le fond hémisphérique d'une cuve usuelle serait, toutes choses étant égales par ailleurs, à plus grande distance du fond, alors qu'elle est, ici, très près du fond ou plancher de sorte que l'installation selon l'invention permet d'effectuer une multiplicité de types de traitements comme il sera explicité ci-après.

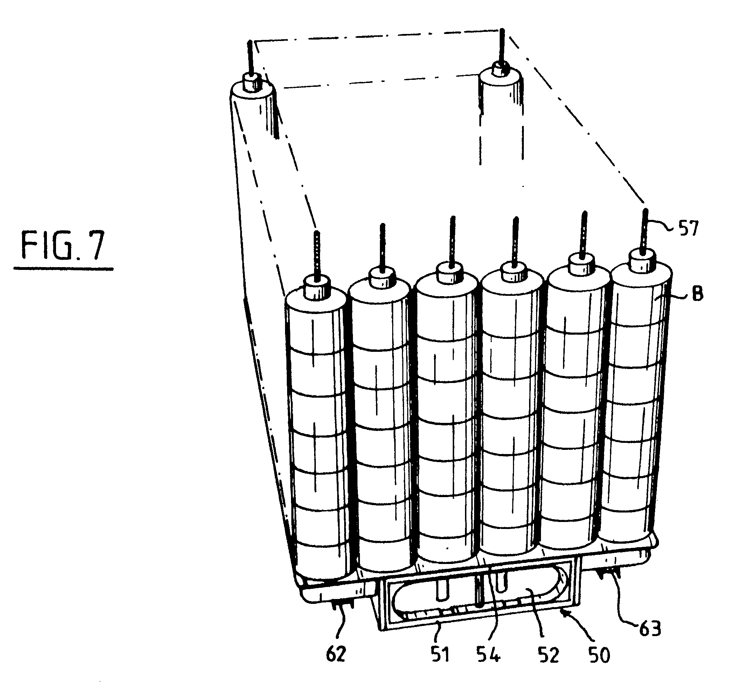

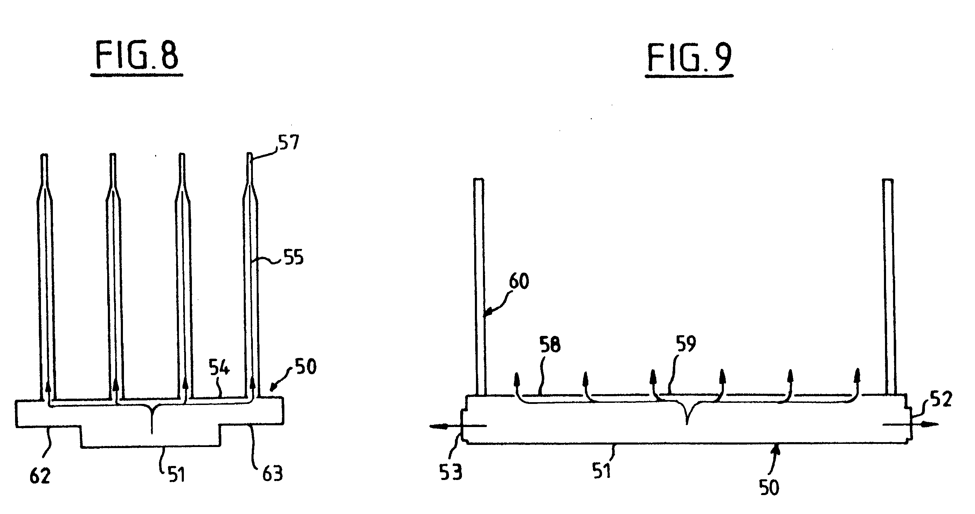

Dans la condition de fonctionnement de l'installation, c'est-à-dire celle en laquelle les matières à traiter, par exemple des bobines de fils ou de filés B disposées sur des porte-matières PM₁ et PM₂ sont en place dans la cuve 10, les passages 42, 43 et 44 sont en communication, respectivement, avec l'espace extérieur aux matières textiles en cours de traitement et avec des embases 50, en caisson, que présentent lesdits porte-matières, figures 7 et 8. De façon plus précise, chaque porte-matières PM destiné à équiper une installation perfectionnée selon l'invention comprend principalement un caisson 50, à contour plan rectangulaire, fond plein 51 et dont la périphérie présente au moins une ouverture d'entrée ou de sortie de fluide de traitement, lesdites ouvertures étant réunies à étanchéité entre deux porte-matières adjacents ou entre un porte-matière et le passage 44 lorsqu'est actionné un dispositif à manivelle 45 qui est prévu sur la porte 11 et qui assure simultanément l'immobilisation des porte-matières dans la cuve.

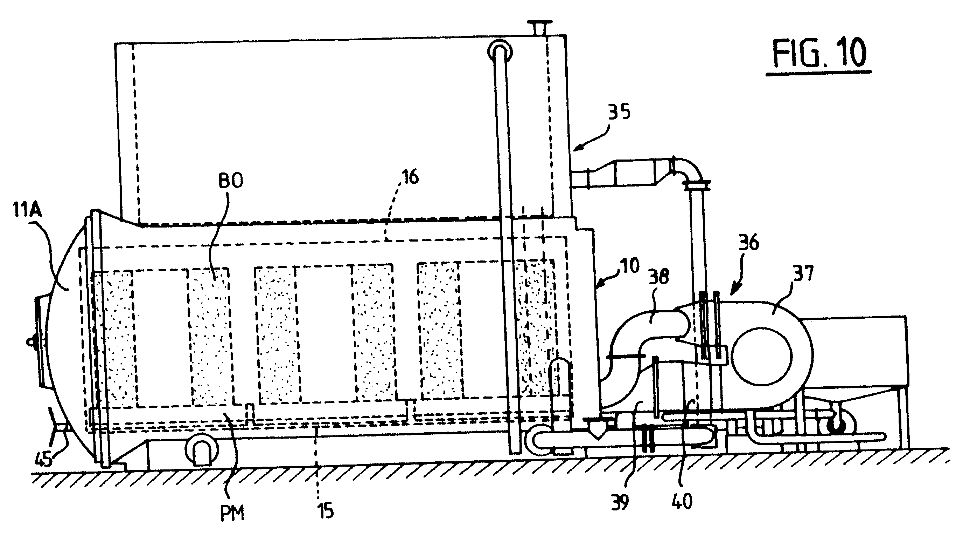

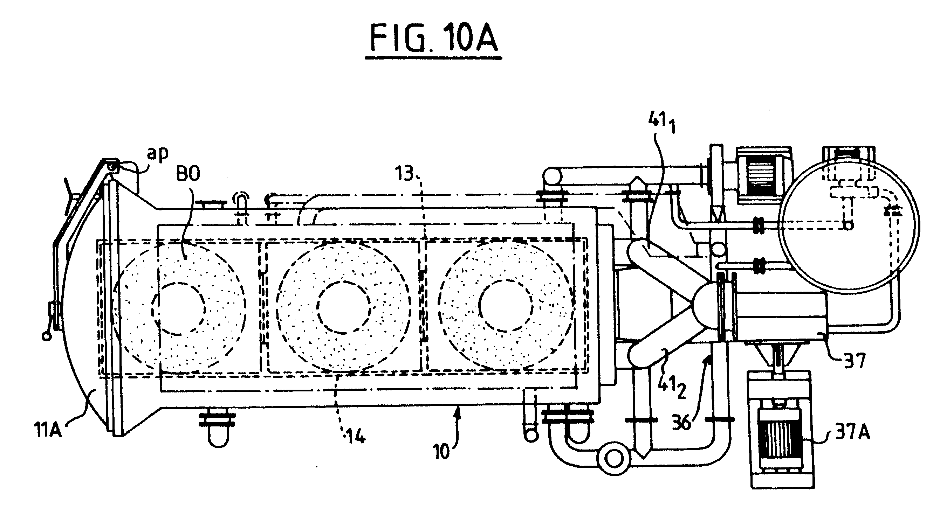

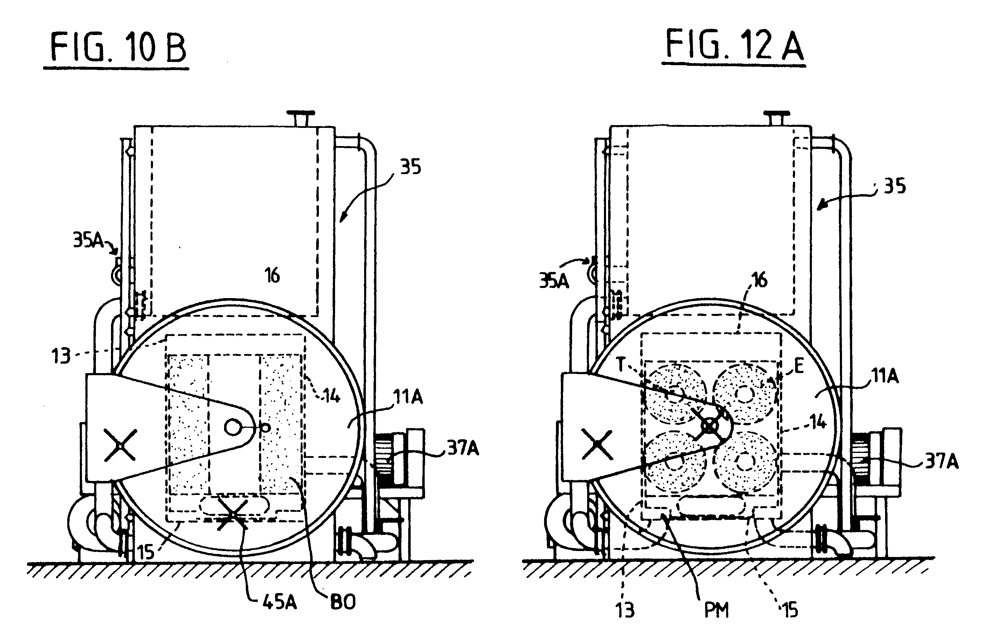

Lorsque, dans la variante préférée représentée aux figures 10 à 12A, la porte 11A est une porte à ouverture rapide montée à pivotement autour d'un axe ap et non pas une porte à guillotine, c'est un processus analogue qui est mis en oeuvre, l'actionnement d'un volant 45A prévu sur ladite porte 11A assurant simultanément l'immobilisation des porte-matières dans la cuve et la mise en condition opératoire des moyens d'étanchéité, comme 46, prévus autour des ouvertures des caissons et/ou des passages 42, 43, 44 des débouchés des tubulures de l'appareillage de mise en mouvement du fluide dans la cuve.

Dans la réalisation montrée sur les figures 7 et 8, l'entrée de fluide dans le caisson 50 a lieu par une ouverture 52, tandis que la sortie hors du caisson a lieu ou peut avoir lieu par une ouverture 53, à son extrémité opposée, le fluide circulant aussi par des canaux 55 alimentés à partir d'ouvertures du plafond 54 du caisson et qui sont ménagés par des baïonnettes 57 ou des clarinettes (constituées par des tubes perforés, non représentés) érigées sur le caisson 50. Le fond plein 51 de celui-ci présente deux décrochements longitudinaux qui ménagent des chemins 62 et 63 propres à coopérer avec des moyens de roulement 64, placés sur le plancher 15 de la cuve 10, lesdits moyens de roulement étant également ceux mis en oeuvre lorsque l'installation fait application des dispositifs à porte-matières montrés sur la figure 8.

Lorsque, par contre, la circulation du fluide dans les matières à traiter est inverse de celle définie ci-dessus, à savoir de l'extérieur vers l'intérieur des bobines B, le fluide de traitement est mis en mouvement par la pompe ou turbine 37 pour être introduit dans la cuve 10 au travers des passages 42 et 43 de la paroi 12, le retour étant effectué dans les caissons 50 des porte-matières avant reprise par la pompe ou turbine 37 à travers le passage 44, l'échangeur de chaleur 40 et la tubulure 39.

Quel que soit le mode de circulation du fluide, l'invention prévoit également de faire application de porte-matières comme montrés schématiquement sur la figure 9 et qui, s'ils comportent également un caisson 50 de même structure que celui de la réalisation précédente, sont toutefois démunis de baïonnettes ou clarinettes. Dans une telle réalisation, la face supérieure 58 du caisson est percée d'orifices 59 de passage du fluide et disposés en correspondance de piles de bobines portées par un module, non représenté, et qui peut être placé et immobilisé en position sur le caisson par l'intermédiaire de moyens montrés schématiquement en 60.

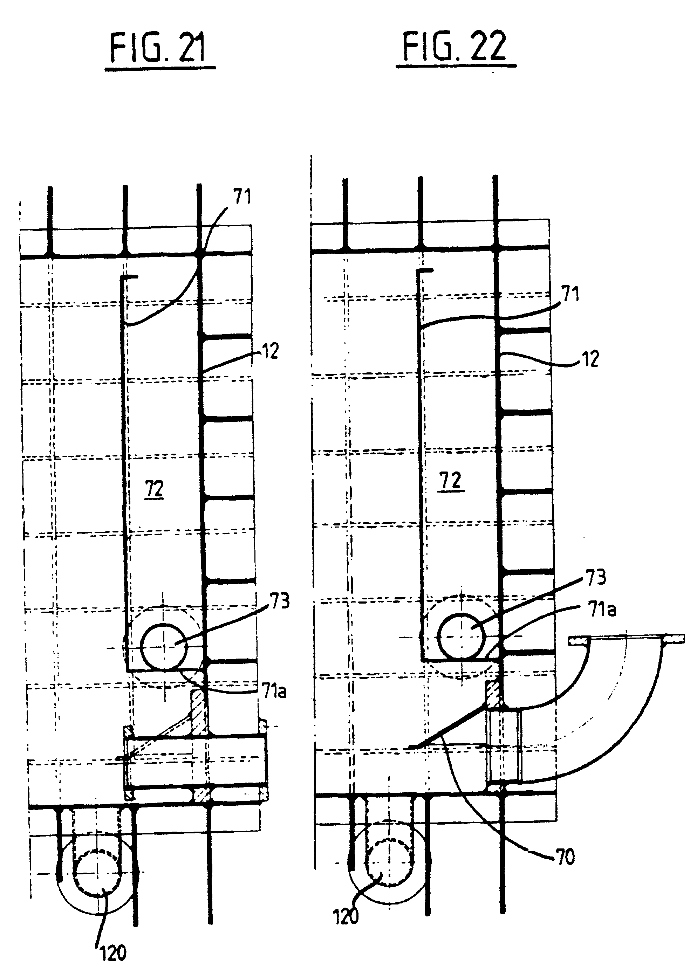

Dans la réalisation de l'installation illustrée sur les figures 5 et 6 les bobines B à traiter sont chargées sur des porte-matières $PM_1$ et $PM_2$ de structure analogue, par exemple, à celle du porte-matières montré sur les figures 7 et 8. Dans cette réalisation, toutefois, la cuve 10 est munie, complémentairement, de tôles déflectrices $70_1$ et $70_2$ inclinées ou orientées vers le plancher ou sole de la cuve pour éviter que la pression dynamique du fluide mis en mouvement par la pompe ou turbine 37 n'endommage les bobines les plus proches du débouché des tubulures qui ne communiquent pas avec les porte-matières. Dans une telle réalisation, en outre, une cloison 71 sensiblement verticale est prévue dans la cuve, au voisinage de la paroi frontale 12 et une paroi 71a, sensiblement horizontale est prévue au-dessus des tôles déflectrices, entre la cloison 71 et la paroi 12, figures 21 et 22. Une telle cloison 71, dont la hauteur est inférieure à celle de la cuve, permet d'encore diminuer le volume de bain de traitement en délimitant un espace 72 qui ne contient pas les porte-matières et qui n'a pas à être rempli de fluide de traitement lorsque ledit traitement a lieu avec immersion totale des bobines B, comme montré par le niveau N du bain de traitement.

En outre, si l'on prévoit dans le fond de l'espace 72 un dispositif 73 de reprise du fluide, la cloison 71 permet aussi un fonctionnement en rinçage continu, le liquide repris par le dispositif 73 étant évacué par une canalisation 74 de retour vers l'appareillage 36.

Dans une réalisation d'une installation selon l'invention à tôles déflectrices, comportant une cuve d'une longueur d'environ 4m, d'une hauteur d'environ 1,50m et d'une largeur d'environ 1,20m, la présence d'une cloison comme 71 permet, pour un fonctionnement en matières totalement immergées, de diminuer le volume de bain nécessaire d'environ 200 litres, par rapport à une réalisation démunie d'une telle paroi.

Lorsque l'installation est utilisée pour un traitement en matières non immergées, ou partiellement immergées, et que la cuve 10, la porte et les autres moyens qui lui sont associés sont organisés en autoclave, il est possible de réaliser, par la structure selon l'invention, des économies importantes du gaz sous pression utilisé, en particulier lorsque celui-ci est un gaz inerte comme de l'azote relativement coûteux. Ainsi, pour un autoclave ayant les caractéristiques définies ci-dessus, et susceptible de traiter jusqu'à environ 800kg de matières en une seule passe, l'économie peut être de l'ordre de 3 à 3,5m$^3$ par passe ou davantage, c'est-à-dire une fraction importante du volume de gaz mis en oeuvre lequel peut être introduit dans la cuve par tout moyen approprié, par exemple des piquages ga prévus dans la paroi 12 ou la voute 16, figure 5.

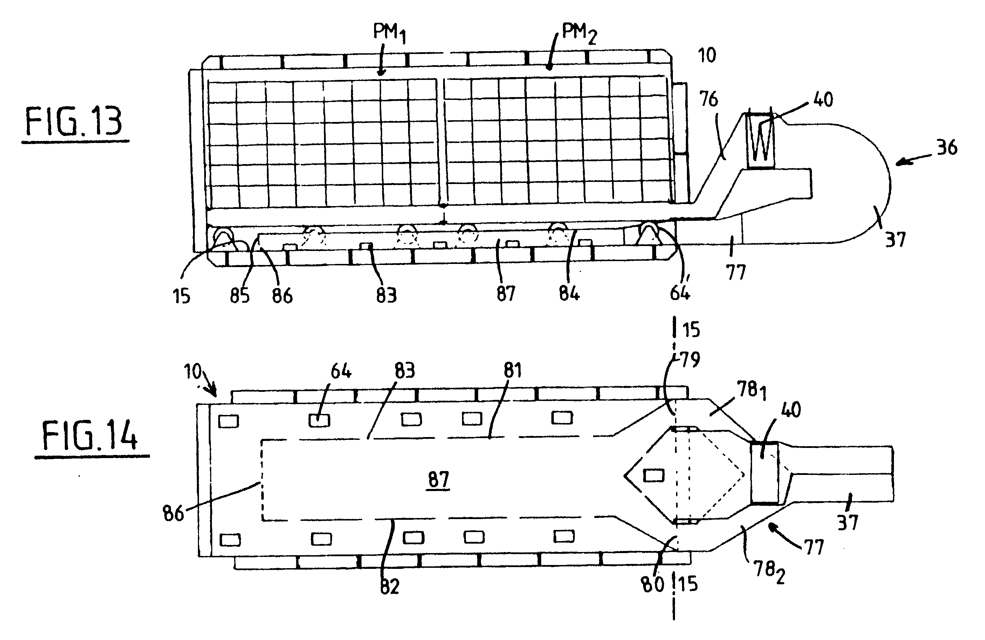

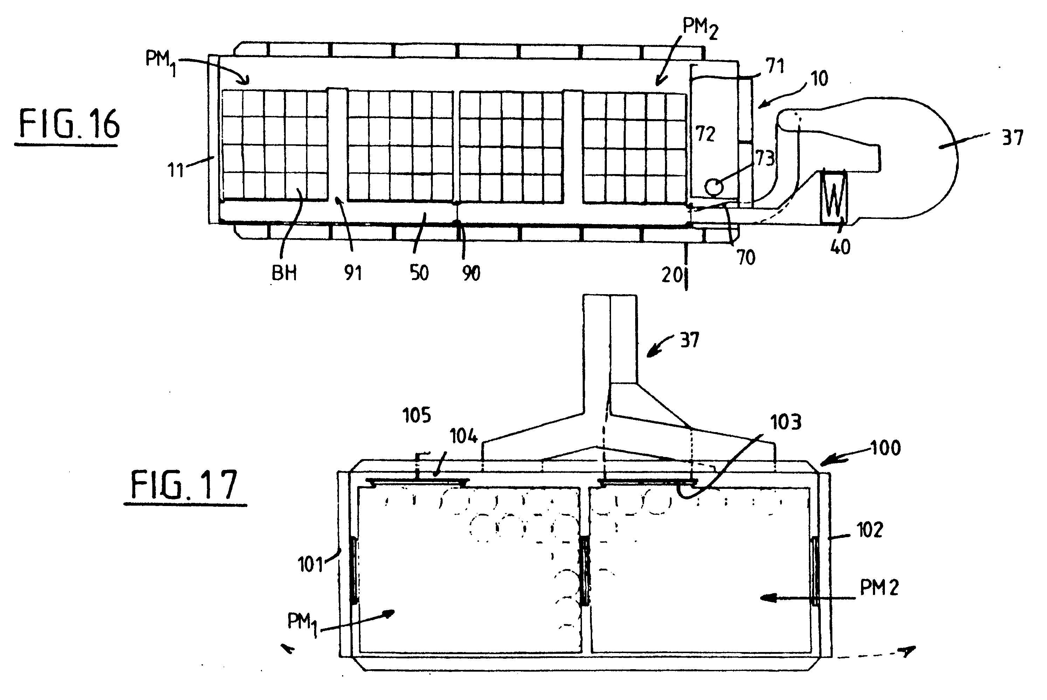

On se réfère maintenant aux figures 13 à 15 relatives à une autre réalisation d'installation perfectionnée selon l'invention. Dans celle-ci la cuve 10 munie de raidisseurs et le cas échéant de renforts, comme dans les réalisations précédentes, ainsi que d'un récipient de préparation de bain, non représenté, est associée à un appareillage 36 comportant une pompe ou turbine 37 et un échangeur de chaleur 40 interposé sur une tubulure 76 qui débouche dans la cuve 10 par une boutonnière 77, figure 15, analogue au passage 44 des réalisations précédentes. Ici, toutefois, pour la circulation du fluide de traitement dans le sens opposé à celui du mouvement dans ladite tubulure 76 on prévoit une culotte 77 dont les bras 78, et $78_2$ débouchent dans la cuve par des passages 79 et 80, figure 14, analogues aux passages 42 et 43 des réalisations précédentes. Ici encore, cependant, on prévoit en outre que le plancher 15 de la cuve soit muni de tôles longitudinales 81 et 82 présentant des perforations 83 qui définissent avec une tôle de couverture 84 à retour 85 perforé en 86 un conduit 87 qui favorise la collecte ou la distribution du fluide de traitement par l'intermédiaire de l'appareillage 36.

Dans cette réalisation, également, les porte-matières PM$_1$ et PM$_2$ sont introduits et/ou extraits de la machine par coopération de chemins ménagés sur leur fond plein avec les moyens de roulement 64 placés sur le plancher 15 de la cuve.

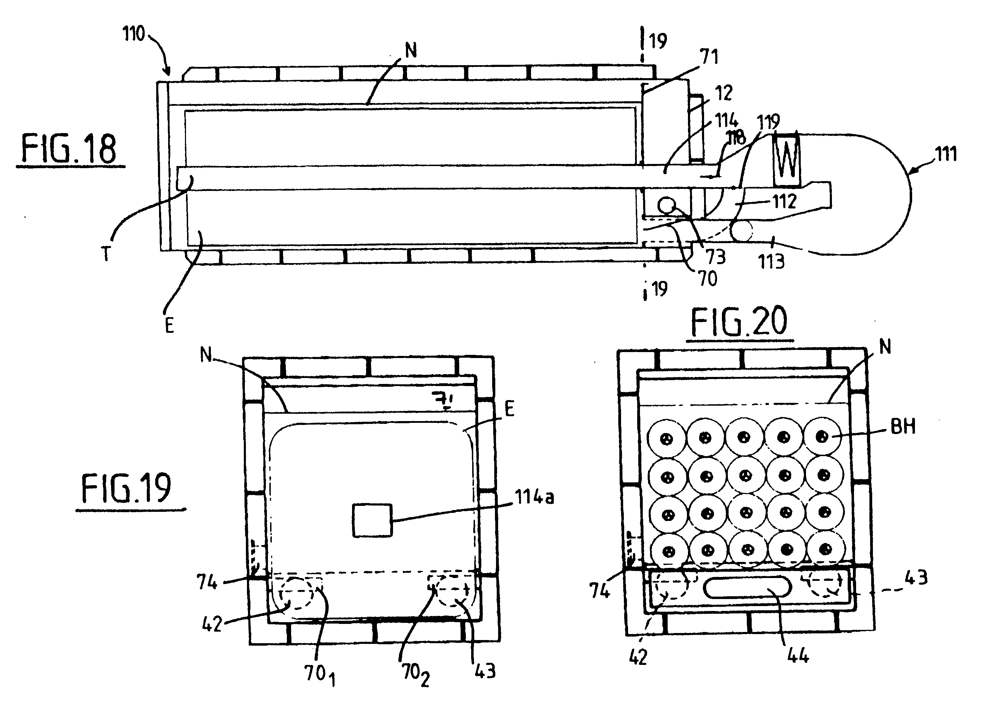

Dans la réalisation montrée sur les figures 16 et 20 la structure de la cuve 10 est très proche, sinon identique à celle de la réalisation selon les figures 5 et 6. Dans l'installation selon cette figure, toutefois, les porte-matières PM$_1$ et PM$_2$ sont prévus pour être munis de bobines BH disposées selon des rangées horizontales et non plus suivant des piles verticales comme dans les réalisations précédentes. Chaque porte-matière comprend alors un caisson 50, analogue à celui des réalisations précédentes, avec des moyens d'étanchéité 90 à la jonction de deux caissons adjacents et, pour chacun des caissons, des organes montrés schématiquement en 91 pour la distribution et/ou la collecte du bain traversant les bobines BH à partir des caissons 50 d'une part, et, d'autre part, le support des broches sur lesquelles sont enfilées lesdites bobines.

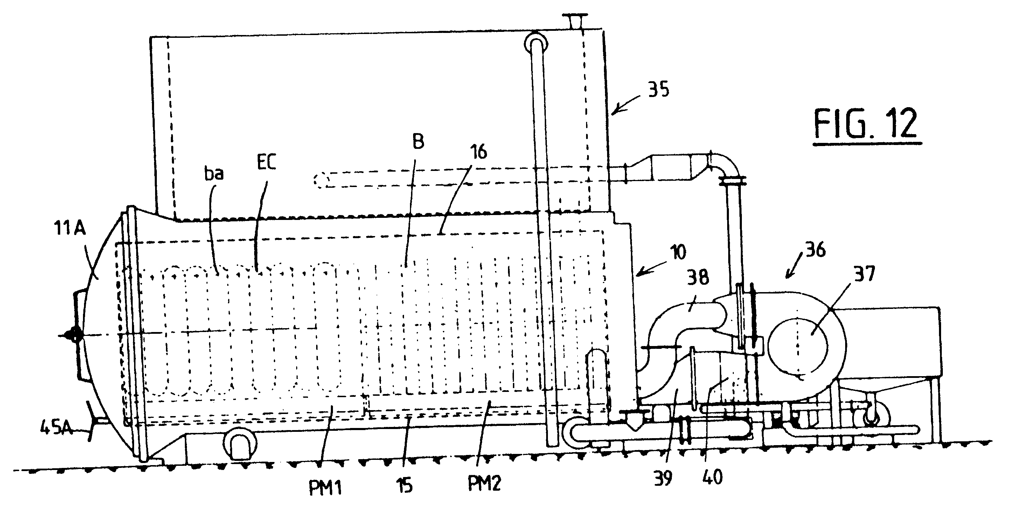

Dans la réalisation préférée illustrée sur les Figures 10 à 12A la cuve 10, de forme parallélipipèdique, et limitée par les parois verticales 13, 14 qui se raccordent au plancher 15 et à la voute 16, porte un récipient 35 de préparation de bain, lequel est relié par des tuyauteries, des vannes et des moteurs montrés schématiquement en 35A (figure 10B et figure 12A) à la cuve 10, d'une part et à l'appareillage 36 de mise en mouvement du fluide de traitement. Comme dans les réalisations décrites ci-dessus, ledit appareillage comprend la pompe ou turbine 37 entraînée un moteur 37A avec une tubulure 38 d'aspiration ou de refoulement (sous forme d'une culotte à deux branches 41$_1$ et 41$_2$) et une tubulure 39 de refoulement ou d'aspiration, respectivement, avec sur cette dernière l'échangeur de chaleur 40.

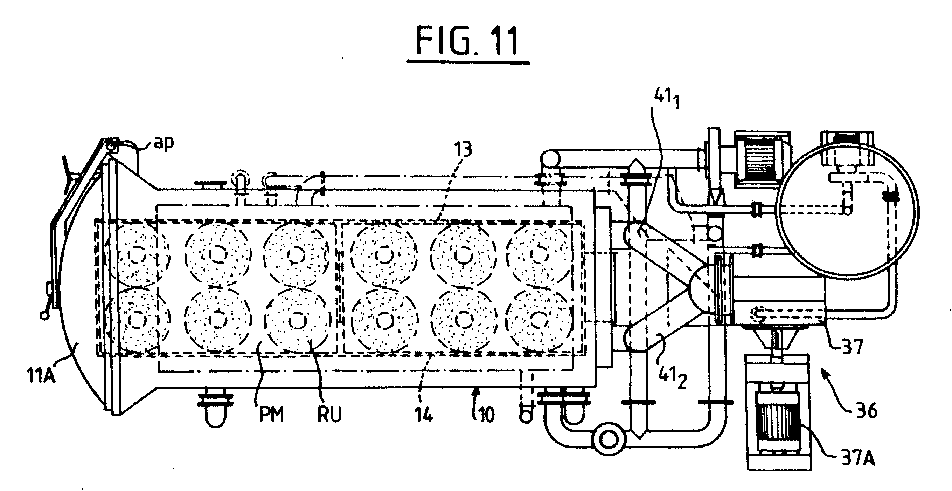

Sur les figures 10 à 10B l'installation est illustrée comme mise en oeuvre pour le traitement de bourre ou de câble BO, disposé sur trois porte-matières PM adjacents présentant chacun un contour apparent carré ou rectangulaire ; dans le cas de bourre, le porte-matières est fermé en partie haute par une plaque perforée ; sur la figure 11, l'installation est illustrée comme appliquée au traitement de rubans de peignée RU disposés sur deux porte-matières PM adjacents, tandis que sur la figure 12, l'installation est illustrée comme mise en oeuvre pour un traitement mixte et simultané de bobines de fil B disposées sur un porte-matière PM$_2$ et d'écheveaux EC disposés sur un porte-matière PM$_1$ lequel comprend sur ses parois latérales longitudinales des moyens de support des "batons" ba portant lesdits écheveaux. Sur la figure 12A, l'installation est illustré pour le traitement

d'une pluralité d'ensouples E (quatre dans l'exemple illustré) disposées parallèlement les unes aux autres aux angles d'un porte-matière PM muni de tubes porte-ensouple T.

Dans la réalisation selon la figure 17 la cuve 100 qui peut être, ou non, destinée à fonctionner en tant qu'autoclave est munie à chacune de ses extrémités longitudinales d'une porte 101 et 102, respectivement, réalisée en tant que porte pivotante à verrouillage rapide, les porte-matières PM$_1$ et PM$_2$ étant alors munis sur la périphérie de leurs caissons d'ouvertures de moyens de liaison de deux caissons adjacents entre eux d'une part et, d'autre part, d'ouvertures comme celle montrée schématiquement en 103, pour le porte-matière PM$_2$, pour la liaison à l'appareillage 37 de mise en mouvement du fluide de traitement. Dans cette réalisation, également, c'est un dispositif 104 à manivelle 105 qui assure l'immobilisation des porte-matières dans la cuve, d'une part, et l'étanchéité des trajets de circulation de fluide, d'autre part.

Dans la réalisation montrée schématiquement sur les figures 18 et 19, l'installation comprend également une cuve 110 destinée à fonctionner ou non en autoclave et qui, de structure très proche de celle montrée sur la figure 5, s'en distingue toutefois par le fait que l'appareillage 111 de mise en mouvement du fluide, analogue à celui référencé 37 précédemment, comporte non seulement des tubulures 112 et 113 analogues aux tubulures 38 et 39, respectivement, mais également une troisième tubulure 114 laquelle traverse la paroi frontale 12 et la cloison 71 pour déboucher dans la cuve 110 par un passage 114a, figure 19, en regard duquel peut être amené le tube porte-ensouple T d'une ensouple E à section droite quadrangulaire, avantageusement carré ou rectangulaire, comme bien montré sur la figure 19.

Dans une telle installation, - pour le reste très proche de celle illustrée sur la figure 5 et où les parties correspondantes portent les mêmes références-, on prévoit encore des vannes, comme montré schématiquement par les papillons 118 et 119, figure 18, interposées sur les tubulures 112, 113 et 114 pour permettre soit le traitement de bobines soit le traitement d'ensouples E. Avec une telle installation mixte, dont le mode d'exploitation pour les bobines B est analogue à celui décrit ci-dessus, on peut également traiter des pièces de tissu à rapport de bain constant, même faible, et cela que le niveau libre du bain soit comme montré en N sur les figures 18 et 19, c'est-à-dire corresponde à un traitement en matières totalement immergées ou bien au contraire, corresponde à un traitement en matières non immergées ou partiellement immergées.

Les figures 21 et 22 montrent, à plus grande échelle, les moyens de brides et d'étanchéité associés aux tubulures d'introduction et/ou d'extraction de fluide dans la cuve 10, ainsi que les raidisseurs et renforts soudés sur ladite cuve. On reconnaît également, sur ces figures, et comme montré en 120, une tubulure de vidange totale de la cuve en cas de nécessité.

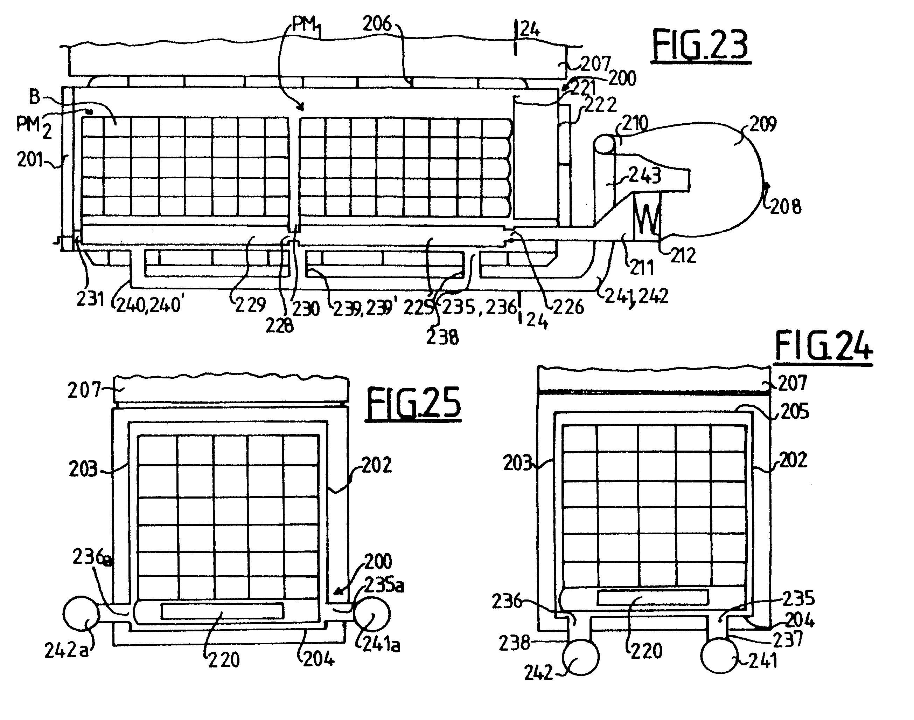

On se réfère maintenant aux figures 23 et 24 qui illustrent la structure générale d'une installation perfectionnée selon l'invention de traitement au mouillé de matières textiles disposées sur des porte-matières mais pour un autre type de réalisation. Celle-ci comprend une cuve 200, à axe longitudinal sensiblement horizontal, munie à une de ses extrémités d'une porte 201 avantageusement du type à pivotement ou à guillotine pour l'introduction et/ou l'extraction dans et hors de la cuve des porte-matières PM$_1$ PM$_2$, etc... par exemple des porte-matières chargés de bobines B de fils à teindre. Comme bien montré sur la figure 24, la cuve 200 est avantageusement parallélépipédique, limitée par des parois verticales latérales 202 et 203, se raccordant à un plancher 204 et à une voute plane 205. Des raidisseurs transversaux 206 et, le cas échéant, des renforts longitudinaux contribuent à la résistance mécanique de la cuve. En partie haute de cette dernière, c'est-à-dire au-dessus de la voute 205, lesdits raidisseurs et renforts servent, complémentairement, à supporter un récipient 207 de préparation de bain, lequel est relié par des tuyauteries, des vannes et des moteurs, non représentés, à la cuve 200, d'une part, et à un appareillage 208, d'autre part, prévu pour la mise en mouvement du fluide de traitement dans la cuve. Ledit appareillage comprend une pompe ou turbine 209 à tubulure d'aspiration ou de refoulement ou d'aspiration, respectivement, avec sur l'une et/ou l'autre desdites tubulures, ici la tubulure 211, un échangeur de chaleur 212.

La tubulure 211 aboutit à un passage 220 ménagé dans une paroi 221 placée au voisinage de la paroi postérieure 222 de la cuve 200, à l'intérieur de celle-ci, le passage 220 étant sous forme d'une boutonnière dont la plus grande dimension est dirigée parallèlement au plancher 204, figure 24, et étant prévu pour communiquer, avec interposition de moyens d'étanchéité non représentés, avec une ouverture 226 de l'embase 225 en caisson du porte-matières PM$_1$ le plus proche de la paroi 222.

Dans la condition de fonctionnement de l'installation, le caisson 225 du porte-matières PM$_1$ est également en communication par une autre ouverture 227 qu'il comporte avec une ouverture 228 du caisson 229 du porte-matières PM$_2$ qui lui est adjacent, des moyens d'étanchéité montrés schématiquement en 230 étant interposés entre les deux caissons.

Lorsque les porte-matières PM$_1$ et PM$_2$ sont introduits dans l'enceinte 200, l'actionnement d'un dispositif à manivelle 231 prévu sur la porte 201 assure d'abord l'immobilisation des porte-matières dans la cuve puis établit un premier trajet $t_1$ continu de fluide de traitement à partir de la tubulure 211, via le passage 220, l'ouverture 226, le caisson 225, l'ouverture 227, l'ouverture 228 et le caisson 229. Ce trajet $t_1$, qui peut être celui d'amenée du fluide de traitement dans la cuve ou, inversement, celui de collecte du fluide hors de la cuve est complété, pour constituer le circuit fermé de circulation de fluide, par un trajet $t_2$ entre les matières textiles en traitement et la cuve et qui est alors, dans le premier cas, un circuit de collecte du fluide hors de la cuve et, dans le second cas, un trajet d'introduction dans la cuve.

Quel que soit le mode de circulation du fluide ledit second trajet $t_2$ comprend des couples de passages comme 235 et 236 ménagés dans le plancher 204 de la cuve, de tels couples étant placés avantageusement chacun dans au moins un plan transversal de la cuve et régulièrement répartis le long de ladite cuve dans la réalisation décrite et représentée, c'est-à-dire au voisinage de la paroi postérieure 222, dans la zone médiane et à proximité de la porte 201. Comme également montré sur les figures 23 et 24, à ces couples de passages sont raccordés des conduits comme 237 et 238 pour le premier couple, comme 239, 239' pour le second et 240, 240' pour le troisième, lesdits conduits étant réunis suivant des tubulures 241 et 242, respectivement, disposées sous la cuve et qui aboutissent, par une culotte 243, à la tubulure 210 pour former un circuit continu de fluide par la réunion des trajets $t_1$ et $t_2$.

Dans la réalisation montrée schématiquement sur la figure 25, les conduits 241a et 242a sont placés latéralement, -et non plus sous la cuve 200-, les passages 235a et 236a, analogues aux passages 235 et 236 de la réalisation précédente étant alors prévus sur les parois verticales latérales 202 et 203, respectivement.

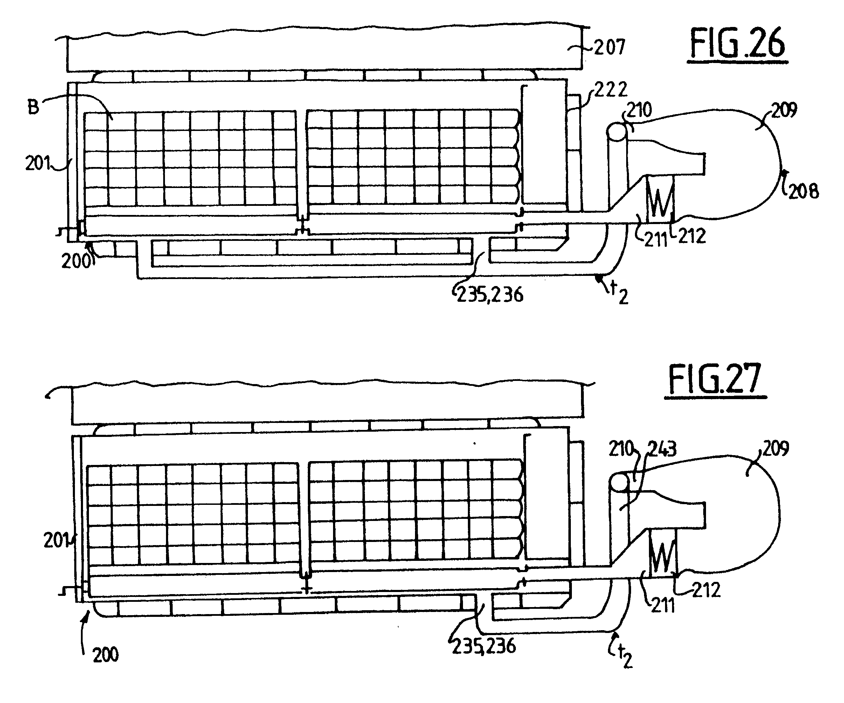

Dans la réalisation selon la figure 26, de structure très proche de celle illustrée sur la figure 23 et où les mêmes parties portent les mêmes références, les couples de passages, comme 235-236 ou 235a-236a sont au nombre de deux seulement, à proximité de la paroi postérieure 222 et de la porte 201, tandis que c'est un seul couple qui est prévu dans la réalisation selon la figure 27, dans laquelle le trajet $t_2$ comporte alors les deux passages 235 et 236 dans le plancher ou les parois verticales latérales de la cuve reliés par la culotte 243 à la tubulure 210.

Chacune des réalisations représentées et décrites ci-dessus peut fonctionner, ou non, en tant qu'autoclave, la reprise ou l'introduction du bain de traitement en une pluralité de points de la cuve favorisant dans tous les cas la circulation équilibrée du bain, laquelle se traduit à son tour par de meilleurs résultats du traitement au mouillé.

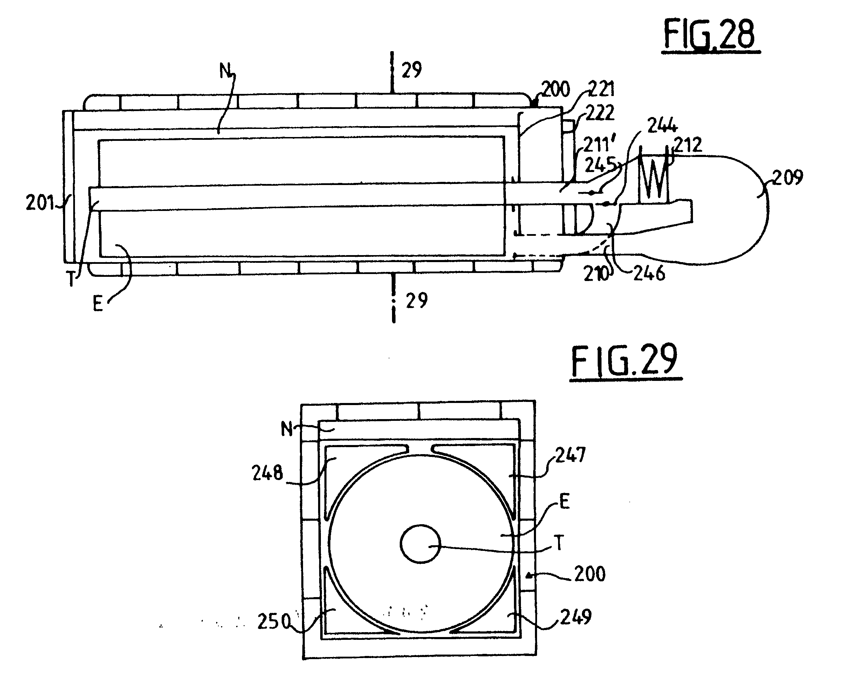

Alors que ce dernier a été décrit ci-dessus en relation avec des porte-matières chargés de bobines de fils ou analogues à empilage vertical, l'invention n'est nullement limitée à cette application. Ainsi, les figures 28 et 29 montrent-elles l'installation selon l'invention pour le traitement d'une ensouple de tissu E enroulée sur un tube perforé T. Lorsque l'ensouple E est à section droite sensiblement circulaire, des corps morts 247, 248, 249 et 250 à section droite en triangle curviligne sont alors avantageusement disposés dans les angles de la cuve pour encore réduire le volume de bain mis en oeuvre, bain dont le niveau libre est montré en N. Dans cette réalisation une tubulure 211' est propre à être reliée au tube porte-ensouple T ; elle comporte en outre des volets 244 et 245, le second de fermeture de la tubulure 211' et le premier placé à la jonction d'une dérivation 246 qui aboutit à son autre extrémité au passage 220. La tubulure 210, disposée entre la pompe, turbine ou analogue 209 et la cuve 200 débouche dans cette dernière à travers deux passages de la paroi 221.

Dans une variante de réalisation, les corps morts 247-250 sont solidaires du chariot ou analogue qui porte le tube porte-ensouple T

Dans une autre variante, les corps morts sont solidaires d'un chariot auxiliaire distinct de celui présentant le tube porte-ensouple.

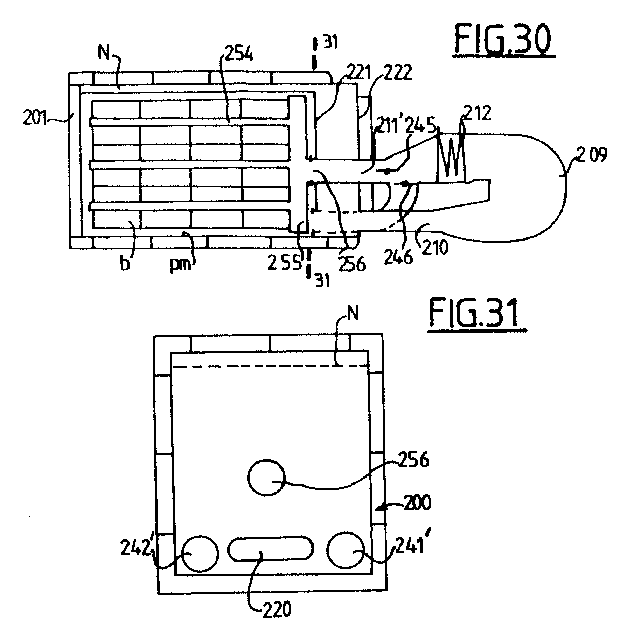

Dans la réalisation illustrée sur les figures 30 et 31 l'appareillage de mise en circulation du fluide est du type de celui décrit immédiatement ci-dessus tandis que la cuve 200 est de plus courte longueur, pour correspondre à celle d'un seul porte-matières pm dont le caisson 255 est disposé verticalement pour porter sur des cannes creuses comme 254 solidaires du caisson 255 des bobines b alignées horizontalement sur lesdites cannes. Dans cette réalisation, la tubulure 211' de l'appareillage de mise en mouvement du fluide de traitement est reliée à un orifice 256 du caisson 255, la tubulure 210 aboutissant dans ladite cuve par des passages 241' et 242', tandis que la dérivation 246 y débouche par le passage 220.

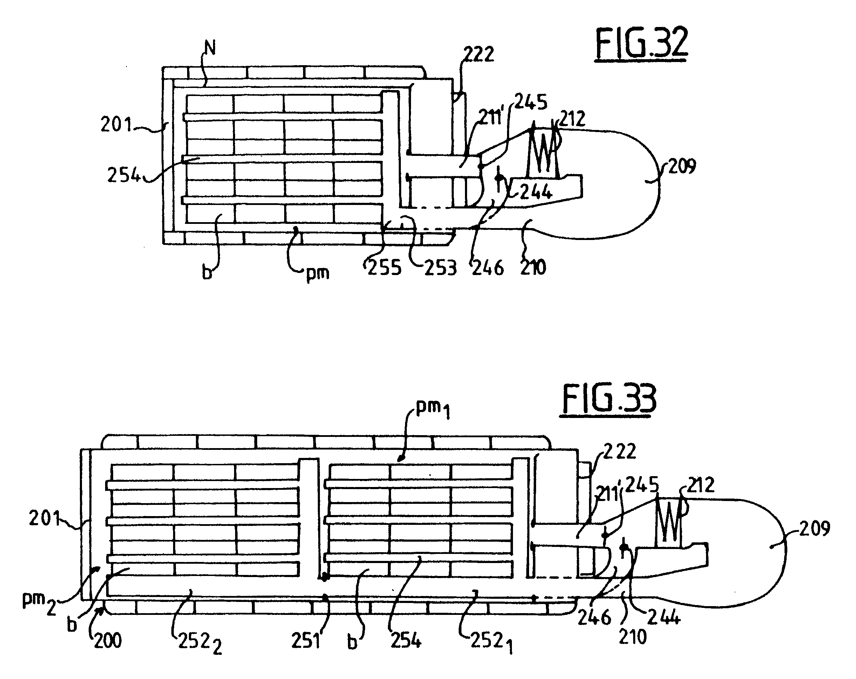

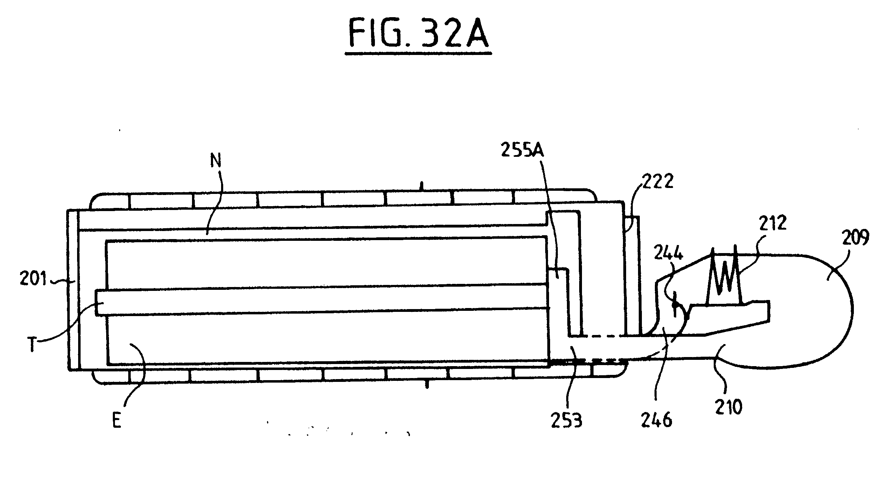

Dans la réalisation selon la figure 32 le caisson 255 du porte-matières pm qui porte des bobines disposées horizontalement b sur ses cannes 254 n'est pas alimenté en son centre, comme dans la réalisation immédiatement ci-dessus, mais à partir de la dérivation 246 qui aboutit à une ouverture 253 du caisson, le second trajet de fluide comportant alors la tubulure 210. Dans cette réalisation, et contrairement à celle décrite en référence aux figures 30 et 31, le volet 245 est fermé et le volet 244 ouvert.

Dans la variante montrée sur la figure 32A, le tube porte-ensouple T est relié à un caisson vertical 255A de distribution du fluide de traitement, de plus courte hauteur que le caisson 255 et auquel aboutit également la tubulure 210.

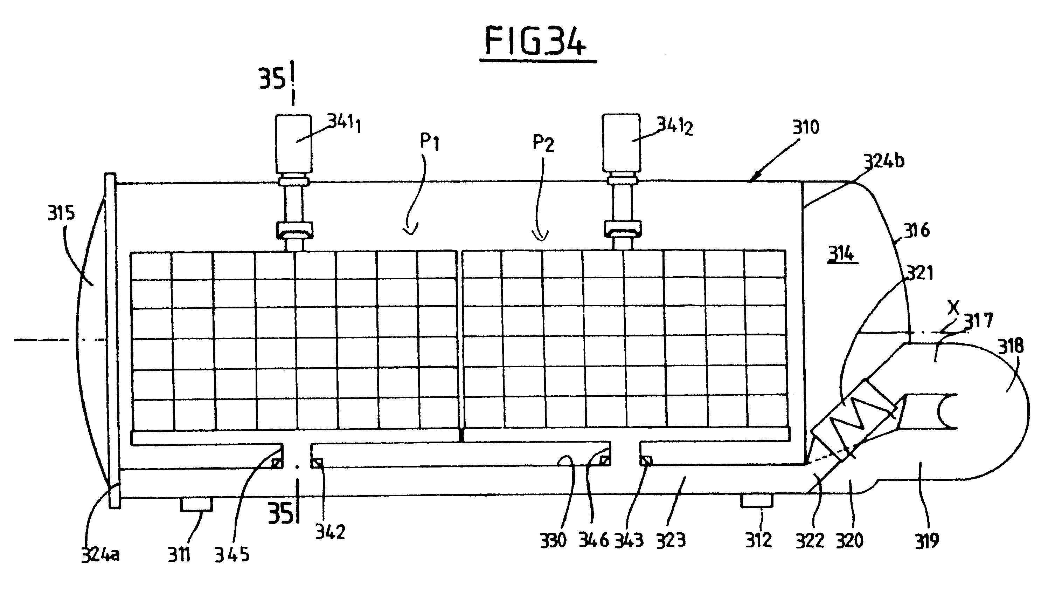

Dans la réalisation selon la figure 33 deux porte-matières $pm_1$ et $pm_2$ de structure analogue à celui montré sur la figure 32 sont logés dans la cuve 200 où ils portent l'un et l'autre des bobines b à disposition horizontale placées sur les cannes 254. Dans cette réalisation, les deux porte-matières communiquent par des ouvertures de leurs embases en caisson $252_1$ et $252_2$, respectivement, avec l'interposition de moyens d'étanchéité montrés schématiquement en 251.

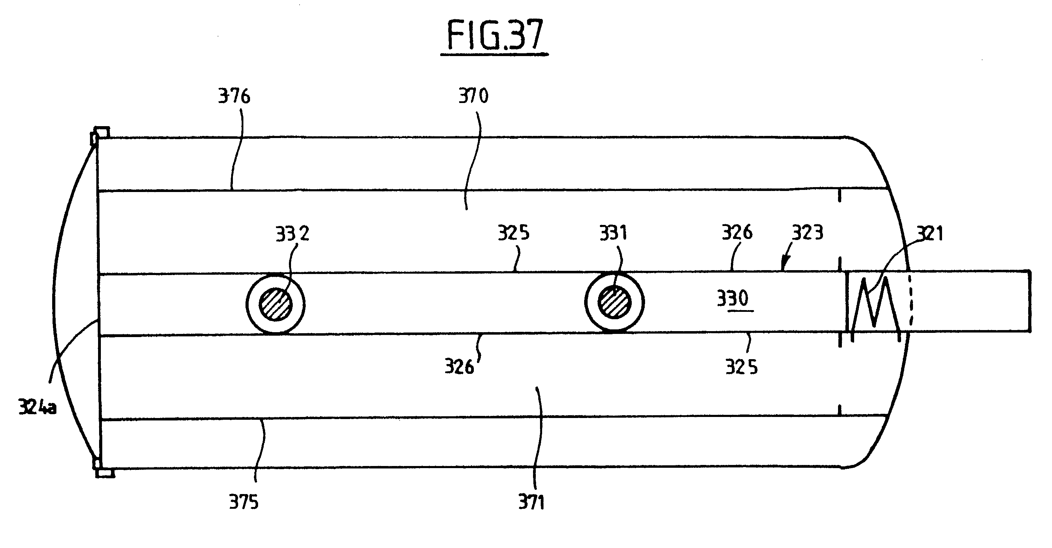

On se réfère maintenant aux figures 34 à 37 qui illustrent la structure générale d'un autoclave perfectionné propre à équiper une installation selon l'invention. L'autoclave comprend une cuve cylindrique 310 d'axe longitudinal X sensiblement horizontal et qui repose par des semelles 311 et 312 directement sur le sol S d'une usine de traitement au mouillé de matières textiles, comme une teinturerie ou analogue, sans que cette indication ait, bien entendu, quelque caractère limitatif que ce soit. L'absence de fosse ou de puits pour l'autoclave, comme usuel dans la plupart des installations connues, permet non seulement des économies de terrassement mais, en outre, une inspection et des essais complets de fonctionnement sur le lieu de fabrication de l'autoclave, lequel peut ensuite être transporté et installé à l'usine de traitement où sa mise en oeuvre est alors extrêmement rapide. La cuve 310 est munie à une de ses extrémités longitudinales d'une porte 315, avantageusement du type à verrouillage rapide et, à son autre extrémité, d'un fond bombé 316. Celui-ci est traversé par une tubulure 317 de refoulement ou d'aspiration d'une pompe ou turbine 318 dont l'autre tubulure 319, -qui est alors celle d'aspiration ou de refoulement-, se poursuit à la partie inférieure de la cuve 310 par un raccord 320. Sur la tubulure 317 est prévu un échangeur de chaleur 321 dont la sortie est 322 reliée, selon l'invention, à un conduit 323 qui règne sur le fond de la cuve 310, à l'intérieur de celle-ci et sensiblement dans le plan médian vertical sur la totalité ou quasi totalité de la longueur de l'autoclave depuis une paroi frontale d'extrémité antérieure 324a, figure 37, jusqu'à sensiblement au droit d'une paroi 324b, elle aussi transversale et ménagée au voisinage du fond bombé 316 avec lequel elle limite un espace 314, dans lequel peut prendre place une partie des tubulures décrites ci-dessus, en particulier celle dans laquelle l'échangeur de chaleur 321 est monté à l'aide d'un caisson étanche.

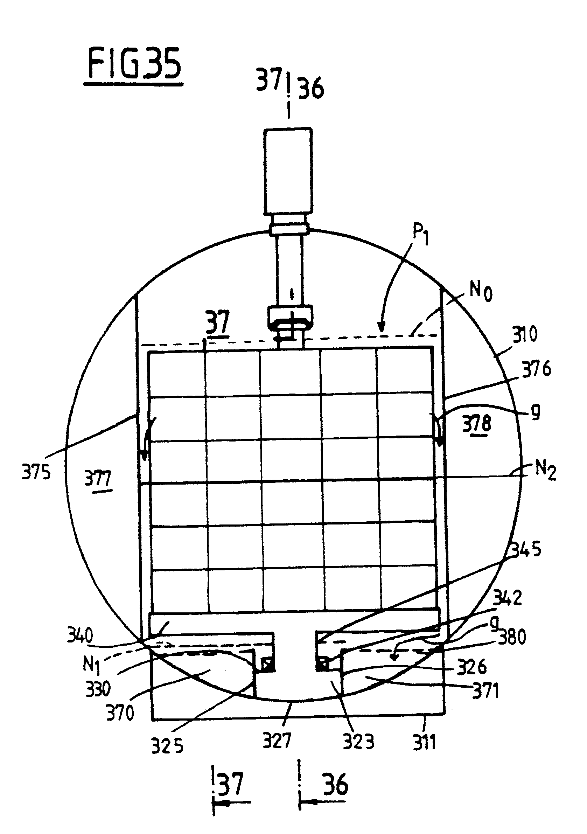

Comme bien montré sur les figures 35 et 37, le conduit 323 est limité par des parois latérales longitudinales parallèles 325 et 326, le fond 327 de la cuve 310 au voisinage de sa génératrice inférieure et une paroi 330, sensiblement horizontale percée, dans la réalisation décrite et représentée, de deux orifices 331 et 332 prévus pour la liaison à des caissons de répartition de bain $340_1$, $340_2$, respectivement, de deux porte-matières $P_1$, $P_2$. Ce nombre de porte-matières est celui qui correspond à l'exemple de réalisation d'un autoclave d'une longueur d'environ 4m et d'un diamètre d'environ 1,85m pour le traitement simultané de 480 bobines de fils représentant environ 720kg de matière.

Dans d'autres réalisations, non représentées, l'autoclave peut être prévu pour recevoir davantage de porte-matières, suivant un nombre qui correspond, en fait, au nombre des orifices 331 et 332 ménagés dans le conduit 323 et auquel correspond également celui de dispositifs de pressage $341_1$, $341_2$, associés chacun à un porte-matières et prévus en partie haute de la cuve, sensiblement à l'aplomb des orifices 331, 332. Ces dispositifs de pressage, destinés à l'immobilisation en position des porte-matières $P_1$ et $P_2$ dans l'autoclave, sont également prévus pour, lorsqu'ils sont actionnés, assurer l'étanchéité des caissons répartiteurs de bain 340 des porte-matières $P_1$ et $P_2$ par l'intermédiaire d'embouts 345 et 346 d'entrée et/ou de sortie de fluide de traitement dans les caissons 340, respectivement, avec interposition de moyens d'étanchéité comme 342 et 343.

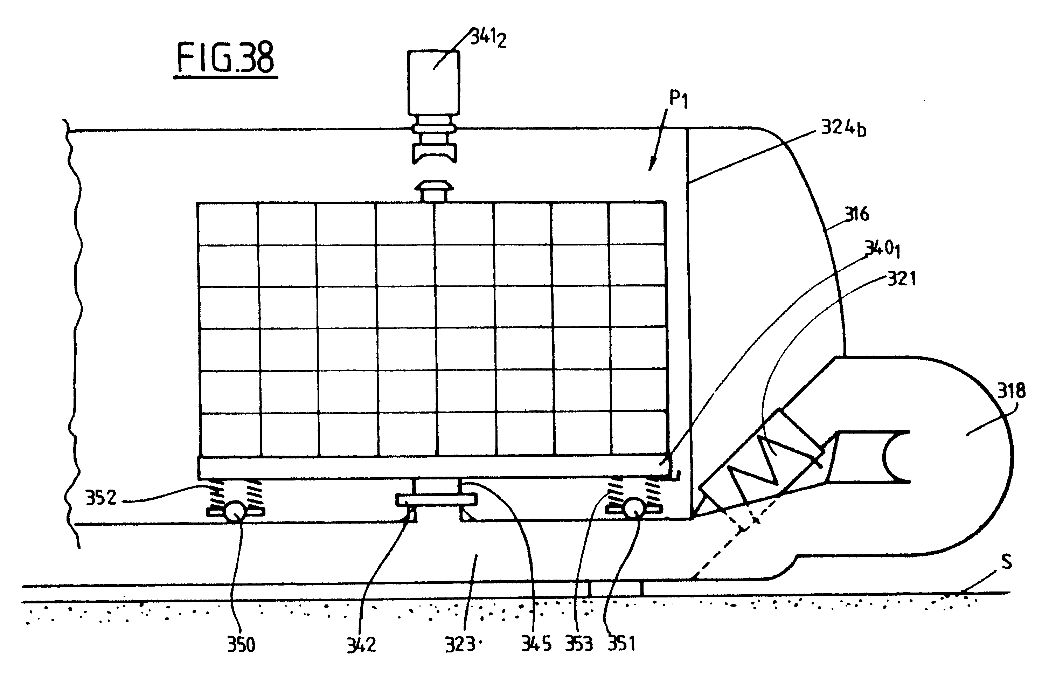

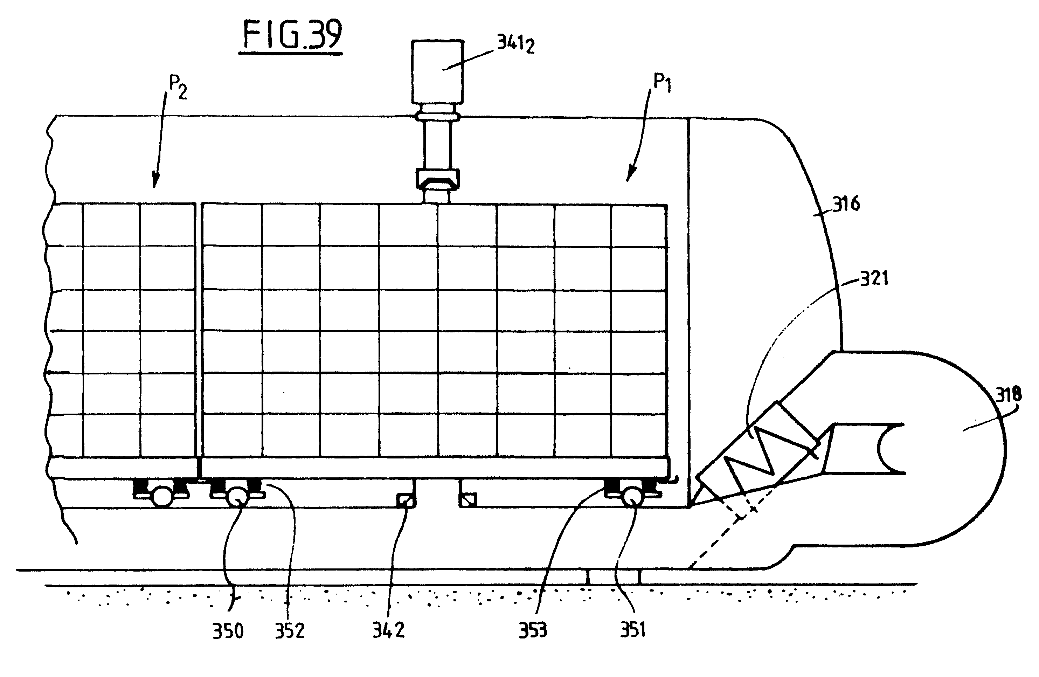

Dans une première réalisation, figure 38, chaque porte-matières P est muni de roues 350 et 351 de déplacement sur le plancher de l'autoclave avec des dispositifs de ressorts 352 et 353, respectivement, qui lorsqu'un dispositif de pressage 341 est actionné, figure 39, rendent opératoires les moyens d'étanchéité 342 ou 343.

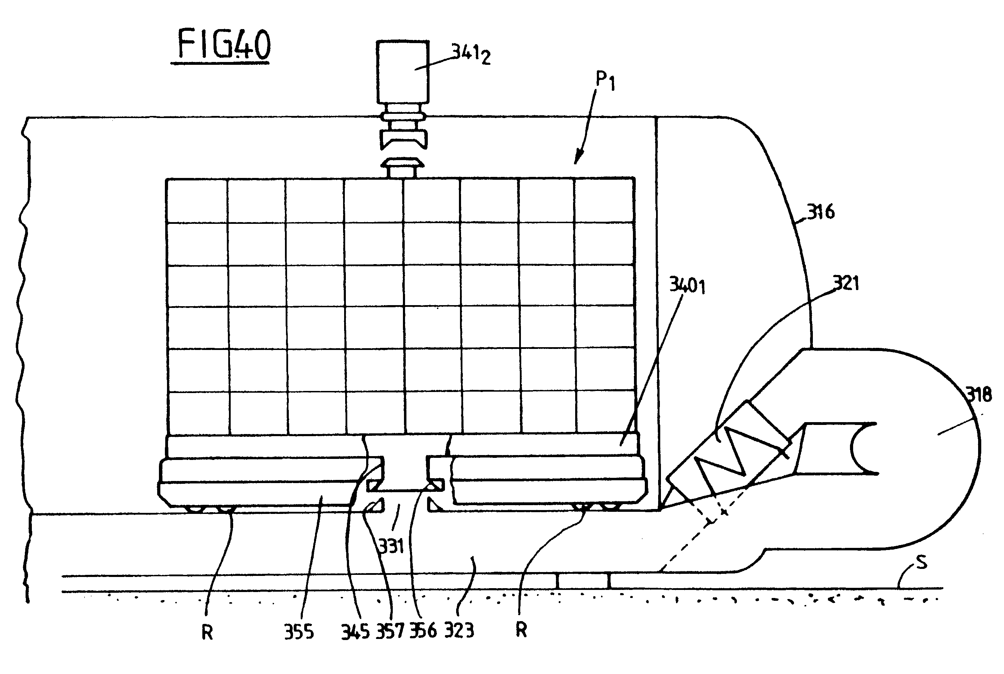

Dans une seconde réalisation, figure 40, les porte-matières P sont introduits dans l'autoclave à l'aide d'un chariot filoguidé, non représenté, et d'une navette 355, télécommandée, sur laquelle repose le porte-matières et qui se déplace sur le plancher de l'autoclave à l'aide de roues R et 357. Le caisson de répartition de bain $340_1$ du porte-matières $P_1$ comprend ici un embout 345 de liaison au conduit 323 qui est à emmanchement conique, comme montré en 356, pour coopérer avec une couronne à portée conique conjuguée 357 qui garnit l'orifice 331 du conduit 323.

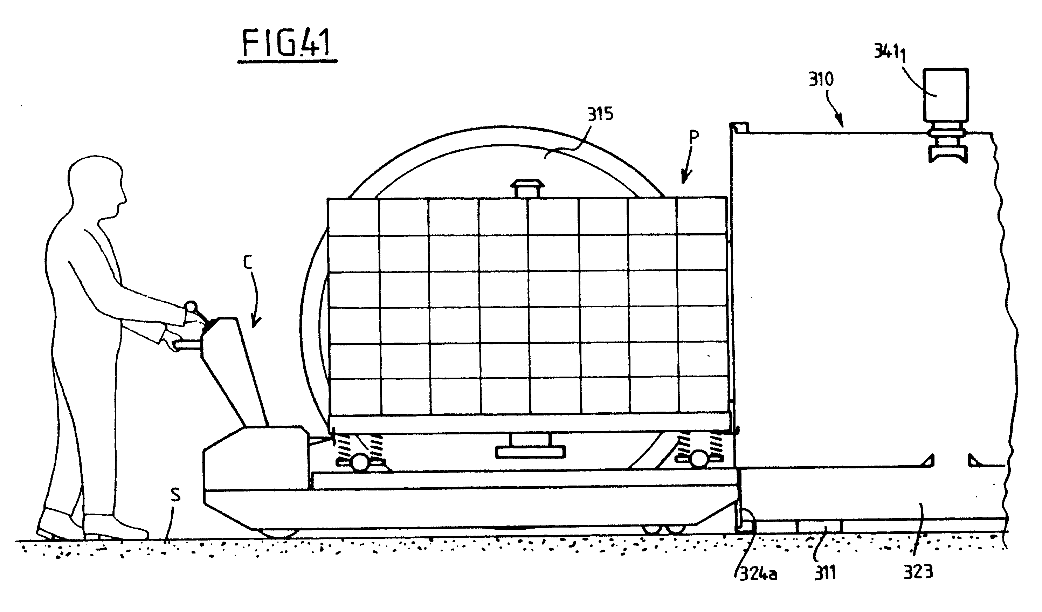

Dans la réalisation montrée sur la figure 41, le porte-matières P est introduit dans l'enceinte de l'autoclave à l'aide d'un chariot motorisé C après ouverture de la porte 315.

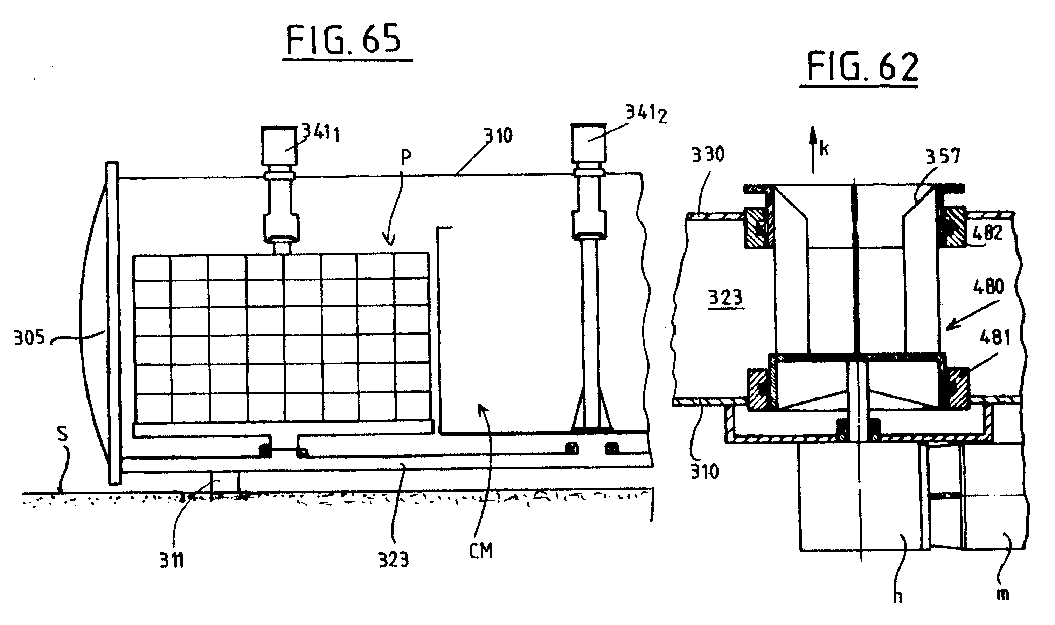

Dans une réalisation préférée de l'autoclave selon l'invention, on prévoit que la liaison du conduit 323 aux porte-matières soit réalisée à l'aide de raccords mobiles 480, figure 62, montés, à étanchéité dans ledit conduit par des moyens 481 et 482 associés à la cuve 310 et à la paroi 330 respectivement. Lesdits raccords, propres à être mis en mouvement suivant la direction de la flèche k par un moteur m et un accouplement n logés sous la cuve 310, sont ainsi propres à venir coopérer par leur portée conique 357 avec celle conjuguée de l'embout du porte-matières P.

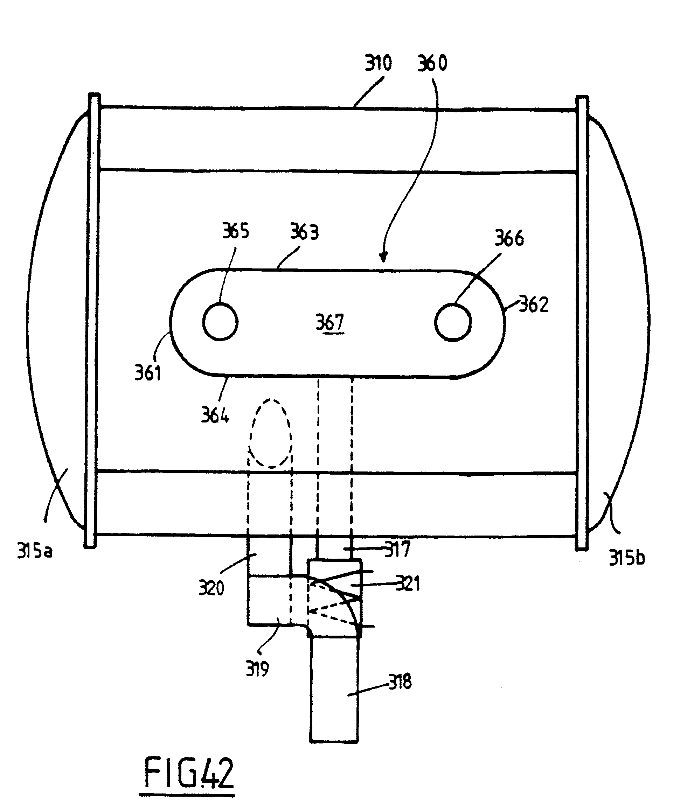

Dans l'autoclave d'une installation perfectionnée selon l'invention montré sur la figure 42, la cuve cylindrique horizontale 310 est munie d'une porte 315a et d'une porte 315b à chacune de ses extrémités longitudinales, l'une et l'autre avantageusement à verrouillage rapide. Le conduit médian 360, analogue au conduit 323 de la réalisation précédente, est alors fermé à ses extrémités longitudinales par des parois 361 et 362 se raccordant à ses parois longitudinales 363 et 364 avec des orifices 365 et 366 analogues aux orifices 331 et 332 ménagés dans sa paroi 367 analogue à la paroi 330. Dans cette réalisation, toutefois, la tubulure 317, -sur laquelle est prévu l'échangeur de chaleur 321 et qui aboutit à la turbine 318 d'où partent la tubulure 319 et le raccord 320-, débouche dans la paroi latérale 364 et non plus dans l'axe du conduit et de l'autoclave.

Aussi bien dans la forme de réalisation illustrée sur la figure 42, que dans celle montrée sur les figures 34 à 37, le fluide de traitement, par exemple un bain liquide de teinture, circule dans un sens dans le conduit 323 ou le conduit 360 et en sens inverse dans un ou des canaux 370 et 371 pour former un circuit à boucle fermée. Comme bien montré sur les figures 35, 36 et 37, lesdits canaux disposés au voisinage du conduit 323 sont limités par les parois longitudinales 325, 326 et la paroi horizontale 330 dudit conduit, par la partie inférieure de la cuve 310 de part et d'autre desdites parois longitudinales 325, 326 et par les surfaces en regard de celles qui viennent d'être définies des porte-matières et/ou de la cuve.

Dans une réalisation particulièrement préférée et avantageuse, lesdites surfaces comprennent deux cloisons longitudinales 375 et 376 régnant d'une extrémité à l'autre de l'autoclave, parallèlement au plan vertical moyen de celui-ci et à une distance l'une de l'autre légèrement supérieure à la largeur des porte-matières ou analogues que l'autoclave est destiné à recevoir, définissant ainsi deux volumes morts 377 et 378, figure 35, qui permettent de considérablement réduire le rapport de bain mis en oeuvre.

C'est un même résultat qui est obtenu lorsque les volumes 377 et 378 sont constitués par des corps morts en matériau alvéolaire, d'un bloc ou à évidements, par exemple en mousse de matière plastique et dont les faces planes en regard sont traitées pour résister aux températures et pressions régnant dans l'autoclave dont ils assurent, simultanément, l'isolation thermique par l'intérieur de celui-ci.

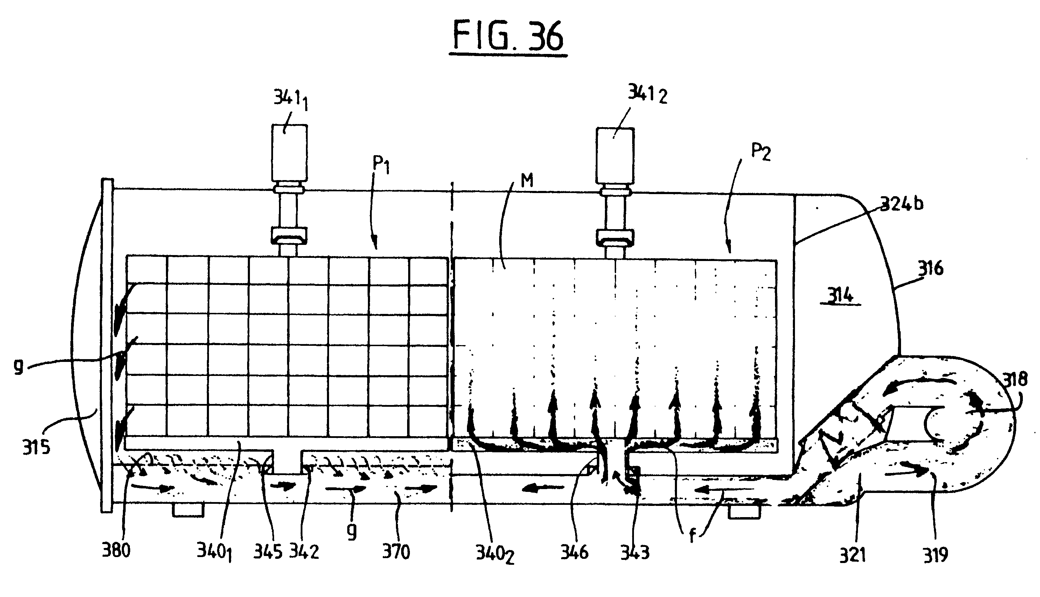

Avec une telle structure d'autoclave, la circulation du fluide de traitement peut avoir lieu comme illustré schématiquement sur la figure 36, c'est-à-dire du conduit 323 dans les embouts 345 et 346, au travers des matières M (flèches f de la partie droite de cette figure) puis entre lesdites matières et les cloisons 375, 376 (ou les faces en regard des corps morts équivalents) ou la porte 315 (flèches g de la figure 35 et de la partie gauche de la figure 36) jusqu'aux canaux latéraux 370 et 371 d'où le fluide de traitement est repris par la turbine 318 au travers de la tubulure 319 et recyclé dans le conduit médian 323, etc... .

La structure de l'autoclave permet également le fonctionnement suivant un mode inverse, c'est-à-dire la distribution du fluide de traitement à partir des canaux latéraux 370 et 371 et la reprise par le conduit médian 323, c'est-à-dire, par exemple dans le cas où les matières M sont des bobines de fils B, une circulation de l'extérieur vers l'intérieur des bobines.

Quel que soit le mode de fonctionnement mis en oeuvre, l'autoclave perfectionné selon l'invention permet un traitement avec l'ensemble des matières M totalement immergées, si le niveau de bain est choisi en $N_0$, figure 35, ou suivant un mode non immergé, si ledit niveau est choisi en $N_1$, ou encore avec les matières partiellement immergées si le niveau est choisi entre $N_0$ et $N_1$, par exemple comme montré en $N_2$ sur la figure 35. Dans tous les modes de fonctionnement, les moyens de distribution et de reprise du fluide de traitement de l'invention permettent d'obtenir, outre un faible ou très faible rapport de bain, une circulation bien équilibrée dudit bain, aussi bien à la distribution qu'à la reprise.

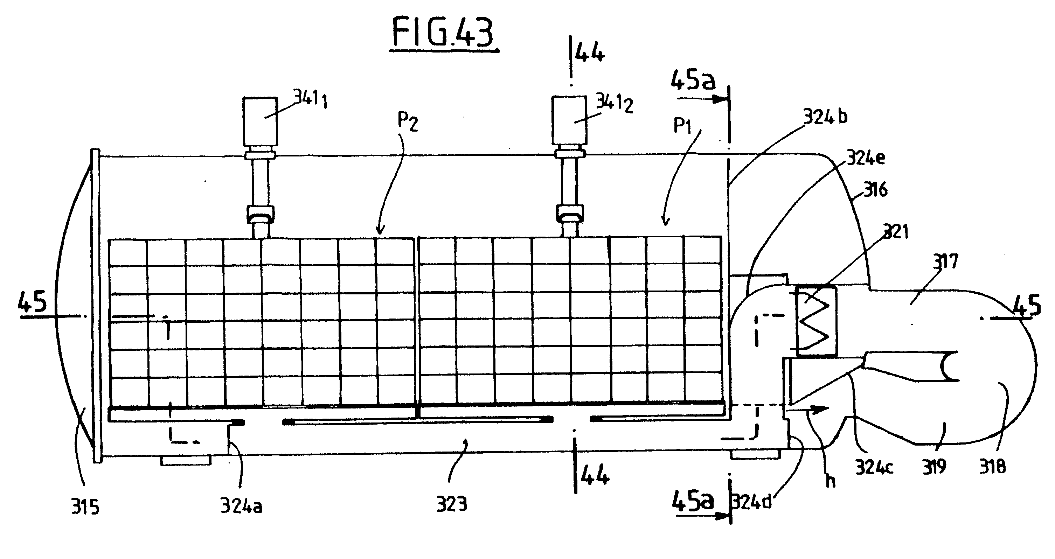

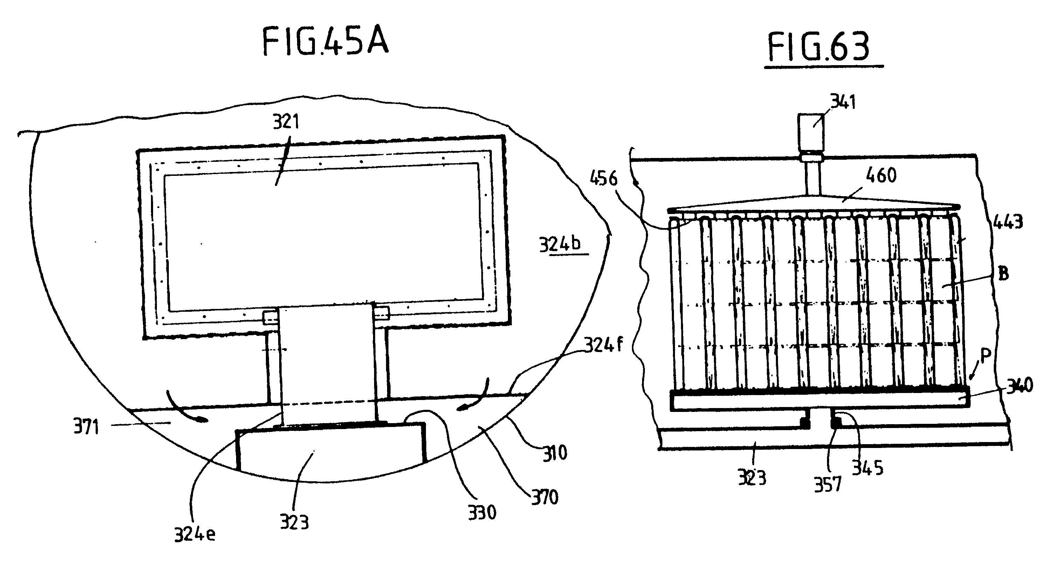

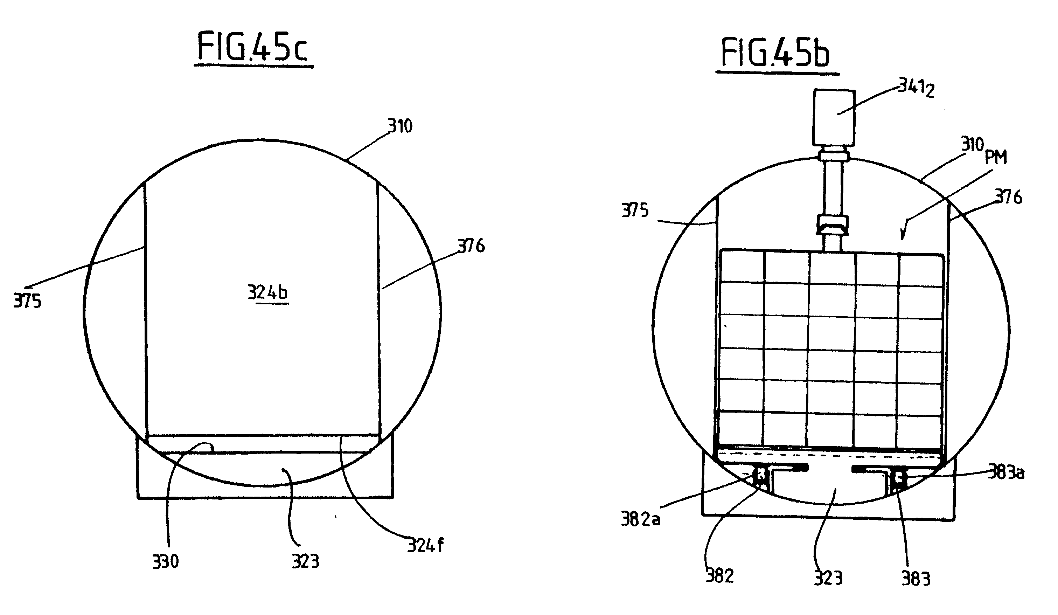

Alors que dans la réalisation qui vient d'être décrite, on prévoit d'associer aux canaux latéraux 370 et 371 des plaques perforées, des grilles ou analogues 380 qui règnent entre les parois longitudinales 325 et 326 du conduit médian et la cuve 310, une autre réalisation prévoit, comme montré sur les figures 43, 45 et 45a, de s'affranchir de la présence de ces plaques ou grilles. Dans une telle réalisation, pour le reste analogue à celle décrite ci-dessus et dont les parties constitutives communes portent les mêmes références, on prévoit au voisinage des parois longitudinales 325 et 326 limitant le conduit médian 323 des rails 382 et 383 de guidage des porte-matières P dans l'autoclave et qui sont ainsi placés dans les canaux latéraux 370 et 371 de circulation du fluide de traitement. Dans une exécution préférée, le conduit 323 est fermé à son extrémité postérieure par une paroi 324d et le fluide de traitement est introduit dans ledit conduit par une goulotte 324e reliée à un caisson étanche de l'échangeur de chaleur 321. Dans cette exécution, la paroi 324b a son bord inférieur 324f qui s'arrête à une certaine distance de la paroi 330 et l'espace limité entre ce bord, le fond de la cuve 310 et les parois dudit conduit 323 matérialise alors le raccord des canaux 370, 371 à la tubulure 319 lorsque ces canaux servent à la reprise du bain de traitement, qui circule comme montré par la flèche h en étant guidé par une tôle déflectrice et de séparation, 324c, placée sous l'échangeur 321.

Dans la réalisation illustrée schématiquement sur la figure 45b, la structure de l'autoclave est analogue à celle de la réalisation précédente, sous réserve que les rails de guidage sont munis de rouleaux ou galets 382a et 383a, respectivement, sur lesquels peuvent se déplacer des porte-matières PM à fond sensiblement plan, la liaison aux embouts comme 345 qu'ils présentent étant alors avantageusement obtenue par les raccords comme décrits ci-dessus en référence à la figure 62.

Dans la réalisation illustrée très schématiquement sur la figure 45c, la structure est semblable à celle de la réalisation précédente, sous réserve que le conduit médian 323 est ici à section droite en forme de segment circulaire, la circulation du fluide de traitement, dans le sens invers de celui existant dans le conduit médian, ayant lieu au-dessus dudit conduit.

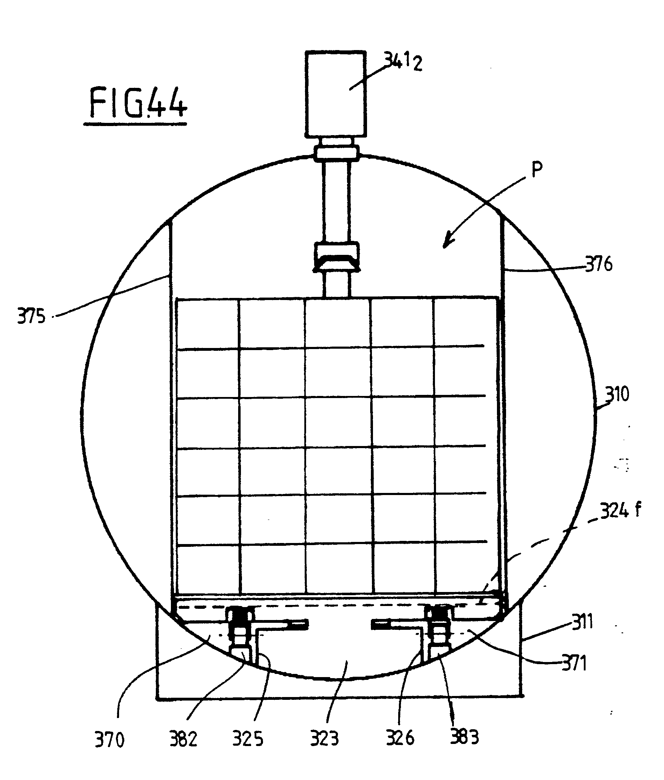

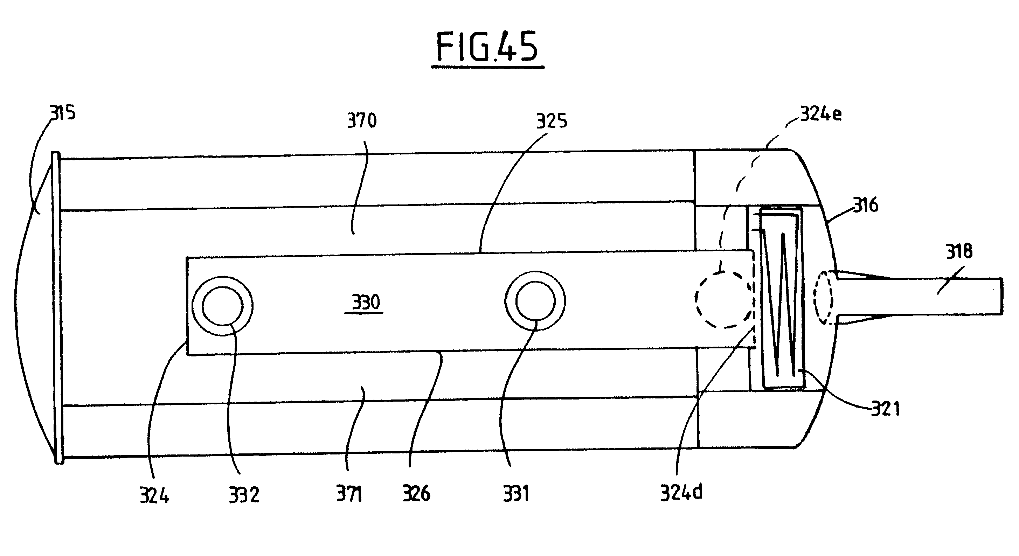

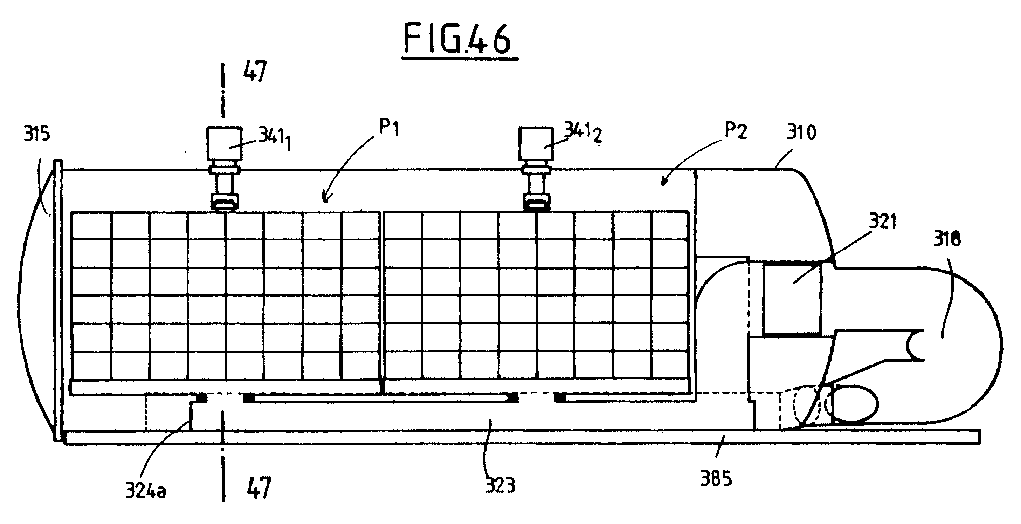

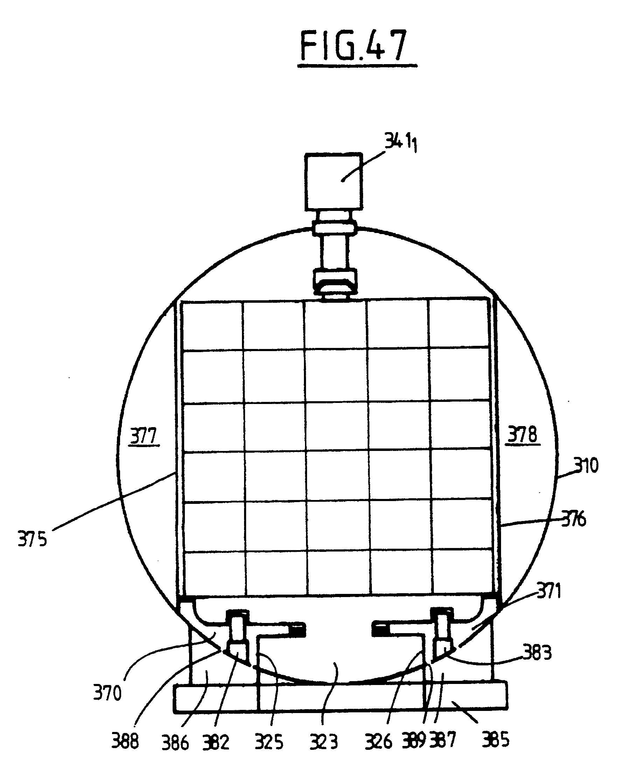

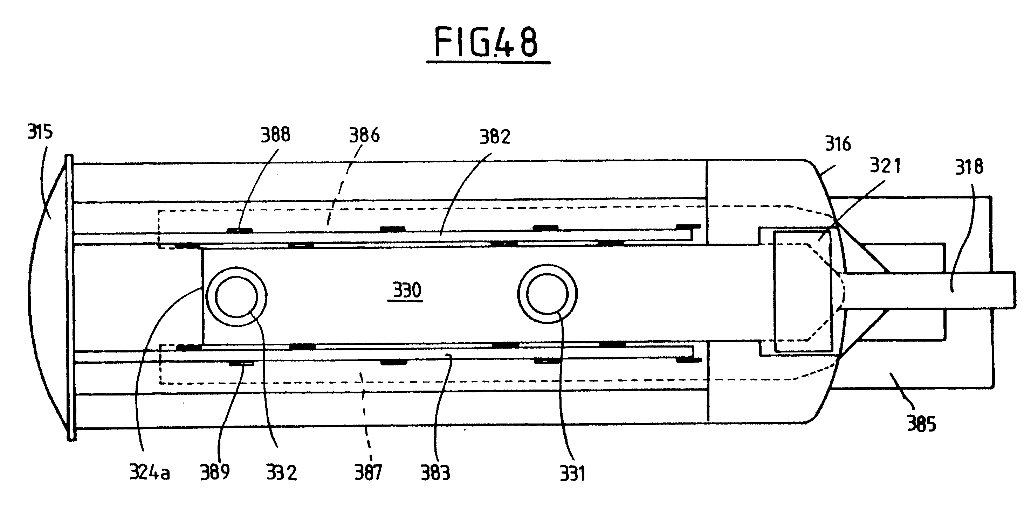

Dans la réalisation montrée sur les figures 46 à 48, c'est une structure analogue à celle décrite en référence aux figures 43 à 45 qui est envisagée. Dans cette réalisation, toutefois, la cuve 310 constitutive de l'enveloppe externe de l'autoclave ne repose pas sur le sol par l'intermédiaire de semelles mais par un châssis 385 qui règne sensiblement d'une extrémité à l'autre de l'appareil. Dans celui-ci, où les mêmes chiffres de référence désignent des parties analogues à celles de la réalisation antérieure, les rails comme 382 et 383 prévus à l'extérieur du conduit médian 323 et au voisinage des parois longitudinales 325 et 326 sont également placés dans les canaux latéraux 370 et 371 mais ces derniers, au lieu d'être limités par la cuve 310, communiquent par des ouvertures comme 388 et 389, figure 47, avec des chambres 386 et 387, disposées au-dessous de la cuve, entre celle-ci et le châssis 385.

On peut ainsi, sans accroître l'encombrement d'ensemble, tirer au mieux parti de l'espace pour accroître la section de passage desdits canaux et l'apparier à celle du conduit médian 323.

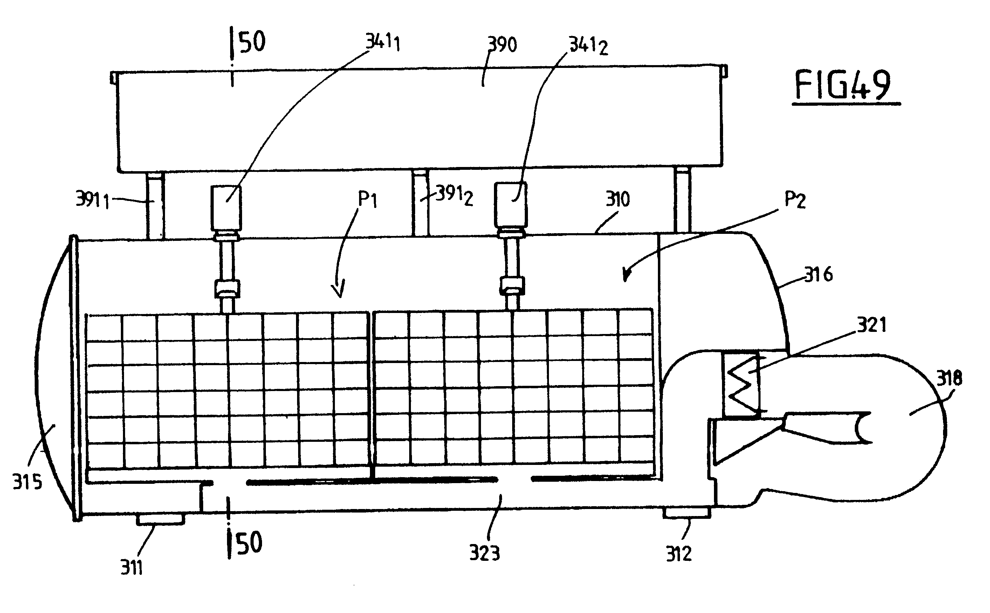

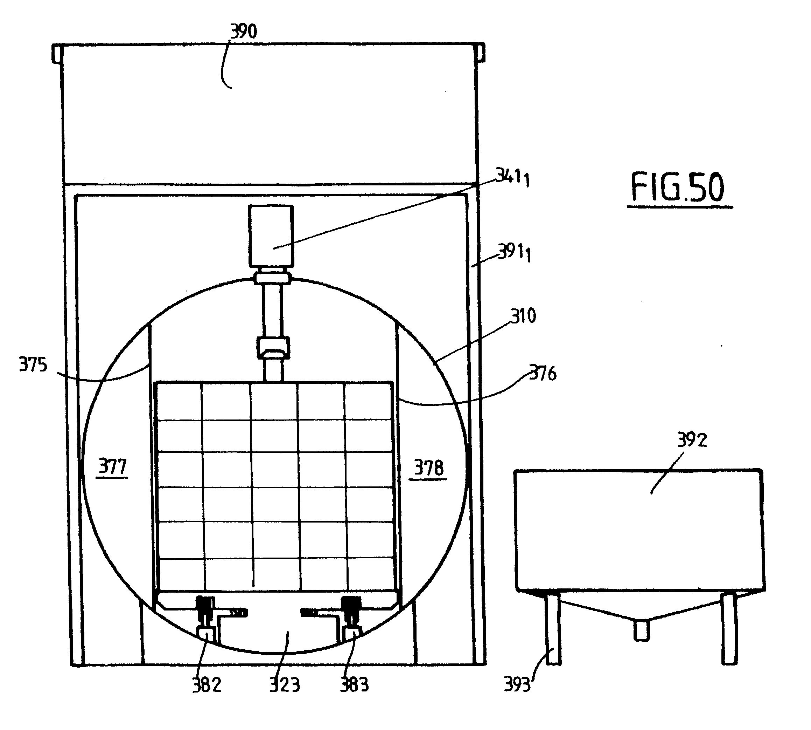

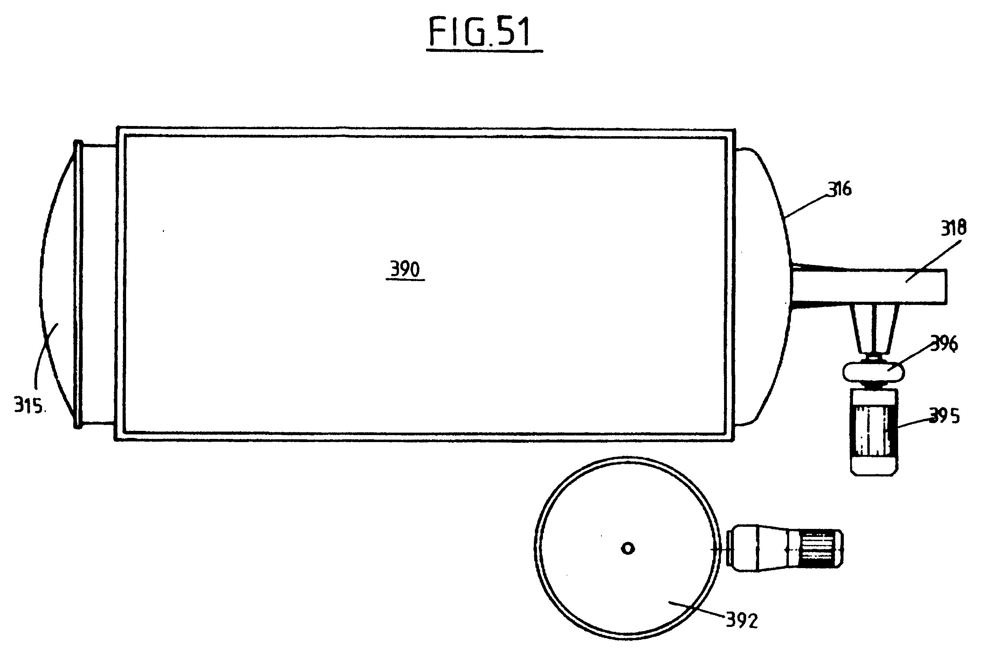

Dans la réalisation selon les figures 49 à 51, semblable à celle des figures 43 à 45 et où les mêmes références désignent les parties communes à l'une et l'autre réalisation, la cuve 310 repose sur le sol par les semelles 311 et 312. Par rapport à la réalisation précédente, toutefois, celle des figures 49 à 51 prévoit complémentairement de tirer parti de l'espace libre à la partie supérieure de la cuve 310 pour rapporter sur celle-ci un récipient 390 de préparation du bain de traitement, par exemple un bain de teinture. Le récipient 390 qui est utilisé en temps masqué est porté par des arceaux $391_1$, $391_2$, etc... et l'appareillage au voisinage de l'autoclave, tel qu'illustré, est complété par un bassin de reponchonnage 392, reposant sur le sol par des pieds 393. Dans cette réalisation, également, le fluide de traitement est mis en mouvement dans un circuit à boucle fermée par l'intermédiaire d'une turbine 318 dont le moteur d'actionnement est montré en 395, figure 51, et les moyens d'accouplement en 396.

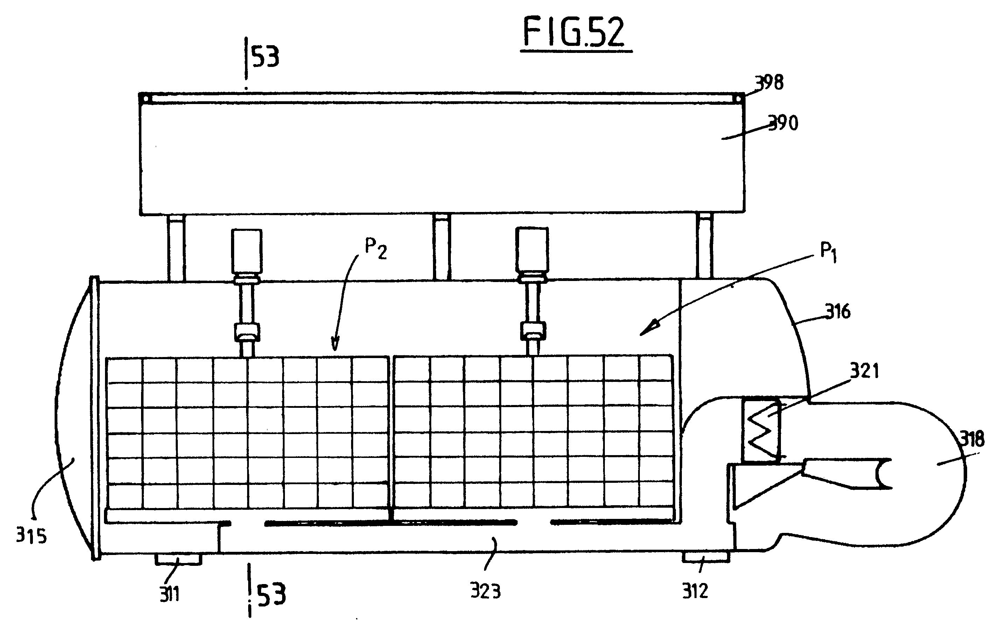

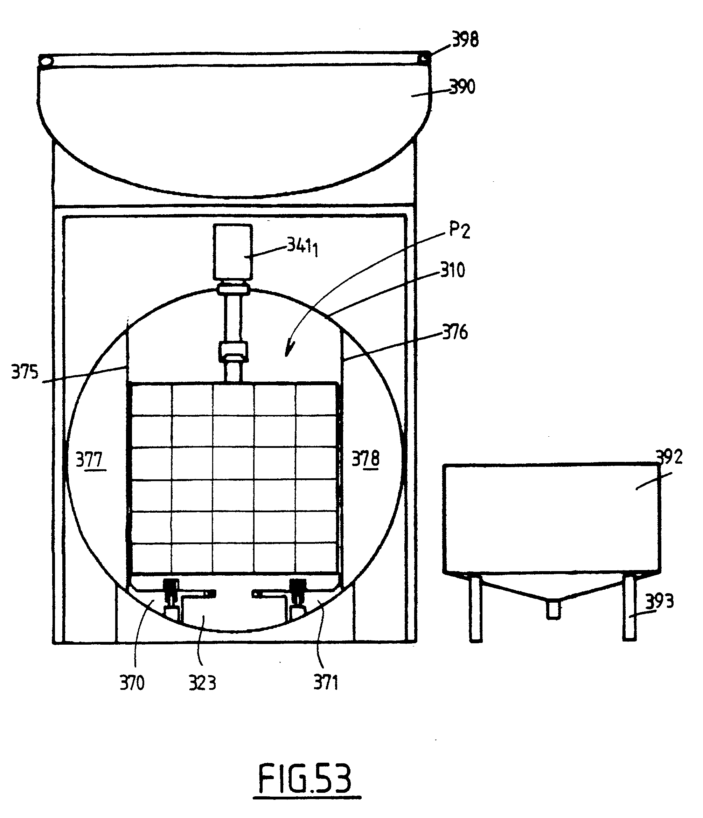

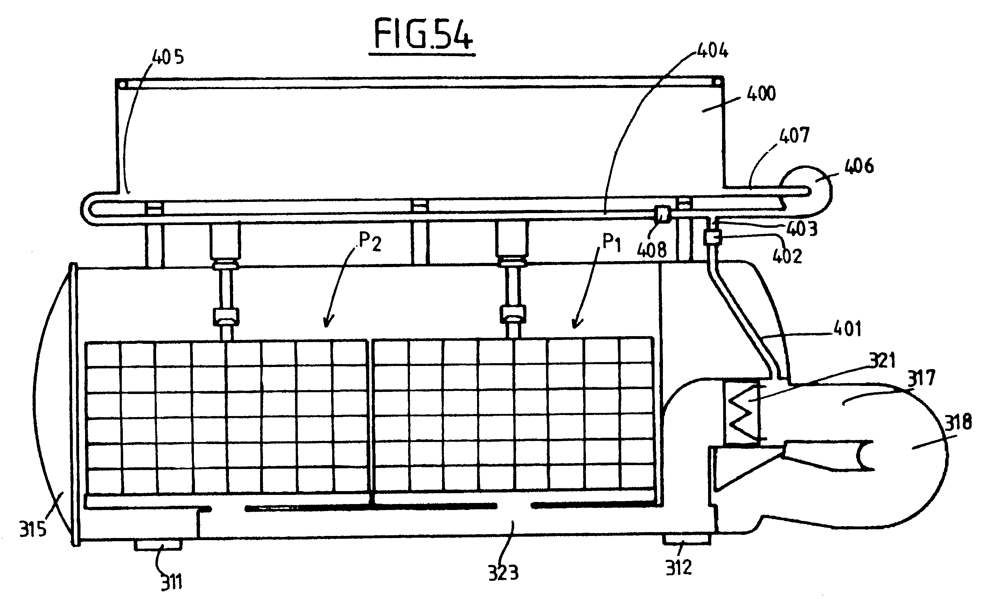

Dans la réalisation montrée sur les figures 52 et 53, pour le reste analogue à celle de la réalisation décrite immédiatement ci-dessus, le récipient 390 de section droite semi-elliptique, et non plus rectangulaire, est muni d'un anneau de rinçage perforé 398 pour son nettoyage, le récipient étant posé directement sur la cuve, par des supports appropriés.

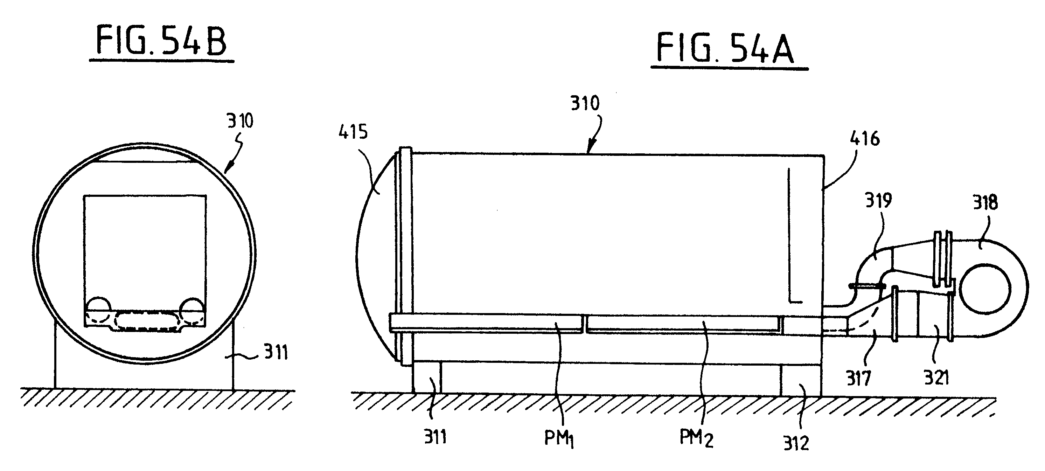

Dans la réalisation de la figure 54, proche de celle décrite immédiatement ci-dessus, le récipient 400 de préparation du bain de traitement est disposé au-dessus de l'autoclave qui repose directement sur le sol par ses semelles 311 et 312. Pour la réalisation d'un ensemble particulièrement compact et intégré on prévoit, dans cette réalisation, de relier le récipient 400 à la tubulure 317 de la turbine 318 par une canalisation 401 sur laquelle est interposée une vanne 402. Cette dernière est également reliée par un raccord 403 à une canalisation 404 qui, à une de ses extrémités, débouche dans le fond 405 du récipient et qui, à son autre extrémité, est reliée à une pompe 406 elle aussi reliée au fond du récipient 400 par une tubulure 407 mais à l'extrémité opposée de celle de raccordement de la canalisation 404. Sur cette dernière est également interposée, entre la pompe 406 et sa liaison au récipient 404, une vanne 408. Dans une telle réalisation la pompe 406 agit en tant que pompe de transfert pour le recyclage du bain dans le récipient, la récupération du bain à partir de l'autoclave, ainsi que, le cas échéant, en tant que pompe de vidange rapide.

Dans la réalisation montrée sur les figures 54A et 54B, la cuve 310 qui repose sur le sol par les semelles 311 et 312 est à section droite cylindrique mais a une extrémité fermée par une paroi plane 416 et l'autre par une porte 415. La cuve est prévue pour recevoir des porte-matières PM1 et PM2 alimentés en fluide de traitement à l'aide d'un appareillage du type de celui montré sur les figures 10 à 12A, c'est-à-dire à pompe ou turbine 318 interposée entre une tubulure 317 et une tubulure 319 qui aboutissent l'une et l'autre en partie basse de la cuve, avec un échangeur de chaleur 321 interposé sur la tubulure 317.

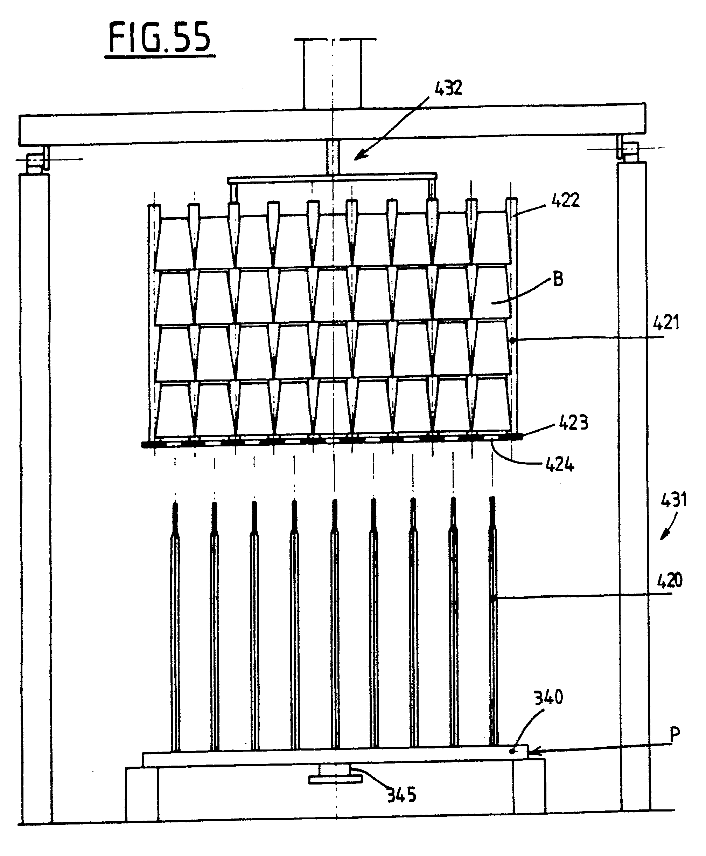

Un autoclave d'installation perfectionnée selon l'invention est particulièrement bien approprié pour le traitement au mouillé de bobines de fils, sans que cette indication ait, bien entendu, quelque caractère limitatif que ce soit. Pour une telle application l'invention prévoit, dans un premier mode d'exécution, que le porte-matières P, figure 55, soit du type à caisson de répartition de bain 340, embout 345 de liaison au conduit médian 323 de l'autoclave et baïonnettes 420 érigées sur le caisson 340 suivant une disposition régulière, par exemple à rangées et colonnes. Pour le chargement et/ou le déchargement du porte-matières l'invention fait application d'un module 421 sur lequel les bobines B de fils, filés ou analogues sont maintenues en piles de, par exemple, quatre bobines chacune, au moyen d'organes comme 422 solidaires d'une plaque de base 423 percée d'orifices 424 suivant une disposition correspondant à celle d'une partie des baïonnettes 420 du porte-matières P que le module est destiné à équiper.

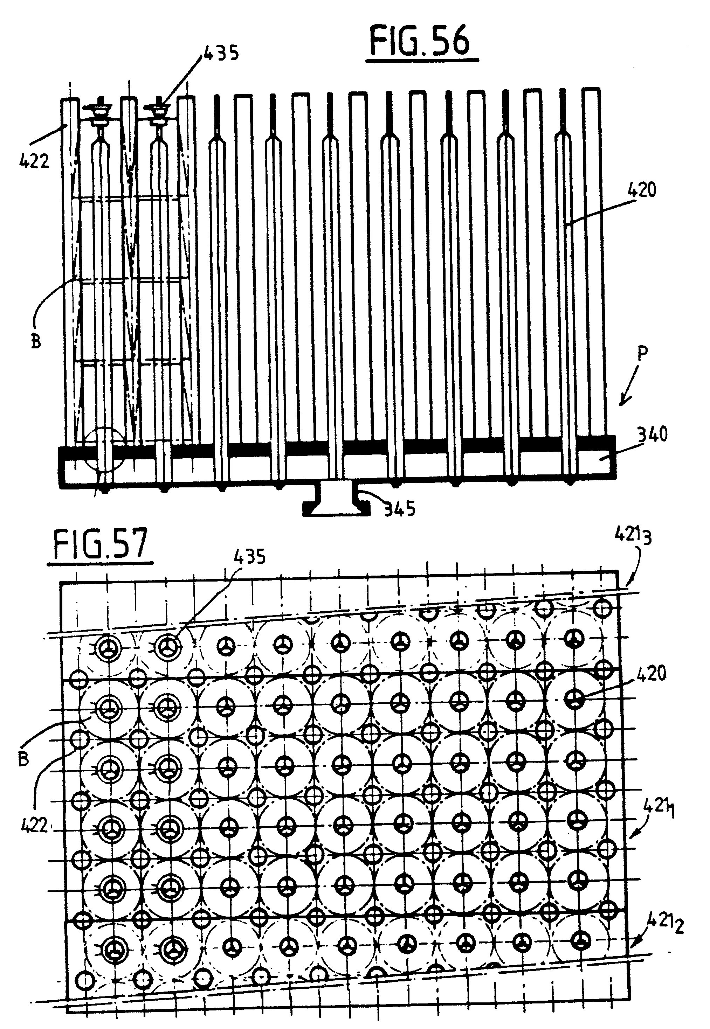

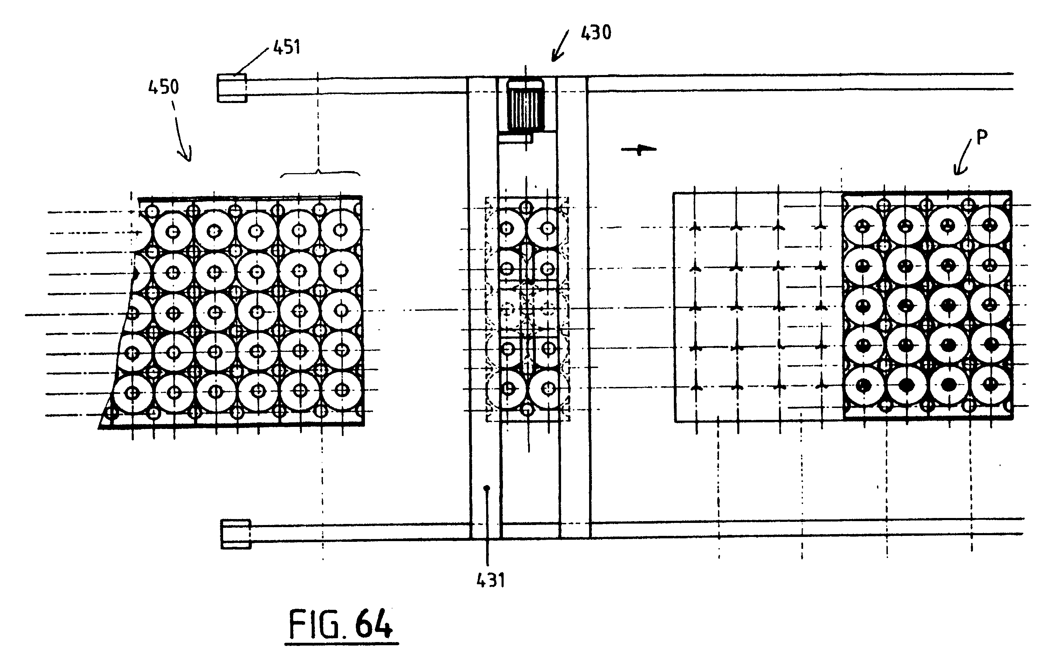

Pour la mise en place et l'extraction des modules à un poste de chargement comme 430, figure 64, on prévoit un portique 431 muni d'un organe de prise 432 coopérant avec des moyens de forme conjuguée du module. Lorsque le chargement d'un module sur le porte-matière P est terminé, des chapeaux de serrage et d'étanchéité 435 sont fixés aux extrémités libres des baïonnettes 420, figures 56 et 57, et un nouveau module est mis enplace sur le porte-matière jusqu'à ce que celui-ci soit complètement chargé, - par exemple dans la réalisation illustrée sur les figures 56 et 57-, à l'aide de trois modules $421_1$, $421_2$ et $421_3$, dont chacun comporte trente-six piles (4 x 9) de quatre bobines chacune, c'est-à-dire pour chaque porte-matières une contenance de quatre cent trente deux bobines.

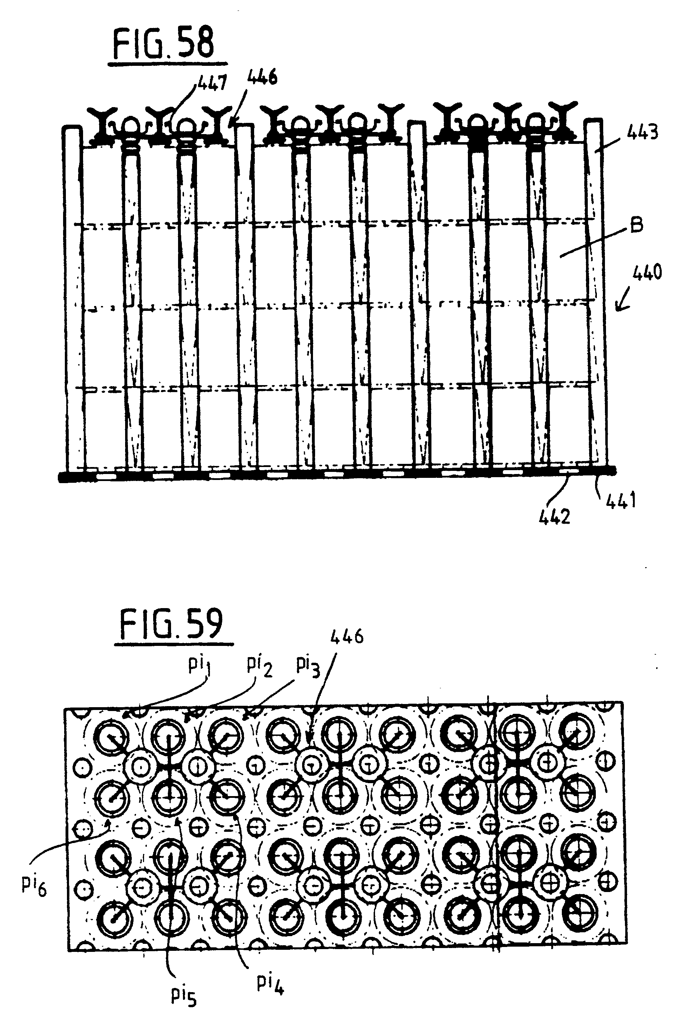

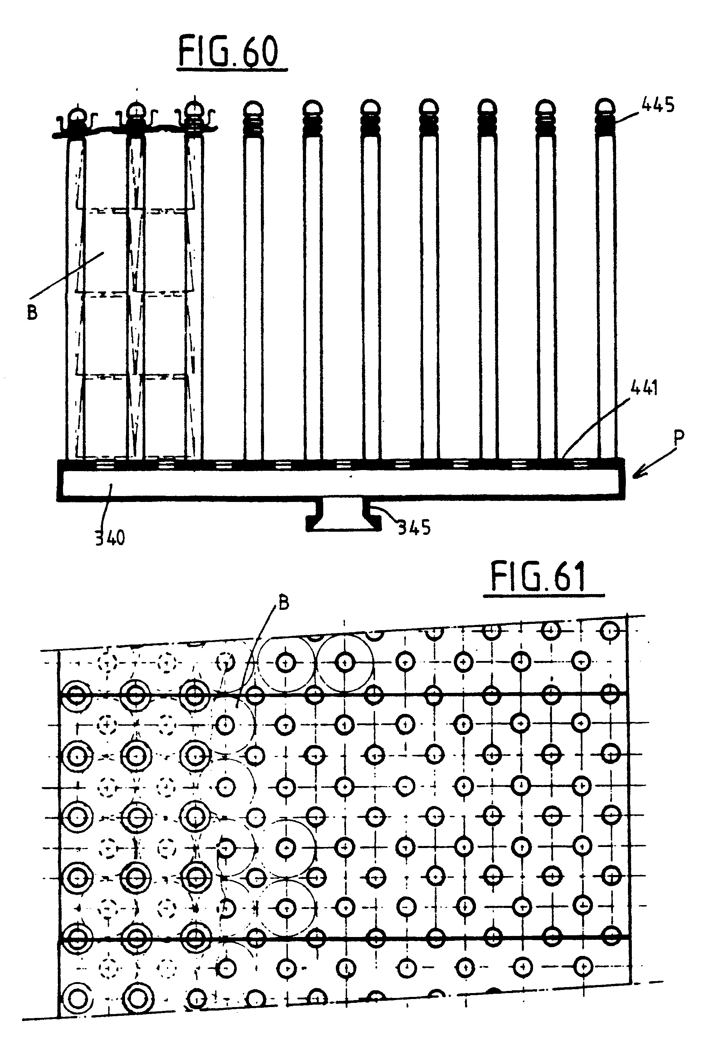

C'est un même chargement de bobines qui est réalisé pour chaque porte-matières à l'aide des dispositifs selon les figures 58 à 61. Dans cette réalisation, toutefois, le porte-matière P, figure 60, est constitué par le caisson 340 de répartition de bain et l'embout 345 de liaison au conduit médian 323, uniquement, à l'exclusion de baïonnettes. Un tel porte-matière est prévu pour être équipé d'un module 440, figure 58, à plaque de base 441 percée d'orifices 442 et moyens 443 de maintien des piles de bobines B réalisés sous forme de tiges dont certaines, au moins, présentent à leurs extrémités supérieures libres des gorges 445. Celles-ci sont prévues pour l'accrochage de chapeaux 446 agissant simultanément pour le serrage et l'étanchéité de six piles de bobines adjacentes $pi_1$, $pi_2$, $pi_3$, $pi_4$, $pi_5$, $pi_6$, le dispositif de chapeaux qui peut être maintenu en place par des bagues élastiques 447 coopérant avec les gorges 445 ayant ainsi quelque peu la structure d'une araignée de serrage.

De tels modules, qui peuvent être garnis en bobines B à la sortie même des métiers de filature sont ensuite amenés, en continu, à un poste 450, figure 64, qui comprend des moyens 451 pour leur indexation préalablement au chargement au poste 430. Après que la totalité d'un porte-matières ait été garnie à l'aide des modules, de préférence de façon automatique grâce à l'indexation préalable, les porte-matières sont chargés dans l'autoclave par l'un quelconque des moyens montrés aux figures 38 à 41 ou par des moyens équivalents. Lorsqu'ils ont atteint dans l'autoclave la position souhaitée, c'est-à-dire celle en laquelle l'embout 345 est en regard d'un orifice 331 du conduit médian 323, l'actionnement d'un dispositif d'immobilisation 341 est provoqué. Un tel dispositif qui, comme montré sur la figure 63, peut être constitué par un plateau 460 dont la face inférieure 456 est conformée en correspondance des modules chargés sur le porte-matière P tant en ce qui concerne les moyens de maintien comme 422 ou 443 que la répartition des bobines empilées provoque par son déplacement l'étanchéité de la liaison des embouts comme 345 au conduit médian 323.

En variante, le plateau 460 agit uniquement pour le serrage et l'étanchéité des bobines, qui ne sont alors pas garnies de chapeaux comme 446 et ce sont les moyens décrits en référence à la figure 62 qui assurent l'étanchéité dudit circuit du fluide de traitement.

L'installation permet la mise en oeuvre de tous les types de traitement au mouillé usuels, par exemple des traitements à circulation unidirectionnelle ou des traitements à circulation alternée du bain, avec ou sans pression statique réalisée avec un gaz comprimé au-dessus du bain, et cela en fonction des matières traitées et des résultats recherchés.

Ainsi, par exemple, l'autoclave de l'installation selon l'invention peut-il être utilisé à capacité réduite, comme illustré schématiquement sur la figure 65. Dans un tel mode d'utilisation, il est chargé non seulement par un porte-matière $P_1$ mais complémentairement par un corps mort CM, par exemple un porte-écheveaux vide, maintenu en position par le dispositif d'immobilisation $341_2$, et non relié au circuit de fluide de traitement.

En variante, le porte-matière est un porte-écheveaux qui, à contour parallélipipédique comme l'autoclave, permet de faire usage de "bâtons" rectilignes pour soutenir les écheveaux.

## Revendications
**Revendications pour les Etats contractants suivants : BE, CH, DE, ES, FR, GB, IT, LI**

1. Installation de traitement au mouillé de matières textiles disposées sur des porte-matières (PM), comportant une cuve (10 ; 100, 200,...) à axe sensiblement horizontal dont au moins une extrémité est munie d'une porte d'entrée et de sortie (11, 11A, 201...) d'au moins un porte-matières sur lequel sont chargées les matières textiles à traiter (Bb ; Bo ; Ru ; Ec), avec au moins un appareillage (36, 111) de mise en mouvement au travers desdites matières par l'intermédiaire d'une pompe, turbine (37) ou analogue d'un fluide de traitement circulant en boucle fermée et, le cas échéant, un échangeur de chaleur (40) interposé sur ladite boucle avec pour chaque porte-matières une embase en caisson (50) munie d'au moins une ouverture (52) de raccordement à une ouverture d'un porte-matières adjacent ou de raccordement à une première tubulure (38, 39) de l'appareillage de mise en mouvement du fluide qui débouche dans un volume de traitement pour établir un premier trajet de circulation du fluide dans un sens, la circulation dudit fluide dans l'autre sens se faisant suivant un second trajet qui comporte au moins une seconde tubulure (39, 38) dudit appareillage débouchant également dans ledit volume limité latéralement par des parois (13, 14 ; 202, 203 ; 375, 376), régnant entre le plancher (15) et la voûte (16) de la cuve (10 ; 100, 200...), caractérisée en ce que ladite première tubulure (38) et au moins ladite seconde tubulure (39) débouchent chacune dans ledit volume par un ou des passage(s) (42, 43, 44) ménagé(s) au voisinage du plancher de la cuve, au moins un desdits passages étant prévu au voisinage de l'extrémité longitudinale de la cuve (10, 100,...) opposée à celle présentant la porte d'entrée et de sortie (11, 11A, 201,...) du ou des porte-matière(s).

2. Installation selon la revendication 1, caractérisée en ce que les passages (220, 235a, 236a) sont ménagés dans une paroi (222) à l'extrémité longitudinale de la cuve (200) opposée à celle présentant la porte d'entrée et de sortie (201) du ou des porte-matière(s) (PM) et dans les parois latérales (202, 203) de la cuve.

3. Installation selon la revendication 1, caractérisée en ce que les passages (220, 235, 236) sont ménagés dans une paroi (222) à l'extrémité longitudinale de la cuve (200) opposée à celle présentant la porte d'entrée et de sortie (201) du ou des porte-matières (PM) et dans le plancher de la cuve.

4. Installation selon la revendication 1, caractérisée en ce que les passages (365, 366) sont ménagés dans le plancher et les parois latérales (364) de la cuve (310).

5. Installation selon la revendication 1, caractérisée en ce que ladite cuve (10...) est de forme générale parallélépipédique, à section droite quadrangulaire et d'aire peu différente de celle des porte-matières (PM$_1$, PM$_2$) chargés, de sorte que le rapport de bain mis en oeuvre dans une telle installation est extrêmement faible.

6. Installation selon l'une quelconque des revendications précédentes, caractérisée en ce que la cuve (200) est utilisée en tant qu'autoclave, le traitement ayant lieu sous pression statique, d'air comprimé ou de gaz inerte introduit par des moyens appropriés (ga).

7. Installation selon l'une des revendications 2 ou 3, caractérisée en ce que dans le cas d'une pluralité de passages pour au moins ladite seconde tubulure (235, 236 ; 235a, 236a) ceux-ci sont disposés suivant au moins un couple placé dans au moins un plan transversal de la cuve (200).

8. Installation selon la revendication 7, caractérisée en ce que les couples de passages sont régulièrement disposés le long de la cuve, au voisinage de la porte antérieure (201), sensiblement dans le milieu de la cuve et au voisinage de la paroi postérieure (222).

9. Installation selon l'une quelconque des revendications précédentes, caractérisée en ce que la matière textile à traiter est sous forme d'au moins une ensouple (E) et en ce que des corps morts (247-250) sont placés dans la cuve (200) au voisinage de ladite ensouple, entre celle-ci et les parois de la cuve.

10. Installation selon l'une quelconque des revendications 1 à 8, caractérisée en ce que les matières textiles à traiter sont des bobines (B, b), de la bourre ou du câble (Bo) ou des rubans de peignée (Ru) ou des écheveaux (EC) disposés verticalement ou horizontalement et en ce que dans le cas de bobines (B, b) celles-ci sont portées par des baïonnettes ou clarinettes solidaires d'un caisson disposé horizontalement ou verticalement dans la cuve (200) ou d'un retour de l'embase en caisson du porte-matières (PM), retour lui aussi disposé verticalement.

11. Installation selon l'une quelconque des revendications précédentes, caractérisée en ce que les passages (235, 236 ; 235a, 236) sont reliés à au moins ladite seconde tubulure (210) par un ou des conduits (241, 242) disposés au moins partiellement sous la cuve ou latéralement par rapport à celle-ci.

12. Installation selon la revendication 5, caractérisée en ce que la cuve (10) est garnie de raidisseurs (20, 21) et le cas échéant de renforts (22, 23...) la partie basse des raidisseurs, ou de certains d'entre eux, servant au support de la cuve sur le sol.

13. Installation selon la revendication 12, caractérisée en ce qu'elle comprend, à la partie supérieure de la cuve (10), un récipient de préparation de bain (35) relié fonctionnellement à la cuve (10) par des canalisations, tubulures, vannes, pompes et analogues (35A) et qui repose sur la cuve (10) par l'intermédiaire d'au moins certains desdits raidisseurs (30) et renforts (31).

14. Installation selon l'une des revendications 12 ou 13, caractérisée en ce que le plancher horizontal (15) de la cuve (10) est muni de moyens de roulement (64) avec lesquels sont propres à coopérer deux chemins (62, 63) ménagés sur le fond plein (51) des porte-matières (PM) lors de l'introduction et/ou de l'extraction de ceux-ci dans et/ou hors de la cuve (10).

15. Installation selon l'une des revendications 12 à 14, caractérisée en ce que la porte (11) d'entrée et de sortie des porte-matières (PM) est du type à pivotement (11A) ou à guillotine et en ce qu'à ladite porte est associé un dispositif à manivelle (45) ou à volant (45A) propre à assurer le blocage des porte-matières (PM) dans la cuve (10) et la continuité à étanchéité des trajets de circulation de fluide.

16. Installation selon l'une des revendications 12 à 15, caractérisée en ce que la cuve (100) est à deux portes d'extrémité (101, 102) et en ce qu'à ladite cuve est associé au moins un dispositif (104) à manivelle (105) propre à assurer le blocage des porte-matières (PM) dans la cuve (100) et la continuité à étanchéité des trajets de circulation de fluide.

17. Installation selon l'une des revendications 12 à 16, caractérisée en ce qu'à la ou aux tubulure(s) non relié(s) aux ouvertures des portematières sont associées une ou des tôle(s) déflectrice(s) (70) orientée(s) vers le plancher (15) de la cuve et destinée(s) à empêcher que la pression dynamique du fluide mis en mouvement par la pompe, turbine ou analogue (37) de l'appareillage (36, 111) de mise en mouvement du fluide n'endommage les matières disposées au voisinage desdites tubulures dans la cuve.

18. Installation selon la revendication 17, caractérisée en ce que la cuve (10) présente au voisinage de son extrémité opposée à celle présentant la porte d'entrée et de sortie (11) des porte-matières (PM) une cloison (71) sensiblement verticale distante de la paroi frontale (12) d'extrémité de la cuve (10) et une paroi sensiblement horizontale (71a) au-dessus desdites tôles déflectrices entre la cloison (71) et ladite paroi frontale (12).

19. Installation selon la revendication 18, caractérisée en ce que ladite cloison sensiblement verticale (71) est de hauteur inférieure à celle de la cuve et en ce que, dans l'espace (72) limité par ladite cloison (71) et qui n'est pas celui contenant les porte-matières (PM), est prévue une pompe ou analogue de reprise du bain (73).

20. Installation selon l'une quelconque des revendications 12 à 19, caractérisée en ce qu'on associe à l'appareillage (111) de mise en mouvement du fluide une troisième tubulure (114) qui débouche dans la cuve en regard d'un tube porte-ensouple (T) propre à équiper l'installation, celle-ci comportant en outre des vannes (118, 119) pour établir le trajet de fluide approprié aux matières textiles en cours de traitement à partir de la turbine ou analogue que comporte l'appareillage (111).

21. Installation selon l'une quelconque des revendications 12 à 20, caractérisée en ce que son plancher (15) est muni de moyens de conduit (87) favorisant la distribution et/ou la reprise du fluide de traitement.

22. Installation selon l'une quelconque des revendications 1 à 21, caractérisée en ce que la cuve (310) comprend, pour la circulation du fluide dans un sens, un conduit médian longitudinal (323) auquel est (sont) propre(s) à être abouché(s) le ou les porte-matières ($P_1$, $P_2$) logé(s) dans la cuve et qui règne(nt) sensiblement dans le plan médian et dans le fond de celle-ci et en ce que, pour la circulation du fluide dans l'autre sens, il comprend au moins un et de préférence deux canaux (370, 371) longitudinaux qui règnent eux aussi dans la cuve au voisinage dudit conduit médian (323).

23. Installation selon la revendication 22, caractérisée en ce qu'on prévoit également que la liaison du conduit longitudinal médian à ou aux porte-matières, pour le passage du fluide de traitement, s'effectue à partir d'un ou avantageusement plusieurs orifices (331, 332) ménagé(s) dans une paroi limitant ledit conduit et au(x)quel(s) sont propres à être abouchés avec interposition de moyens d'étanchéité (342, 343) des embouts (345, 346) de liaison prévus sur chaque caisson ou analogue (340) de répartition de fluide de traitement associé à un porte-matière (P).

24. Installation selon l'une des revendications 22 ou 23, caractérisée en ce que les moyens d'étanchéité (342, 343) sont rendus automatiquement opératoires lorsque sont actionnés des moyens d'immobilisation ($341_1$, $341_2$) du ou des porte-matières, prévus en partie haute de l'enceinte (310).

25. Installation selon l'une quelconque des revendications 22 à 24, caractérisée en ce que les canaux (370, 371) longitudinaux qui règnent dans le fond de la cuve au voisinage du conduit médian (323) sont des canaux latéraux limités par le fond de la cuve (310) et/ou un berceau qui en est solidaire et par lequel il repose sur le sol d'une première part, par les parois (325, 326) dudit conduit médian (323), de seconde part, et par des plaques perforées, des grilles ou analogues (380), de troisième part, lesquelles règnent entre lesdites parois (325, 326) du conduit médian et l'enceinte (310) sur la totalité ou quasi totalité de la longueur de celle-ci.

26. Installation selon l'une quelconque des revendications 22 à 25, caractérisée en ce que les canaux latéraux (370, 371) de circulation du fluide de traitement sont limités sensiblement par les parois (325, 326) du conduit médian (323), la cuve (310) et la face inférieure du ou des porte-matières (P).

27. Installation selon la revendication 22, caractérisée en ce que le conduit médian longitudinal (323) de circulation du fluide dans un sens est à section droite en forme de segment circulaire (figure 45c) et en ce que la circulation du fluide dans l'autre sens a lieu au-dessus dudit conduit médian.

28. Installation selon l'une quelconque des revendications 22 à 27, caractérisée en ce que les moyens de mise en mouvement du fluide de traitement comme une turbine (31), un échangeur de chaleur (321), et les moyens de tubulures (317, 319, 320) qui leur sont associés sont placés latéralement par rapport à la cuve, celle-ci comportant alors avantageusement une porte (315a, 315b) d'entrée et de sortie des porte-matières (P) à chacune de ses extrémités longitudinales.

29. Installation selon l'une quelconque des revendications 22 à 28, caractérisée en ce que les canaux latéraux (370, 371) sont adjacents à et communiquent avec des chambres (386, 387) ménagées dans un chassis (385) par lequel la cuve repose sur le sol (S).

30. Installation selon l'une quelconque des revendications précédentes, caractérisée en ce que les moyens d'immobilisation (341) des porte-matières (P) en leur intérieur comportent chacun un plateau (460) de forme et dimensions conjuguées des porte-matières (P) que l'installation est susceptible de recevoir et/ou des modules (440,...) destinés à équiper lesdits porte-matières (P), les plateaux (460) d'immobilisation des porte-matières assurant également, en position opératoire, le serrage et l'étanchéité des bobines ou analogues (B) portées par les modules (440) avec lesquels ils coopèrent.

31. Installation selon l'une quelconque des revendications 22 à 30, caractérisée en ce que, pour le traitement de bobines (B) de fils ou analogues, chaque module de manutention est muni de moyens (443) de maintien des piles de bobines auxquels sont associés des chapeaux (446) de serrage et d'étanchéité desdites piles, réunis entre eux suivant un dispositif du type "araignée" propre à être fixé en partie haute desdits moyens de maintien de piles.

32. Installation selon l'une quelconque des revendications 22 à 31, caractérisée en ce qu'elle comprend, pour la liaison du conduit (323) aux porte-matières (P) des raccords mcbiles (480) montés à étanchéité dans ledit conduit avec lequel ils communiquent et propres à venir coopérer avec les embouts (345) solidaires desdits porte-matières (P).

33. Installation selon l'une quelconque des revendications précédentes, caractérisée en ce qu'elle comprend des corps-morts latéraux, en matériau alvéolaire, d'un bloc ou à évidements et dont les faces planes en regard parallèles au plan médian vertical et à une distance l'une de l'autre légèrement supérieure à la largeur des porte-matières (P) ou analogues que l'installation est destinée à recevoir sont traitées pour résister aux températures et pressions régnant dans la cuve dont ils assurent, simultanément, l'isolation thermique par l'intérieur.

34. Porte-matière propre à être utilisé dans une installation de traitement au mouillé de matières textiles selon l'une quelconque des revendications précédentes comprenant une embase (50) à contour rectangulaire, caractérisé en ce que ladite embase est un caisson à fond plein (51) percé d'au moins une ouverture (52, 53) sur sa périphérie et/ou son fond pour l'entrée ou la sortie de fluide de traitement.

35. Porte-matière selon la revendication 34, caractérisé en ce qu'il présente sur les bords longitudinaux de son fond (51) des chemins de roulement (62, 63) propres à coopérer avec des moyens conjugués (64) ménagés sur le plancher (15) de la cuve (10) pour l'introduction et/ou l'extraction des porte-matières (PM) dans et/ou hors de ladite cuve ou dudit autoclave.

36. Porte-matière selon l'une des revendications 34 ou 35, caractérisé en ce qu'il comprend des moyens pour le support de bobines disposées en rangées verticales ou horizontales, ainsi que pour l'amenée et/ou le retour de fluide de traitement auxdites bobines (B, BH).

37. Porte-matière selon l'une des revendications 34 ou 35, caractérisé en ce qu'il comprend des moyens pour le support de bourre (BO) ou de câble (figures 10-10B).

38. Porte-matière selon l'une des revendications 34 ou 35, caractérisé en ce qu'il comprend des moyens pour le support d'écheveaux (EC) sur des bâtons rectilignes (ba).

39. Porte-matière selon l'une des revendications 24 à 38, caractérisé en ce qu'il comporte un corps mort solidaire de son caisson.

40. Porte-matière selon la revendication 39, caractérisé en ce que le corps mort est fermé et résistant à la pression.

41. Ensemble de porte-matière et de module, notamment pour le traitement dans une installation selon l'une quelconque des revendications 1 à 33 de bobines (B) de fils, filés ou analogues, caractérisé en ce que le porte-matière (P) comprend uniquement un caisson de répartition de bain (340) auquel est associé un embout (345) de liaison dudit caisson au conduit médian (323) de la cuve et en ce que le module associé au porte-matière comprend des moyens de maintien de bobines (443) dont certains au moins sont conformés à leurs extrémités libres, le cas échéant, suivant des gorges (445) de fixation des chapeaux de serrage et d'étanchéité (416) à l'aide de bagues élastiques ou analogues (447).

42. Porte-ensouple propre à être utilisé dans une installation selon l'une des revendications 1 à 33, caractérisé en ce qu'il est à section droite quadrangulaire, avantageusement carré ou rectangulaire, pour servir de support à une ou plusieurs ensouple(s) de tissu destinée(s) à être traitée(s) au mouillé dans ladite installation (figures 12A ; 19 ; 32A).

**Revendications pour les Etats contractants suivants : GR, SE**

1. Installation de traitement au mouillé de matières textiles disposées sur des porte-matières (PM . PM$_1$, PM$_2$ ; P$_1$, P$_2$,...), comportant une cuve (10 ; 100, 200,...) à axe sensiblement horizontal dont au moins une extrémité est munie d'une porte d'entrée et de sortie (11, 11A, 201...) d'au moins un porte-matières sur lequel sont chargées les matières textiles à traiter (Bb ; Bo ; Ru ; Ec), avec au moins un appareillage (36, 111) de mise en mouvement au travers desdites matières par l'intermédiaire d'une pompe, turbine (37) ou analogue d'un fluide de traitement circulant en boucle fermée et, le cas échéant, un échangeur de chaleur (40) interposé sur ladite boucle avec pour chaque porte-matières une embase en caisson (50) munie d'au moins une ouverture (52) de raccordement à une ouverture d'un porte-matières adjacent ou de raccordement à une première tubulure (38, 39) de l'appareillage de mise en mouvement du fluide qui débouche dans un volume de traitement pour établir un premier trajet de circulation du fluide dans un sens, la circulation dudit fluide dans l'autre sens se faisant suivant un second trajet qui comporte au moins une seconde tubulure (39, 38) dudit appareillage débouchant également dans ledit volume, caractérisé en ce que ce dernier est limité latéralement par des parois (13, 14 ; 202, 203 ; 375, 376), régnant entre le plancher (15) et la voûte (16) de la cuve (10 ; 100, 200...) et en ce que ladite première tubulure (38) et au moins ladite seconde tubulure (39) débouchent chacune dans ledit volume par un ou des passage(s) (42, 43, 44) ménagé-

(s) au voisinage du plancher de la cuve.

2. Installation selon la revendiction 1, caractérisée en ce que les passages (42, 43, 44 ; 220, 241', 242'...) sont ménagés à l'extrémité longitudinale de la cuve (10, 100...) opposée à celle présentant la porte d'entrée et de sortie (11, 11A, 201...) du ou des porte-matières.

3. Installation selon la revendication 1, caractérisée en ce que les passages (220, 235a, 236a) sont ménagés dans une paroi (222) à l'extrémité longitudinale de la cuve (200) opposée à celle présentant la porte d'entrée et de sortie (201) du ou des porte-matière(s) (PM) et dans les parois latérales (202, 203) de la cuve.

4. Installation selon la revendication 1, caractérisée en ce que les passages (220, 235, 236) sont ménagés dans une paroi (222) à l'extrémité longitudinale de la cuve (200) opposée à celle présentant la porte d'entrée et de sortie (201) du ou des porte-matières (PM) et dans le plancher de la cuve.

5. Installation selon la revendication 1, caractérisée en ce que les passages sont ménagés dans le plancher uniquement de la cuve.

6. Installation selon la revendication 1, caractérisée en ce que les passages (365, 366) sont ménagés dans le plancher et les parois latérales (364) de la cuve (310).

7. Installation selon la revendication 1, caractérisée en ce que ladite cuve (110) est de forme générale parallélépipédique, à section droite quadrangulaire et d'aire peu différente de celle des porte-matières (PM$_1$, PM$_2$) chargés, de sorte que le rapport de bain mis en oeuvre dans une telle installation est extrêmement faible.

8. Installation selon l'une quelconque des revendications précédentes, caractérisée en ce que la cuve (200) est utilisée en tant qu'autoclave, le traitement ayant lieu sous pression statique, d'air comprimé ou de gaz inerte introduit par des moyens appropriés (ga).

9. Installation selon l'une des revendications 3 ou 4, caractérisée en ce que dans le cas d'une pluralité de passages pour au moins ladite seconde tubulure (235, 236 ; 235a, 236a) ceux-ci sont disposés suivant au moins un couple placé dans au moins un plan transversal de la cuve (200).

10. Installation selon la revendication 9, caractérisée en ce que les couples de passages sont régulièrement disposés le long de la cuve, au voisinage de la porte antérieure (201), sensiblement dans le milieu de la cuve et au voisinage de la paroi postérieure (222).

11. Installation selon l'une quelconque des revendications précédentes, caractérisée en ce que la matière textile à traiter est sous forme d'au moins une ensouple (E) et en ce que des corps morts (247-250) sont placés dans la cuve (200) au voisinage de ladite ensouple, entre celle-ci et les parois de la cuve.

12. Installation selon l'une quelconque des revendications 1 à 10, caractérisée en ce que les matières textiles à traiter sont des bobines (B, b), de la bourre ou du câble (Bo) ou des rubans de peignée (Ru) ou des écheveaux (EC) disposés verticalement ou horizontalement et en ce que dans le cas de bobines (B, b) celles-ci sont portées par des baïonnettes ou clarinettes solidaires d'un caisson disposé horizontalement ou verticalement dans la cuve (200) ou d'un retour de l'embase en caisson du porte-matières (PM), retour lui aussi disposé verticalement.

13. Installation selon l'une quelconque des revendications précédentes, caractérisée en ce que les passages (235, 236 ; 235a, 236) sont reliés à au moins ladite seconde tubulure (210) par un ou des conduits (241, 242) disposés au moins partiellement sous la cuve ou latéralement par rapport à celle-ci.

14. Installation selon la revendication 7, caractérisée en ce que la cuve (10) est garnie de raidisseurs (20, 21) et le cas échéant de renforts (22, 23...) la partie basse des raidisseurs, ou de certains d'entre eux, servant au support de la cuve sur le sol.

15. Installation selon la revendication 14, caractérisée en ce qu'elle comprend, à la partie supérieure de la cuve (10), un récipient de préparation de bain (35) relié fonctionnellement à la cuve (10) par des canalisations, tubulures, vannes, pompes et analogues (35A) et qui repose sur la cuve (10) par l'intermédiaire d'au moins certains desdits raidisseurs (30) et renforts (31).

16. Installation selon l'une des revendications 14 ou 15, caractérisée en ce que le plancher horizontal (15) de la cuve (10) est muni de moyens de roulement (64) avec lesquels sont propres à coopérer deux chemins (62, 63) ménagés sur le fond plein (51) des porte-matières (PM) lors de l'introduction et/ou de l'extraction de ceux-ci dans et/ou hors de la cuve (10).

17. Installation selon l'une des revendications 14 à 16, caractérisée en ce que la porte (11) d'entrée et de sortie des porte-matières (PM) est du type à pivotement (11A) ou à guillotine et en ce qu'à ladite porte est associé un dispositif à manivelle (45) ou à volant (45A) propre à assurer le blocage des porte-matières (PM) dans la cuve (10) et la continuité à étanchéité des trajets de circulation de fluide.

18. Installation selon l'une des revendications 14 à 17, caractérisée en ce que la cuve (100) est à deux portes d'extrémité (101, 102) et en ce qu'à ladite cuve est associé au moins un dispositif (104) à manivelle (105) propre à assurer le blocage des porte-matières (PM) dans la cuve (100) et la continuité à étanchéité des trajets de circulation de fluide.

19. Installation selon l'une des revendications 14 à 18, caractérisée en ce qu'à la ou aux tubulure(s) non relié(s) aux ouvertures des porte-matières sont associées une ou des tôle(s) déflectrice(s) (70) orientée(s) vers le plancher (15) de la cuve et destinée(s) à empêcher que la pression dynamique du fluide mis en mouvement par la pompe, turbine ou analogue (37) de l'appareillage (36, 111) de mise en mouvement du fluide n'endommage les matières disposées au voisinage desdites tubulures dans la cuve.

20. Installation selon la revendication 19, caractérisée en ce que la cuve (10) présente au voisinage de son extrémité opposée à celle présentant la porte d'entrée et de sortie (11) des porte-matières (PM) une cloison (71) sensiblement verticale distante de la paroi frontale (12) d'extrémité de la cuve (10) et une paroi sensiblement horizontale (71a) au-dessus desdites tôles déflectrices entre la cloison (71) et ladite paroi frontale (12).

21. Installation selon la revendication 20, caractérisée en ce que ladite cloison sensiblement verticale (71) est de hauteur inférieure à celle de la cuve et en ce que, dans l'espace (72) limité par ladite cloison (71) et qui n'est pas celui contenant les portematières (PM), est prévue une pompe ou analogue de reprise du bain (73).

22. Installation selon l'une quelconque des revendications 14 à 21, caractérisée en ce qu'on associe à l'appareillage (111) de mise en mouvement du fluide une troisième tubulure (114) qui débouche dans la cuve en regard d'un tube porte-ensouple (T) propre à équiper l'installation, celle-ci comportant en outre des vannes (118, 119) pour établir le trajet de fluide approprié aux matières textiles en cours de traitement à partir de la turbine ou analogue que comporte l'appareillage (111).

23. Installation selon l'une quelconque des revendications 14 à 22, caractérisée en ce que son plancher (15) est muni de moyens de conduit (87) favorisant la distribution et/ou la reprise du fluide de traitement.

24. Installation selon l'une quelconque des revendications 1 à 23, caractérisée en ce que la cuve (310) comprend, pour la circulation du fluide dans un sens, un conduit médian longitudinal (323) auquel est (sont) propre(s) à être abouché(s) le ou les porte-matières (P₁, P₂) logé(s) dans la cuve et qui règne(nt) sensiblement dans le plan médian et dans le fond de celle-ci et en ce que, pour la circulation du fluide dans l'autre sens, il comprend au moins un et de préférence deux canaux (370, 371) longitudinaux qui règnent eux aussi dans la cuve au voisinage dudit conduit médian (323).

25. Installation selon la revendication 24, caractérisée en ce qu'on prévoit également que la liaison du conduit longitudinal médian à ou aux porte-matières, pour le passage du fluide de traitement, s'effectue à partir d'un ou avantageusement plusieurs orifices (331, 332) ménagé(s) dans une paroi limitant ledit conduit et au(x)quel(s) sont propres à être abouchés avec interposition de moyens d'étanchéité (342, 343) des embouts (345, 346) de liaison prévus sur chaque caisson ou analogue (340) de répartition de fluide de traitement associé à un porte-matière (P).

26. Installation selon l'une des revendications 24 ou 25, caractérisée en ce que les moyens d'étanchéité (342, 343) sont rendus automatiquement opératoires lorsque sont actionnés des moyens d'immobilisation (341₁, 341₂) du ou des porte-matières, prévus en partie haute de l'enceinte (310).

27. Installation selon l'une quelconque des revendications 24 à 26, caractérisée en ce que les canaux (370, 371) longitudinaux qui règnent dans le fond de la cuve au voisinage du conduit médian (323) sont des canaux latéraux limités par le fond de la cuve (310) et/ou un berceau qui en est solidaire et par lequel il repose sur le sol d'une première part, par les parois (325, 326) dudit conduit médian (323), de seconde part, et par des plaques perforées, des grilles ou analogues (380), de troisième part, lesquelles règnent entre lesdites parois (325, 326) du conduit médian et l'enceinte (310) sur la totalité ou quasi totalité de la longueur de celle-ci.

28. Installation selon l'une quelconque des revendications 24 à 27, caractérisée en ce que les canaux latéraux (370, 371) de circulation du fluide de traitement sont limités sensiblement par les parois (325, 326) du conduit médian (323), la cuve (310) et la face inférieure du ou des porte-matières (P).

29. Installation selon la revendication 24, caractérisée en ce que le conduit médian longitudinal (323) de circulation du fluide dans un sens est à section droite en forme de segment circulaire (figure 45c) et en ce que la circulation du fluide dans l'autre sens a lieu au-dessus dudit conduit médian.

30. Installation selon l'une quelconque des revendications 24 à 29, caractérisée en ce que les moyens de mise en mouvement du fluide de traitement comme une turbine (31), un échangeur de chaleur (321), et les moyens de tubulures (317, 319, 320) qui leur sont associés sont placés latéralement par rapport à la cuve, celle-ci comportant alors avantageusement une porte (315a, 315b) d'entrée et de sortie des porte-matières (P) à chacune de ses extrémités longitudinales.

31. Installation selon l'une quelconque des revendications 24 à 30, caractérisée en ce que les canaux latéraux (370, 371) sont adjacents à et communiquent avec des chambres (386, 387) ménagées dans un chassis (385) par lequel la cuve repose sur le sol (S).

32. Installation selon l'une quelconque des revendications précédentes, caractérisée en ce que les moyens d'immobilisation (341) des porte-matières (P) en leur intérieur comportent chacun un plateau (460) de forme et dimensions conjuguées des porte-matières (P) que l'installation est susceptible de recevoir et/ou des modules (440,...) destinés à équiper lesdits porte-matières (P), les plateaux (460) d'immobilisation des porte-matières assurant également, en position opératoire, le serrage et l'étanchéité des bobines ou analogues (B) portées par les modules (440) avec lesquels ils coopèrent.

33. Installation selon l'une quelconque des revendications 24 à 32, caractérisée en ce que, pour le traitement de bobines (B) de fils ou analogues, chaque module de manutention est muni de moyens (443) de maintien des piles de bobines auxquels sont associés des chapeaux (446) de serrage et d'étanchéité desdites piles, réunis entre eux suivant un dispositif du type "araignée" propre à être fixé en partie haute desdits moyens de maintien de piles.

34. Installation selon l'une quelconque des revendications 24 à 33, caractérisée en ce qu'elle comprend, pour la liaison du conduit (323) aux portematières (P) des raccords mobiles (480) montés à étanchéité dans ledit conduit avec lequel ils communiquent et propres à venir coopérer avec les embouts (345) solidaires desdits porte-matières (P).

35. Installation selon l'une quelconque des revendications précédentes, caractérisée en ce qu'elle comprend des corps-morts latéraux, en matériau alvéolaire, d'un bloc ou à évidements et dont les faces planes en regard parallèles au plan médian vertical et à une distance l'une de l'autre légèrement supérieure à la largeur des porte-matières (P) ou analogues que l'installation est destinée à recevoir sont traitées pour résister aux températures et pressions régnant dans la cuve dont ils assurent, simultanément, l'isolation thermique par l'intérieur.

36. Porte-matière propre à être utilisé dans une installation de traitement au mouillé de matières textiles selon l'une quelconque des revendications précédentes comprenant une embase (50) à contour rectangulaire, caractérisé en ce que ladite embase est un caisson à fond plein (51) percé d'au moins une ouverture (52, 53) sur sa périphérie et/ou son fond pour l'entrée ou la sortie de fluide de traitement.

37. Porte-matière selon la revendication 36, caractérisé en ce qu'il présente sur les bords longitudinaux de son fond (51) des chemins de roulement (62, 63) propres à coopérer avec des moyens conjugués (64) ménagés sur le plancher (15) de la cuve (10) pour l'introduction et/ou l'extraction des porte-matières (PM) dans et/ou hors de ladite cuve ou dudit autoclave.

38. Porte-matière selon l'une des revendications 364 ou 37, caractérisé en ce qu'il comprend des moyens pour le support de bobines disposées en rangées verticales ou horizontales, ainsi que pour l'amenée et/ou le retour de fluide de traitement auxdites bobines (B, BH).

39. Porte-matière selon l'une des revendications 36 ou 37, caractérisé en ce qu'il comprend des moyens pour le support de bourre (BO) ou de câble (figures 10-10B).

40. Porte-matière selon l'une des revendications 36 ou 37, caractérisé en ce qu'il comprend des moyens pour le support d'écheveaux (EC) sur des bâtons rectilignes (ba).

41. Porte-matière selon l'une des revendications 36 à 40, caractérisé en ce qu'il comporte un corps mort solidaire de son caisson.

42. Porte-matière selon la revendication 41, caractérisé en ce que le corps mort est fermé et résistant à la pression.

43. Ensemble de porte-matière et de module, notamment pour le traitement dans une installation selon l'une quelconque des revendications 1 à 35 de bobines (B) de fils, filés ou analogues, caractérisé en ce que le porte-matière (P) comprend uniquement un caisson de répartition de bain (340) auquel est associé un embout (345) de liaison dudit caisson au conduit médian (323) de la cuve et en ce que le module associé au porte-matière comprend des moyens de maintien de bobines (443) dont certains au moins sont conformés à leurs extrémités libres, le cas échéant, suivant des gorges (445) de fixation des chapeaux de serrage et d'étanchéité (416) à l'aide de bagues élastiques ou analogues (447).

44. Porte-ensouple propre à être utilisé dans une installation selon l'une des revendications 1 à 35, caractérisé en ce qu'il est à section droite quadrangulaire, avantageusement carré ou rectangulaire, pour servir de support à une ou plusieurs ensouple(s) de tissu destinée(s) à être traitée(s) au mouillé dans ladite installation (figures 12A ; 19 ; 32A).

Claims
Claims for the following Contracting States :
BE, CH, DE, ES, FR, GB, IT, LI

1. Installation for the wet treatment of textile materials arranged on material supports (PM) comprising a tank (10; 100, 200,...) with a substantially horizontal axis, at least one end of which is provided with an entrance and exit door (11, 11A, 201, ...) for at least one material support on which the textile materials to be treated (Bb; Bo; Ru; Ec) are loaded, with at least one unit (36, 111) for setting in motion, through said materials by means of a pump, turbine (37) or similar, a treatment fluid flowing in a closed loop and, where appropriate, a heat exchanger (40) inserted in said loop with an encased base (50) for each material support, this base having at least one opening (52) communicating with an opening of an adjacent material support or with a first tube (38, 39) of the unit for setting the fluid in motion, which opens into a treatment volume for establishing a first fluid flow path in one direction, the flow of said in the other direction taking place along a second path which comprises at least a second tube (39, 38) of said unit also opening into said volume defined laterally by walls (13, 14; 202, 203; 375, 376), extending between the floor (15) and the arch (16) of the tank (10; 100, 200, ...), characterized in that said first tube (38) and at least said second tube (39) each open into said volume via one or more passages (42, 43, 44) formed in the vicinity of the floor of the tank, at least one of said passages being provided in the vicinity of the longitudinal end of the tank (10, 100,...) opposite that exhibiting the entrance and exit door (11, 11a, 201,...) for the material holder(s).

2. Installation according to claim 1, characterized in that the passages (220, 235a, 236a) are formed in a wall (222) at the longitudinal end of the tank (200) opposite that exhibiting the entrance and exit door (201) for the material support(s) (PM) and in the lateral walls (202, 203) of the tank.

3. Installation according to claim 1, characterized in that the passages (220, 235, 236) are formed in a wall (222) at the longitudinal end of the tank (200), opposite that exhibiting the entrance and exit door (201) for the material support(s) (PM), and in the floor of the tank.

4. Installation according to claim 1, characterized in that the passages (365, 366) are formed in the floor and in the side walls (364) of the tank (310).

5. Installation according to claim 1, characterized in that said tank (10...) is of a general parallelepipedic shape, with a quadrangular cross section and with an area similar to that of the loaded material supports (PM1'' PM2), so that the bath ratio used in such an installation is extremely low.

6. Installation according to any one of the preceding claims, characterized in that the tank (200) is used as an autoclave, the treatment taking place under static pressure, of compressed air or inert gas introduced by appropriate means (ga).

7. Installation according to one of claims 2 or 3, characterized in that in the case of a plurality of passages for at least said second tube (235, 236; 235a, 236a), they are disposed with at least one pair placed in at least one transverse plane of the tank (200).

8. Installation according to claim 7, characterized in that the pairs of passages are disposed evenly along the tank, in the vicinity of the front door (201), substantially in the middle of the tank and in the vicinity of the rear wall (222).

9. Installation according to any one of the preceding claims, characterized in that the textile material to be treated is in the form of at least one beam (E) and in that dummy elements (247, 250) are placed in the tank (200) in the vicinity of said beam, between the latter and the walls of the tank.

10. Installation according to any one of claims 1 to 8, characterized in that the textile materials to be treated are bobbins (B, b) of waste or cable (Bo) or worsted ribbons (Ru) or skeins (EC) disposed vertically or horizontally and in that in the case of bobbins (B, b) they are carried by bayonets or clarinets integral with a box arranged horizontally or vertically in the tank (200) or with a return portion of the encased base of the material support (PM), this return portion being also disposed vertically.

11. Installation according to any one of the preceding claims, characterized in that the passages (235, 236; 235a, 236) are connected to at least said second tube (210) by one or more ducts (241, 242) disposed at least partially under the tank or laterally in relation to it.

12. Installation according to claim 5, characterized in that the tank (10) is lined with stiffeners (20, 21) and if required with reinforcements (22, 23,...), the bottom part of the stiffeners or of some of them serving as a support for the tank on the ground.

13. Installation according to claim 12, characterized in that it comprises, at the upper part of the tank (10), a bath preparation container (35) connected operationally to the tank (10) by pipes, tubes, valves, pumps and similar (35a) and which rests on the tank (10) via at least some of said stiffeners (30) and reinforcements (31).

14. Installation according to one of claims 12 or 13, characterized in that the horizontal floor (15) of the tank (10) is provided with rolling means (64) with which two tracks (62, 63) formed on the solid bottom (51) of the material supports (PM) are able to cooperate during insertion and/or removal thereof into and/or out of the tank (10).

15. Installation according to one of claims 12 to 14, characterized in that the entrance and exit door (11) for the material supports (PM) is of the swivel (11a) or sash type and in that a handle (45) or handwheel (45a) device is associated with said door for locking the material supports (PM) in the tank (10) and guaranteeing sealed continuity of the fluid flow paths.

16. Installation according to one of claims 12 to 15, characterized in that the tank (100) has two end doors (101, 102) and in that at least one device (104) with a handle (105) is associated with said tank for locking the material supports (PM) in the tank (100) and guaranteeing the sealed continuity of the fluid flow paths.

17. Installation according to one of claims 12 to 16, characterized in that one or more deflector plates (70), directed towards the floor (15) of the tank and intended to prevent the dynamic pressure of the fluid set in motion by the pump, turbine or similar (37) of the unit for setting the fluid in motion (36, 111), from damaging the materials arranged in the vicinity of said tubes in the tank, is or are associated with the tube(s) not communicating with the openings of the material supports.

18. Installation according to claim 17, characterized in that the tank (10) has, in the vicinity of its end opposite that exhibiting the entrance and exit door (11) for the material supports (PM), a substantially vertical partition (71) separated from the front end wall (12) of the tank (10) and a substantially horizontal wall (71a) above said deflector plates between the partition (71) and said front wall (12).

19. Installation according to claim 18, characterized in that said substantially vertical partition (71) has a height less than that of the tank and in that, in the space (72) defined by said partition (71) and which is not that containing the material supports (PM), a pump or similar is provided for recovering the bath (73).

20. Installation according to any one of claims 12 to 19, characterized in that a third tube (114), opening into the tank opposite a beam support tube (T) suitable for the installation, is associated with the unit for setting the fluid in motion (111), the installation also comprising valves (118, 119) for establishing the path of the fluid appropriate for the textile materials being treated from the turbine or similar which the unit (111) comprises.

21. Installation according to any one of claims 12 to 20, characterized in that its floor (15) is provided with duct means (87) promoting the distribution and/or recovery of the treatment fluid.

22. Installation according to any one of claims 1 to 21, characterized in that the tank (310) comprises, for fluid flow in one direction, a median longitudinal duct (323) to which the material supports ($P_1$, $P_2$) housed in the tank may be connected and which are located substantially in the median plane and in the bottom thereof and in that, for fluid flow in the other direction, it comprises at least one and preferably two longitudinal channels (370, 371) which extend also in the tank in the vicinity of said median duct (323).

23. Installation according to claim 22, characterized in that provision is also made for connection of the median longitudinal duct to the material support(s), for the passage of the treatment fluid, to be made from one or advantageously several openings (331, 332) formed in a wall defining said duct and to which may be connected, with the insertion of sealing means (342, 343), connecting end pieces (345, 346) provided on each box or similar (340) for distributing the treatment fluid associated with a material support (P).

24. Installation according to one of claims 22 or 23, characterized in that the sealing means (342, 343) are made automatically operative when means ($341_1$, $341_2$) are actuated for locking the material support(s) provided in the top part of the enclosure (310).

25. Installation according to one of claims 22 to 24, characterized in that the longitudinal channels (370, 371) which extend in the bottom of the tank in the vicinity of the median duct (323) are lateral channels defined firstly by the bottom of the tank (310) and/or a cradle integral therewith by means of which it rests on the ground, secondly by the walls (325, 326) of said median duct (323)and thirdly by perforated plates, grids or similar (380) which extend between said walls (325, 326) of the median duct and the enclosure (310) over the whole or substantially the whole of the length thereof.

26. Installation according to any one of claims 22 to 25, characterized in that the lateral channels (370, 371) for the flow of treatment fluid are defined substantially by the walls (325, 326) of the median duct (323), the tank (310) and the lower face of the material support(s) (P).

27. Installation according to claim 22, characterized in that the median longitudinal duct (323) for fluid flow in one direction has a cross section in the form of a circular segment (figure 45C) and in that fluid flow in the other direction takes place above said median duct.

28. Installation according to any one of claims 22 to 27, characterized in that the means for setting the treatment fluid in motion such as a turbine (31), a heat exchanger (321) and the tube means (317, 319, 320) which are associated therewith are placed laterally with respect to the tank, the latter then advantageously comprising an entrance and exit door (315a, 315b) for the material supports (P) at each of its longitudinal ends.

29. Installation according to one of claims 22 to 28, characterized in that the lateral channels (370, 371) are adjacent to and communicate with chambers (386, 387) formed in a frame (385) by means of which the tank rests on the ground (S).

30. Installation according to any one of the preceding claims, characterized in that the means (341) for locking the material supports (P) thereinside each comprise a plate (460) having a shape and dimensions mating with the material supports (P) which the installation is able to receive and/or modules (440, ...) intended to equip said material supports (P), the plates (460) for locking the material supports, when in the operating position, lock and seal the bobbins or similar (B) carried by the modules (440) with which they cooperate.

31. Installation according to any one of claims 22 to 30, characterized in that, for the treatment of bobbins (B) of threads or the like, each handling module is provided with means (443), for holding in position the stacks of bobbins with which caps (446) are associated for clamping and sealing said stacks, which are interconnected by a device of the "spider" type capable of being fixed in the top part of said stack holding means.

32. Installation according to any one of claims 22 to 31, characterized in that it comprises, for connecting the duct (323) to the material supports (P), mobile connectors (480) mounted sealingly in said duct with which they communicate and capable of cooperating with the end pieces (345) integral with said material supports (P).

33. Installation according to any one of the preceding claims, characterized in that it comprises lateral dummy elements, made from a honeycomb material, in the form of a block or with recesses, and whose opposing flat faces, parallel to the vertical median plane and separated by a distance slightly greater than the width of the material supports (P) or similar, which the installation is intended to receive, are treated for withstanding the temperatures and pressures prevailing in the tank whose thermal insulation they provide simultaneously from the inside.

34. Material support capable of being used in an installation for the wet treatment of textile materials according to any one of the preceding claims, comprising a base (50) with a rectangular contour, characterized in that said base is a box with solid bottom (51) formed with at least one opening (52, 53) on its periphery and/or its bottom for the inlet and outlet of treatment fluid.

35. Material support according to claim 34, characterized in that, on the longitudinal edges of its bottom (51) it comprises rolling tracks (62, 63) capable of cooperating with mating means (64) formed on the floor (15) of the tank (10) for inserting and/or removing the material supports (PM) into and/or out of said tank or said autoclave.

36. Material support according to one of claims 34 or 35, characterized in that it comprises means for supporting bobbins disposed in vertical or horizontal rows, as well as for the supply and/or return of treatment fluid to or from said bobbins (B, BH).

**37.** Material support according to one of claims 34 or 35, characterized in that it comprises means for supporting waste (BO) or cable (figures 10-10B).

**38.** Material support according to one of claims 34 or 35, characterized in that it comprises means for supporting skeins (EC) on rectilinear bars (ba).

**39.** Material support according to one of claims 34 to 38, characterized in that it comprises a dummy element integral with its box or case.

**40.** Material support according to claim 39, characterized in that the dummy element is closed and pressure resistant.

**41.** Material support and module assembly, particularly for the treatment, in an installation according to any one of claims 1 to 33, of bobbins (B) of threads, yarns or the like, characterized in that the material support (P) comprises only one bath distribution box (340) with which an end piece (345) for connecting said box to the median duct (323) of the tank is associated and in that the module associated with the material support comprises means for holding the bobbins (443) in position, some at least of which are formed at their free ends, as appropriate, with grooves (445) for fixing clamping and sealing caps (416) by means of elastic rings or the like (447).

**42.** Beam support capable of being used in an installation according to one of claims 1 to 33, characterized in that it has a quadrangular cross section, advantageously square or rectangular, for serving as a support for one or more beams of fabric to be wet treated in said installation (figures 12A; 19; 32A).

**Claims for the following Contracting States : GR, SE**

**1.** Installation for the wet treatment of textile materials arranged on material supports ($PM_1$, $PM_2$; $P_1$, $P_2$,...) comprising a tank (10; 100, 200,...) with a substantially horizontal axis, at least one end of which is provided with an entrance and exit door (11, 11A, 201, ...) for at least one material support on which the textile materials to be treated (Bb; Bo; Ru; Ec) are loaded, with at least one unit (36, 111) for setting in motion, through said materials by means of a pump, turbine (37) or similar, a treatment fluid flowing in a closed loop and, where appropriate, a heat exchanger (40) inserted in said loop with an encased base (50) for each material support, this base having at least one opening (52) communicating with an opening of an adjacent material support or with a first tube (38, 39) of the unit for setting the fluid in motion, which discharges into a treatment volume for establishing a first flow path in one direction, flow of said in the other direction taking place along a second path which comprises at least a second tube (39, 38) of said unit also discharging into said volume, characterized in that the latter is defined laterally by walls (13, 14; 202, 203; 375, 376), provided between the floor (15) and the arch (16) of the tank (10; 100, 200, ...) and in that said first tube (38) and at least said second tube (39) each open into said volume via one or more passages (42, 43, 44) formed in the vicinity of the floor of the tank.

**2.** Installation according to claim 1, characterized in that the passages (42, 43, 44; 220, 241', 242',...) are formed at the longitudinal end of the tank (10, 100,...) opposite that exhibiting the entrance and exit door (11, 11A, 201,...) for the material support(s).

**3.** Installation according to claim 1, characterized in that the passages (220, 235a, 236a) are formed in a wall (222) at the longitudinal end of the tank (200), opposite that exhibiting the entrance and exit door (201) for the material support(s) (PM), and in the lateral walls (202, 203) of the tank.

**4.** Installation according to claim 1, characterized in that the passages (220, 235, 236) are formed in one wall (222) at the longitudinal end of the tank (200), opposite the end exhibiting the entrance and exit door (201) of the material support(s) (PM) and in the floor of the tank.

**5.** Installation according to claim 1, characterized in that the passages are formed in the floor only of the tank.

**6.** Installation according to claim 1, characterized in that the passages (365, 366) are formed in the floor and the side walls (364) of the tank 310).

**7.** Installation according to claim 1, characterized in that said tank (110) is of a general parallelepipedic shape, with a quadrangular cross section and with an area similar to that of the loaded material supports (PM1, $PM_2$), so that the bath ratio used in such an installation is extremely low.

8. Installation according to any one of the preceding claims, characterized in that the tank (200) is used as an autoclave, the treatment taking place under static pressure, of compressed air or inert gas introduced by appropriate means (ga).

9. Installation according to one of claims 3 or 4, characterized in that in the case of a plurality of passages for at least said second tube (235, 236; 235a, 236a), they are disposed with at least one pair placed in at least one transverse plane of the tank (200).

10. Installation according to claim 9, characterized in that the pairs of passages are disposed evenly along the tank, in the vicinity of the front door (201), substantially in the middle of the tank and in the vicinity of the rear wall (222).

11. Installation according to any one of the preceding claims, characterized in that the textile material to be treated is in the form of at least one beam (E) and in that dummy elements (247, 250) are placed in the tank (200) in the vicinity of said beam, between the latter and the walls of the tank.

12. Installation according to any one of claims 1 to 10, characterized in that the textile materials to be treated are bobbins (B, b) of waste or cable (Bo) or worsted ribbons (Ru) or skeins (EC) disposed vertically or horizontally and in that in the case of bobbins (B, b) they are carried by bayonets or clarinets integral with a box arranged horizontally or vertically in the tank (200) or with a return portion of the encased base of the material support (PM), this return portion being also disposed vertically.

13. Installation according to any one of the preceding claims, characterized in that the passages (235, 236; 235a, 236) are connected to at least said second tube (210) by one or more ducts (241, 242) disposed at least partially under the tank or laterally in relation to it.

14. Installation according to claim 7, characterized in that the tank (10) is lined with stiffeners (20, 21) and if required with reinforcements (22, 23,...), the bottom part of the stiffeners or of some of them serving as a support for the tank on the ground.

15. Installation according to claim 14, characterized in that it comprises, at the upper part of the tank (10), a bath preparation container (35) connected operationally to the tank (10) by pipes, tubes, valves, pumps and similar (35A) and which rests on the tank (10) via at least some of said stiffeners (30) and reinforcements (31).

16. Installation according to one of claims 14 or 15, characterized in that the horizontal floor (15) of the tank (10) is provided with rolling means (64) with which two tracks (62, 63) formed on the solid bottom (51) of the material supports (PM) are able to cooperate during insertion and/or removal thereof into and/or out of the tank (10).

17. Installation according to one of claims 14 to 16, characterized in that the entrance and exit door (11) for the material supports (PM) is of the swivel (11A) or sash type and in that a handle (45) or handwheel (45A) device is associated with said door for locking the material supports (PM) in the tank (10) and guaranteeing sealed continuity of the fluid flow paths.

18. Installation according to one of claims 14 to 17, characterized in that the tank (100) has two end doors (101, 102) and in that at least one device (104) with a handle (105) is associated with said tank for locking the material supports (PM) in the tank (100) and guaranteeing the sealed continuity of the fluid flow paths.

19. Installation according to one of claims 14 to 18, characterized in that one or more deflector plates (70), directed towards the floor (15) of the tank and intended to prevent the dynamic pressure of the fluid set in motion by the pump, turbine or similar (37) of the unit for setting the fluid in motion (36, 111), from damaging the materials arranged in the vicinity of said tubes in the tank, is or are associated with the tube(s) not communicating with the openings of the material supports.

20. Installation according to claim 19, characterized in that the tank (10) has, in the vicinity of its end opposite that exhibiting the entrance and exit door (11) for the material supports (PM), a substantially vertical partition (71) separated from the front end wall (12) of the tank (10) and a substantially horizontal wall (71A) above said deflector plates between the partition (71) and said front wall (12).

21. Installation according to claim 20, characterized in that said substantially vertical partition (71) has a height less than that of the tank and in that, in the space (72) defined by said partition (71) and which is not that containing the material supports (PM), a pump or similar is provided for recovering the bath (73).

22. Installation according to one of claims 14 to 21, characterized in that a third tube (114), opening into the tank opposite a beam support tube (T) suitable for the installation, is associated with the unit for setting the fluid in motion (111), the installation also comprising valves (118, 119) for establishing the path of the fluid appropriate for the textile materials being treated from the turbine or similar which the unit (111) comprises.

23. Installation according to one of claims 14 to 22, characterized in that its floor (15) is provided with duct means (87) promoting the distribution and/or recovery of the treatment fluid.

24. Installation according to one of claims 1 to 23, characterized in that the tank (310) comprises, for fluid flow in one direction, a median longitudinal duct (323) to which the material supports ($P_1$, $P_2$) housed in the tank may be connected and which are located substantially in the median plane and in the bottom thereof and in that, for fluid flow in the other direction, it comprises at least one and preferably two longitudinal channels (370, 371) which extend in the tank in the vicinity of said median duct (323).

25. Installation according to claim 24, characterized in that provision is also made for connection of the median longitudinal duct to the material support(s), for the passage of the treatment fluid, to be made from one or advantageously several openings (331, 332) formed in a wall defining said duct and to which may be connected, with the insertion of sealing means (342, 343), connecting end pieces (345, 346) provided on each box or similar (340) for distributing the treatment fluid associated with a material support (P).

26. Installation according to one of claims 24 or 25, characterized in that the sealing means (342, 343) are made automatically operative when means ($341_1$, $341_2$) are actuated for locking the material support(s) provided in the top part of the enclosure (310).

27. Installation according to one of claims 24 to 26, characterized in that the longitudinal channels (370, 371) which extend in the bottom of the tank in the vicinity of the median duct (323) are lateral channels defined firstly by the bottom of the tank (310) and/or a cradle integral therewith by means of which it rests on the ground, secondly by the walls (325, 326) of said median duct (323) and thirdly by perforated plates, grids or similar (380) which extend between said walls (325, 326) of the median duct and the enclosure (310) over the whole or substantially the whole of the length thereof.

28. Installation according to one of claims 24 to 27, characterized in that the lateral channels (370, 371) for the flow of treatment fluid are defined substantially by the walls (325, 326) of the median duct (323), the tank (310) and the lower face of the material support (P).

29. Installation according to claim 24, characterized in that the median longitudinal duct (323) for fluid flow in one direction has a cross section in the form of a circular segment (figure 45c) and in that fluid flow in the other direction takes place above said median duct.

30. Installation according to one of claims 24 to 29, characterized in that the means for setting the treatment fluid in motion such as a turbine (31), a heat exchanger (321) and the tube means (317, 319, 320) which are associated therewith are placed laterally with respect to the tank, the latter then advantageously comprising an entrance and exit door (315a, 315b) for the material supports (P) at each of its longitudinal ends.

31. Installation according to one of claims 24 to 30, characterized in that the lateral channels (370, 371) are adjacent to and communicate with chambers (386, 387) formed in a frame (385) by means of which the tank rests on the ground (S).

32. Installation according to any one of the preceding claims, characterized in that the means (341) for locking the material supports (P) thereinside each comprise a plate (460) having a shape and dimensions mating with the material supports (P) which the installation is able to receive and/or modules (440, ...) intended to equip said material supports (P), the plates (460) for locking the material supports, when in the operating position, lock and seal the bobbins or similar (B) carried by the modules (440) with which they cooperate.

33. Installation according to one of claims 24 to 32, characterized in that, for the treatment of bobbins (B) of threads or the like, each handling module is provided with means (443), for holding in position the stacks of bobbins with which caps (446) are associated for clamping and sealing said stacks, which are interconnected by a device of the "spider" type capable of being fixed in the top part of said stack holding means.

34. Installation according to one of claims 24 to 33, characterized in that it comprises, for connecting the duct (323) to the material supports (P), mobile connectors (480) mounted sealingly in said duct with which they communicate and capable of cooperating with the end pieces (345) integral with said material supports (P).

35. Installation according to any one of the preceding claims, characterized in that it comprises lateral dummy elements, made from a honeycomb material, in the form of a block or with recesses, and whose opposing flat faces, parallel to the vertical median plane and separated by a distance slightly greater than the width of the material supports (P) or similar, which the installation is intended to receive, are treated for withstanding the temperatures and pressures prevailing in the tank whose thermal insulation they provide simultaneously from the inside.

36. Material support capable of being used in an installation for the wet treatment of textile materials according to any one of the preceding claims, comprising a base (50) with a rectangular contour, characterized in that said base is a box with solid bottom (51) formed with at least one opening (52, 53) on its periphery and/or its bottom for the inlet and outlet of treatment fluid.

37. Material support according to claim 36, characterized in that, on the longitudinal edges of its bottom (51) it comprises rolling tracks (62, 63) capable of cooperating with mating means (64) formed on the floor (15) of the tank (10) for inserting and/or removing the material supports (PM) into and/or out of said tank or said autoclave.

38. Material support according to one of claims 36 or 37, characterized in that it comprises means for supporting bobbins disposed in vertical or horizontal rows, as well as for the supply and/or return of treatment fluid to or from said bobbins (B, BH).

39. Material support according to one of claims 36 or 37, characterized in that it comprises means for supporting waste (BO) or cable (figures 10-10B).

40. Material support according to one of claims 36 or 37, characterized in that it comprises means for supporting skeins (EC) on rectilinear bars (ba).

41. Material support according to one of claims 36 to 40, characterized in that it comprises a dummy element integral with its box or case.

42. Material support according to claim 41, characterized in that the dummy element is closed and pressure resistant.

43. Material support and module assembly, particularly for the treatment, in an installation according to any one of claims 1 to 35, of bobbins (B) of threads, yarns or the like, characterized in that the material support (P) comprises only one bath distribution box (340) with which an end piece (345) for connecting said box to the median duct (323) of the tank is associated and in that the module associated with the material support comprises means for holding the bobbins (443) in position, some at least of which are formed at their free ends, as appropriate, with grooves (445) for fixing clamping and sealing caps (416) by means of elastic rings or the like (447).

44. Beam support capable of being used in an installation according to one of claims 1 to 35, characterized in that it has a quadrangular cross section, advantageously square or rectangular, for serving as a support for one or more beams of fabric to be wet treated in said installation (figures 12A; 19; 32A).

**Patentansprüche**
**Patentansprüche für folgende Vertragsstaaten : BE, CH, DE, ES, FR, GB, IT, LI**

1. Einrichtung zum nassen Behandeln von auf Materialträgern (PM) angebrachten Fasergütern, die aufweist: einen Behälter (10; 100, 200, ...) mit einer im wesentlichen horizontalen Achse, bei dem zumindest ein Ende mit einer Eingangs- und Ausgangstür (11, 11A, 201 ...) zumindest für einen Materialträger versehen ist, auf welchem die zu behandelnden Fasergüter (Bb; Bo; Ru; Ec) aufgebracht sind, mit zumindest einer Einrichtung (36, 111) zum Bewegen eines Behandlungsfluids durch die Güter mittels einer Pumpe, Turbine (37) oder Entsprechenden das in einer geschlossenen Schleife zirkuliert, und gegebenenfalls mit einem Wärmetauscher (40), der in der Schleife mit einem Kammerunterteil (50) für jeden Materialträger eingeschaltet ist, der mit zumindest einer Verbindungsöffnung (52) zu einer Öffnung eines benachbarten Materialträgers oder einer Verbindung zu einem ersten Anschlußrohr (38, 39) der Einrichtung zum Bewegen des Fluids versehen ist, das in einen Behandlungsraum mündet, um einen ersten Zirkulationsweg des Fluids in eine Richtung einzurichten, wobei die Zirkulation des Fluids in die andere Richtung entlang eines zweiten Weges erfolgt, der zumindest ein zweites Anschlußrohr (39, 38) der Einrichtung aufweist, das ebenfalls in den Raum mündet, der seitlich von Wänden (13, 14; 202, 203; 375, 376) begrenzt ist, die sich zwischen dem Boden (15) und dem Dach (16) des Behälters (10; 100, 200...) erstrecken, dadurch gekennzeichnet, daß jedes, das erste Anschlußrohr (38) und zumindest das zweite Anschlußrohr (39) durch einen Durchlaß oder Durchlässe (42, 43, 44) in den Raum mündet, der (die) in der Umgebung des Bodens des Behälters angeordnet ist (sind), wobei zumindest einer der Durchlässe in der Umgebung des longitudinalen Endes des Behälters (10, 100, ...) vorgesehen ist, das jenem, die Eingangs- und Ausgangstür (11, 11A, 201, ...) des oder der Materialträger aufweisenden gegenüberliegt.

2. Einrichtung nach Anspruch 1, dadurch gekennzeichnet, daß die Durchlässe (220, 235a, 236a) in einer Wand (222) an dem longitudinalen Ende des Behälters (200), das jenem, die Eingangs- und Ausgangstür (201) des Materialträgers oder der Materialträger (PM) aufweisenden gegenüberliegt und in den seitlichen Wänden (202, 203) des Behälters angeordnet sind.

3. Einrichtung nach Anspruch 1, dadurch gekennzeichnet, daß die Durchlässe (220, 235, 236) in einer Wand (222) an dem longitudinalen Ende des Behälters (200), das jenem, die Eingangs- und Ausgangstür (201) des oder der Materialträger (PM) aufweisenden gegenüberliegt und in dem Boden des Behälters angeordnet sind.

4. Einrichtung nach Anspruch 1, dadurch gekennzeichnet, daß die Durchlässe (365, 366) in dem Boden und den seitlichen Wänden (364) des Behälters (310) angeordnet sind.

5. Einrichtung nach Anspruch 1, dadurch gekennzeichnet, daß der Behälter (10...) eine parallelepipedartige allgemeine Form mit viereckigem Querschnitt und einer Querschnittsfläche aufweist, die sich von jener der belegten Materialträger (PM₁ PM₂) ein wenig so unterscheidet, daß das in einer solchen Einrichtung verwendete Flottenverhältnis äußerst klein ist.

6. Einrichtung nach irgendeinem der vorgehenden Ansprüche, dadurch gekennzeichnet, daß der Behälter (200) als ein Autoklav verwendet wird, wobei die Behandlung unter statischem Druck von Druckluft oder eines Inertgases erfolgt, das durch geeignete Mittel (ga) eingeleitet ist.

7. Einrichtung nach einem der Ansprüche 2 oder 3, dadurch gekennzeichnet, daß in dem Falle einer Mehrzahl von Durchlässen für zumindest das zweite Anschlußrohr (235, 236; 235a, 236a) diese entsprechend zumindest einem Paar angeordnet sind, das in zumindest einer transversalen Ebene des Behälters (200) liegt.

8. Einrichtung nach Anspruch 7, dadurch gekennzeichnet, daß die Paare von Durchlässen regelmäßig entlang des Behälters in der Umgebung der Vordertür (201), im wesentlichen in der Mitte des Behälters und in der Umgebung der Hinterwand (222) angeordnet sind.

9. Einrichtung nach irgendeinem der vorgehenden Ansprüche, dadurch gekennzeichnet, daß das zu behandelnde Fasermaterial in Form von zumindest einem Baum (E) ist und daß Bojenkörper (247-250) in dem Behälter (200) in der Umgebung des Baumes zwischen diesem und den Wänden des Behälters liegen.

10. Einrichtung nach irgendeinem der Ansprüche 1 bis 8, dadurch gekennzeichnet, daß die zu behandelnden Fasergüter Rollen (B, b), für Abgänge oder für ein Seil (Bo) oder Kammzüge (Ru) oder Garnsträhnen (EC) sind, die vertikal oder horizontal angeordnet sind und daß in dem Falle von Rollen (B, b) diese von Bajonetten oder Klarinett-Teilen getragen werden, die mit einer Kammer, die horizontal oder vertikal in dem Behälter (200) angeordnet ist oder mit einem Rücklauf des Kammerunterteils der Materialträger (PM) verbunden sind, wobei auch der Rücklauf selbst vertikal angeordnet ist.

11. Einrichtung nach irgendeinem der vorgehenden Ansprüche, dadurch gekennzeichnet, daß die Durchlässe (235, 236; 235a, 236a) mit zumindest dem zweiten Anschlußrohr (210) durch eine Leitung oder Leitungen (241, 242) verbunden sind, die zumindest teilweise unter dem Behälter oder seitlich bezüglich desselben angeordnet sind.

12. Einrichtung nach Anspruch 5, dadurch gekennzeichnet, daß der Behälter (10) mit Aussteifungen (20, 21) und gegebenenfalls mit Verstärkungen (22, 23..) versehen ist, wobei der untere Teil der Aussteifungen oder gewisser unter ihnen zum Abstützen des Behälters auf dem Boden dienen.

13. Einrichtung nach Anspruch 12, dadurch gekennzeichnet, daß sie bei dem oberen Teil des Behälters (10) ein Badvorbereitungsgefäß (35) aufweist, das mit dem Behälter (10) über Leitungen, Ansatzrohre, Ventile, Pumpen und Entsprechende (35A) funktionell verbunden ist und das über zumindest gewisse der Aussteifungen (30) und Verstärkungen (31) auf dem Behälter (10) ruht.

14. Einrichtung nach einem der Ansprüche 12 oder 13, dadurch gekennzeichnet, daß der horizontale Boden (15) des Behälters (10) mit Rollmitteln (64) versehen ist, mit denen zwei auf dem vollen Boden (51) der Materialträger (PM) angeordneten Bahnen (62, 63) bei dem Einführen und/oder dem Entfernen dieser in das und/oder aus dem Behälter (10) zusammenwirken können.

15. Einrichtung nach einem der Ansprüche 12 bis 14, dadurch gekennzeichnet, daß die Eingangs- und Ausgangstür (11) der Materialträger (PM) der Dreh- (11A) oder der Fall-Art angehört und daß die Tür einer Kurbel (45)- oder Rad (45A)-Einrichtung zugeordnet ist, welche das Blockieren der Materialträger (PM) in dem Behälter (10) und die Dichtebeständigkeit der Fluidzirkulationswege gewährleisten kann.

16. Einrichtung nach einem der Ansprüche 12 bis 15, dadurch gekennzeichnet, daß der Behälter (100) zwei Endtüren (101, 102) aufweist und daß der Behälter zumindest einer Kurbel (105)-Einrichtung (104) zugeordnet ist, welche das Blockieren der Materialträger (PM) in dem Behälter (100) und die Dichtebeständigkeit der Fluidzirkulationswege gewährleisten kann.

17. Einrichtung nach einem der Ansprüche 12 bis 16, dadurch gekennzeichnet, daß dem oder den mit den Öffnungen der Materialträger nicht verbundenen Anschlußrohr(rohren) ein Ablenkblech oder Ablenkbleche (70) zugeordnet sind, das (die) gegen den Boden (15) des Behälters gerichtet und bestimmt ist (sind) zu verhindern, daß der dynamische Druck des Fluides, das durch die Pumpe, Turbine oder Entsprechendes (37) der Einrichtung (36, 111) zum Ingangbringen des Fluides die in der Umgebung der Anschlußrohre in dem Behälter angeordneten Güter beschädigt.

18. Einrichtung nach Anspruch 17, dadurch gekennzeichnet, daß der Behälter (10) in der Umgebung seines Endes, das jenem, die Eingangs- und Ausgangstür (11) der Materialträger (PM) aufweisenden gegenüberliegt, aufweist: eine im wesentlichen vertikale Trennwand (71), die von der Endstirnwand (12) des Behälters (10) entfernt liegt und eine im wesentlichen horizontale Wand (71a) über den Ablenkblechen zwischen der Trennwand (71) und der Stirnwand (12).

19. Einrichtung nach Anspruch 18, dadurch gekennzeichnet, daß die im wesentlichen vertikale Trennwand (71) eine kleinere Höhe aufweist als jene des Behälters und daß in dem Raum (72), der durch die Trennwand (71) begrenzt ist und der selbst die Materialträger (PM) nicht enthält, eine Pumpe oder Entsprechendes (73) zur Wiederaufnahme des Bades vorgesehen ist.

20. Einrichtung nach irgendeinem der Ansprüche 12 bis 19, dadurch gekennzeichnet, daß der Einrichtung (111) zum Bewegen des Fluids ein drittes Anschlußrohr (114) zugeordnet ist, das in den Behälter in einer Einführungsöffnung eines Baumträgerrohres (T) mündet, das zum Ausrüsten der Einrichtung geeignet ist, wobei diese außerdem Ventile (118, 119) aufweist, um den Weg eines für die Fasergüter geeigneten Fluids beim Behandeln von der Turbine oder Entsprechenden an festzulegen, welche die Einrichtung (111) aufweist.

21. Einrichtung nach irgendeinem der Ansprüche 12 bis 20, dadurch gekennzeichnet, daß ihr Boden (15) mit Leitungsmitteln (87) versehen ist, welche die Verteilung und/oder die Wiederaufnahme des Behandlungsfluids unterstützen.

22. Einrichtung nach irgendeinem der Ansprüche 1 bis 21, dadurch gekennzeichnet, daß der Behälter (310) eine longitudinale mittlere Leitung (323) für die Zirkulation des Fluids in eine Richtung aufweist, mit der der oder die in dem Behälter aufgenommene(n) Materialträger ($P_1$, $P_2$) verbunden werden kann (können) und dieser (diese) sich im wesentlichen in der mittleren Ebene und in dem Boden desselben erstreckt (erstrecken) und daß er zumindest einen und bevorzugt zwei longitudinale Kanäle (370, 371) für die Zirkulation des Fluids in die andere Richtung aufweist, die sich auch in dem Behälter in der Umgebung der mittleren Leitung (323) erstrecken.

23. Einrichtung nach Anspruch 22, dadurch gekennzeichnet, daß es ebenfalls vorgesehen ist, daß die Verbindung der mittleren longitudinalen Leitung mit einem oder mit Materialträgern für den Durchlauf des Behandlungsfluids von einer oder vorteilhafterweise mehreren Öffnungen (331, 332) an erfolgt, die in einer Wand angeordnet ist (sind), welche die Leitung begrenzt und mit welcher (welchen) unter Dazwischenlegen von Dichtungsmitteln (342, 343) Verbindungsansätze (345, 346) verbunden werden können, die auf jeder Kammer oder Entsprechenden (340) für eine Verteilung eines Behandlungsfluids vorgesehen sind, die einem Materialträger (P) zugeordnet ist.

24. Einrichtung nach einem der Ansprüche 22 oder 23, dadurch gekennzeichnet, daß die Dichtungsmittel (342, 343) automatisch wirksam werden, wenn Anhaltemittel ($341_1$, $341_2$) des oder der Materialträger in Betrieb gesetzt werden, die in einem oberen Teil der Umfassung (310) vorgesehen sind.

25. Einrichtung nach irgendeinem der Ansprüche 22 bis 24, dadurch gekennzeichnet, daß die longitudinalen Kanäle (370, 371), die sich in dem Boden des Behälters in der Umgebung der mittleren Leitung (323) erstrecken, seitliche Kanäle sind, die von dem Boden des Behälters (310) und/oder einem Gestell, das mit ihm verbunden ist und durch welches er auf dem Boden ruht, von einer ersten Seite, von den Wänden (325, 326) der mittleren Leitung (323) von einer zweiten Seite und von Siebplatten, Gittern oder Entsprechenden (380) von einer dritten Seite begrenzt sind, die sich zwischen den Wänden (325, 326) der mittleren Leitung und der Umfassung (310) auf der gesamten oder nahezu gänzlich der gesamten Länge derselben erstrecken.

26. Einrichtung nach irgendeinem der Ansprüche 22 bis 25, dadurch gekennzeichnet, daß die seitlichen Kanäle (370, 371) für eine Zirkulation des Behandlungsfluids im wesentlichen von den Wänden (325, 326) der mittleren Leitung (323) dem Behälter (310) und der unteren Seite des oder der Materialträger (P) begrenzt sind.

27. Einrichtung nach Anspruch 22, dadurch gekennzeichnet, daß die longitudinale mittlere Leitung (323) für eine Zirkulation des Fluids in eine Richtung einen Querschnitt in Form eines Kreissegmentes (Figur 45c) aufweist und daß die Zirkulation des Fluids in die andere Richtung über der mittleren Leitung erfolgt.

28. Einrichtung nach irgendeinem der Ansprüche 22 bis 27, dadurch gekennzeichnet, daß die Mittel zum Bewegen des Behandlungsfluids, wie eine Turbine (31), ein Wärmetauscher (321), und die Anschlußrohrmittel (317, 319, 320), die ihnen zugeordnet sind, seitlich bezüglich des Behälters angebracht sind, wobei dieser sodann vorteilhafterweise eine Eingangsund Ausgangstür (315a, 315b) der Materialträger (P) an jedem seiner longitudinalen Enden aufweist.

29. Einrichtung nach irgendeinem der Ansprüche 22 bis 28, dadurch gekennzeichnet, daß die seitlichen Kanäle (370, 371) benachbart zu Kammern (386, 387) sind und mit ihnen kommunizieren, die in einem Rahmen (385) angeordnet sind, über welchem der Behälter auf dem Boden (S) ruht.

30. Einrichtung nach irgendeinem der vorgehenden Ansprüche, dadurch gekennzeichnet, daß jedes der Anhaltemittel (341) der Materialträger (P) in ihrem Innern eine Platte (460) mit einer Form und zugeordneten Abmessungen der Materialträger (P), welche die Einrichtung aufnehmen kann und/oder der Module (440, ...) aufweist, die zum Ausrüsten der Materialträger (P) bestimmt sind, wobei die Anhalteplatten (460) der Materialträger in Betriebsstellung ebenfalls das Klemmen und die Dichtheit der Rollen oder der Entsprechenden (B) gewährleisten, die von den Modulen (440) getragen sind, mit denen sie zusammenwirken.

31. Einrichtung nach irgendeinem der Ansprüche 22 bis 30, dadurch gekennzeichnet, daß jeder Handhabungsmodul für die Behandlung von Garnrollen (B) oder Entsprechenden mit Mitteln (443) zum Halten der Rollenstapel versehen ist, denen Klemmund Dichtungskappen (446) der Stapel zugeordnet sind, die untereinander entsprechend einer Einrichtung der Art "Spinne" verbunden sind, die in einem oberen Teil der Mittel zum Halten der Stapel befestigt sein kann.

32. Einrichtung nach irgendeinem der Ansprüche 22 bis 31, dadurch gekennzeichnet, daß sie bewegliche Verbindungen (480) für die Verbindung der Leitung (323) mit den Materialträgern (P) aufweist, die in der Leitung mit der sie kommunizieren, dicht montiert sind und mit den Ansätzen (345) zusammenwirken können, die mit den Materialträgern (P) verbunden sind.

33. Einrichtung nach irgendeinem der vorgehenden Ansprüche, dadurch gekennzeichnet, daß sie seitliche Bojenkörper von einem Block oder mit Aushöhlungen aus einem Bienenwabenmaterial aufweist und deren ebenen Seiten, die zu der vertikalen mittleren Ebene parallel und in einem Abstand voneinander gegenüberliegen, der ein wenig größer ist, als die Breite der Materialträger (P) oder Entsprechenden, welche die Einrichtung bestimmt ist, aufzunehmen, behandelt sind, um Temperaturen und Drucke auszuhalten, die in dem Behälter herrschen, dessen Wärmeisolierung über das Innere sie zugleich gewährleisten.

34. Materialträger, der in einer Einrichtung zum nassen Behandeln von Fasergütern nach irgendeinem der vorgehenden Ansprüche verwendet werden kann, der einen Unterteil (50) mit rechteckigem Umriß aufweist, dadurch gekennzeichnet, daß der Unterteil eine Kammer mit vollem Boden (51) ist, der zumindest mit einer Öffnung (52, 53) an seinem Umfang und/oder seinem Boden für den Eintritt oder den Austritt eines Behandlungsfluids durchgebohrt ist.

35. Materialträger nach Anspruch 34, dadurch gekennzeichnet, daß er auf den longitudinalen Rändern seines Bodens (51) Rollbahnen (62, 63) aufweist, die mit zugeordneten Mitteln (64) zusammenwirken können, die auf dem Boden (15) des Behälters (10) angeordnet sind, um die Materialträger (PM) in den und/oder aus dem Behälter oder Autoklav einzuführen und/oder zu entfernen.

36. Materialträger nach einem der Ansprüche 34 oder 35, dadurch gekennzeichnet, daß er Mittel zum Tragen in vertikalen oder horizontalen Reihen angeordneter Rollen sowie zum Zuführen und/oder Zurückführen eines Behandlungsfluids zu den Rollen (B, BH) aufweist.

37. Materialträger nach einem der Ansprüche 34 oder 35, dadurch gekennzeichnet, daß er Mittel zum Tragen von Abgängen (BO) oder eines Seils aufweist (Figuren 10-10B).

38. Materialträger nach einem der Ansprüche 34 oder 35, dadurch gekennzeichnet, daß er Mittel zum Tragen von Garnsträhnen (EC) auf rechteckigen Stöcken (ba) aufweist.

39. Materialträger nach einem der Ansprüche 24 bis 38, dadurch gekennzeichnet, daß er einen Bojenkörper aufweist, der mit seiner Kammer verbunden ist.

40. Materialträger nach Anspruch 39, dadurch gekennzeichnet, daß der Bojenkörper geschlossen und druckfest ist.

41. Gesamtheit von einem Materialträger und einem Modul, insbesondere zum Behandeln von Rollen (B) von Garn, Webfäden oder entsprechenden in einer Einrichtung nach irgendeinem der Ansprüche 1 bis 33, dadurch gekennzeichnet, daß der Materialträger (P) nur eine Kammer (340) zum Verteilen eines Bades aufweist, der ein Verbindungsansatz (345) der Kammer zu der mittleren Leitung (323) des Behälters zugeordnet ist und daß der dem Materialträger zugeordnete Modul Mittel zum Halten von Rollen (443) aufweist, bei denen gewisse zumindest an ihren freien Enden gegebenenfalls entsprechend Befestigungshälsen (445) der Klemm- und Dichtungskappen (416) mit Hilfe elastischer Ringe oder Entsprechender (447) ausgebildet sind.

42. Baumträger, der in einer Einrichtung nach einem der Ansprüche 1 bis 33 verwendet werden kann, dadurch gekennzeichnet, daß er einen viereckigen Querschnitt, bevorzugt einen quadratischen oder einen rechteckigen aufweist, um zum Tragen eines oder mehrerer Stoffbaumes (-Bäume) zu dienen, der (die) dazu bestimmt ist (sind), daß er (sie) naß in der Einrichtung behandelt wird (werden) (Figuren 12A; 19; 32A).

**Patentansprüche für folgende Vertragsstaaten : GR, SE**

1. Einrichtung zum nassen Behandeln von auf Materialträgern (PM. PM$_1$, PM$_2$; P$_1$, P$_2$ ...) angebrachten Fasergütern, die aufweist: einen Behälter (10; 100, 200, ...) mit einer im wesentlichen horizontalen Achse, bei dem zumindest ein Ende mit einer Eingangs- und Ausgangstür (11, 11A, 201 ...) zumindest für einen Materialträger versehen ist, auf welchem die zu behandelnden Fasergüter (Bb; Bo; Ru; Ec) aufgebracht sind, mit zumindest einer Einrichtung (36, 111) zum Bewegen eines Behandlungsfluids durch die Güter mittels einer Pumpe, Turbine (37) oder Entsprechenden das in einer geschlossenen Schleife zirkuliert, und gegebenenfalls mit einem Wärmetauscher (40), der in der Schleife mit einem Kammerunterteil (50) für jeden Materialträger eingeschaltet ist, der mit zumindest einer Verbindungsöffnung (52) zu einer Öffnung eines benachbarten Materialträgers oder einer Verbindung zu einem ersten Anschlußrohr (38, 39) der Einrichtung zum Bewegen des Fluids versehen ist, das in einen Behandlungsraum mündet, um einen ersten Zirkulationsweg des Fluids in eine Richtung einzurichten, wobei die Zirkulation des Fluids in die andere Richtung entlang eines zweiten Weges erfolgt, der zumindest ein zweites Anschlußrohr (39, 38) der Einrichtung aufweist, das ebenfalls in den Raum mündet, dadurch gekennzeichnet, daß dieser letztere seitlich von Wänden (13, 14; 202, 203; 375, 376) begrenzt ist, die sich zwischen dem Boden (15) und dem Dach (16) des Behälters (10; 100, 200...) erstrecken und dadurch, daß jedes, das erste Anschlußrohr (38) und zumindest das zweite Anschlußrohr (39) durch einen Durchlaß oder Durchlässe (42, 43, 44) in den Raum mündet, der (die) in der Umgebung des Bodens des Behälters angeordnet ist (sind).

2. Einrichtung nach Anspruch 1, dadurch gekennzeichnet, daß die Durchlässe (42, 43, 44; 220, 241', 242'...) an dem longitudinalen Ende des Behälters (10, 100 ...) angeordnet sind, das jenem, die Eingangs- und Ausgangstür (11, 11A, 201...) des oder der Materialträger aufweisenden gegenüberliegt.

3. Einrichtung nach Anspruch 1, dadurch gekennzeichnet, daß die Durchlässe (220, 235a, 236a) in einer Wand (222) an dem longitudinalen Ende des Behälters (200), das jenem, die Eingangs- und Ausgangstür (201) des Materialträgers oder der Materialträger (PM) aufweisenden gegenüberliegt und in den seitlichen Wänden (202, 203) des Behälters angeordnet sind.

4. Einrichtung nach Anspruch 1, dadurch gekennzeichnet, daß die Durchlässe (220, 235, 236) in einer Wand (222) an dem longitudinalen Ende des Behälters (200), das jenem, die Eingangs- und Ausgangstür (201) des oder der Materialträger (PM) aufweisenden gegenüberliegt und in dem Boden des Behälters angeordnet sind.

5. Einrichtung nach Anspruch 1, dadurch gekennzeichnet, daß die Durchlässe nur in dem Boden des Behälters angeordnet sind.

6. Einrichtung nach Anspruch 1, dadurch gekennzeichnet, daß die Durchlässe (365, 366) in dem Boden und den lateralen Wänden (364) des Behälters (310) angeordnet sind.

7. Einrichtung nach Anspruch 1, dadurch gekennzeichnet, daß der Behälter (110) eine parallelepipedartige allgemeine Form mit viereckigem Querschnitt und einer Querschnittsfläche aufweist, die sich von jener der belegten Materialträger (PM₁ PM₂) ein wenig so unterscheidet, daß das in einer solchen Einrichtung verwendete Flottenverhältnis äußerst klein ist.

8. Einrichtung nach irgendeinem der vorgehenden Ansprüche, dadurch gekennzeichnet, daß der Behälter (200) als ein Autoklav verwendet wird, wobei die Behandlung unter statischem Druck von Druckluft oder eines Inertgases erfolgt, das durch geeignete Mittel (ga) eingeleitet ist.

9. Einrichtung nach einem der Ansprüche 3 oder 4, dadurch gekennzeichnet, daß in dem Falle einer Mehrzahl von Durchlässen für zumindest das zweite Anschlußrohr (235, 236; 235a, 236a) diese entsprechend zumindest einem Paar angeordnet sind, das in zumindest einer transversalen Ebene des Behälters (200) liegt.

10. Einrichtung nach Anspruch 9, dadurch gekennzeichnet, daß die Paare von Durchlässen regelmäßig entlang des Behälters in der Umgebung der Vordertür (201), im wesentlichen in der Mitte des Behälters und in der Umgebung der Hinterwand (222) angeordnet sind.

11. Einrichtung nach irgendeinem der vorgehenden Ansprüche, dadurch gekennzeichnet, daß das zu behandelnde Fasermaterial in Form von zumindest einem Baum (E) ist und daß Bojenkörper (247-250) in dem Behälter (200) in der Umgebung des Baumes zwischen diesem und den Wänden des Behälters liegen.

12. Einrichtung nach irgendeinem der Ansprüche 1 bis 10, dadurch gekennzeichnet, daß die zu behandelnden Fasergüter Rollen (B, b), für Abgänge oder für ein Seil (Bo) oder Kammzüge (Ru) oder Garnsträhnen (EC) sind, die vertikal oder horizontal angeordnet sind und daß in dem Falle von Rollen (B, b) diese von Bajonetten oder Klarinett-Teilen getragen werden, die mit einer Kammer, die horizontal oder vertikal in dem Behälter (200) angeordnet ist oder mit einem Rücklauf des Kammerunterteils der Materialträger (PM) verbunden sind, wobei auch der Rücklauf selbst vertikal angeordnet ist.

13. Einrichtung nach irgendeinem der vorgehenden Ansprüche, dadurch gekennzeichnet, daß die Durchlässe (235, 236; 235a, 236a) mit zumindest dem zweiten Anschlußrohr (210) durch eine Leitung oder Leitungen (241, 242) verbunden sind, die zumindest teilweise unter dem Behälter oder seitlich bezüglich desselben angeordnet sind.

14. Einrichtung nach Anspruch 7, dadurch gekennzeichnet, daß der Behälter (10) mit Aussteifungen (20, 21) und gegebenenfalls mit Verstärkungen (22, 23..) versehen ist, wobei der untere Teil der Aussteifungen oder gewisser unter ihnen zum Abstützen des Behälters auf dem Boden dienen.

15. Einrichtung nach Anspruch 14, dadurch gekennzeichnet, daß sie bei dem oberen Teil des Behälters (10) ein Badvorbereitungsgefäß (35) aufweist, das mit dem Behälter (10) über Leitungen, Ansatzrohre, Ventile, Pumpen und Entsprechende (35A) funktionell verbunden ist und das über zumindest gewisse der Aussteifungen (30) und Verstärkungen (31) auf dem Behälter (10) ruht.

16. Einrichtung nach einem der Ansprüche 14 oder 15, dadurch gekennzeichnet, daß der horizontale Boden (15) des Behälters (10) mit Rollmitteln (64) versehen ist, mit denen zwei auf dem vollen Boden (51) der Materialträger (PM) angeordneten Bahnen (62, 63) bei dem Einführen und/oder dem Entfernen dieser in das und/oder aus dem Behälter (10) zusammenwirken können.

17. Einrichtung nach einem der Ansprüche 14 bis 16, dadurch gekennzeichnet, daß die Eingangs- und Ausgangstür (11) der Materialträger (PM) der Dreh- (11A) oder der Fall-Art angehört und daß die Tür einer Kurbel (45)- oder Rad (45A)-Einrichtung zugeordnet ist, welche das Blockieren der Materialträger (PM) in dem Behälter (10) und die Dichtebeständigkeit der Fluidzirkulationswege gewährleisten kann.

18. Einrichtung nach einem der Ansprüche 14 bis 17, dadurch gekennzeichnet, daß der Behälter (100) zwei Endtüren (101, 102) aufweist und daß der Behälter zumindest einer Kurbel (105)-Einrichtung (104) zugeordnet ist, welche das Blockieren der Materialträger (PM) in dem Behälter (100) und die Dichtebeständigkeit der Fluidzirkulationswege gewährleisten kann.

19. Einrichtung nach einem der Ansprüche 14 bis 18, dadurch gekennzeichnet, daß dem oder den mit den Öffnungen der Materialträger nicht verbundenen Anschlußrohr(rohren) ein Ablenkblech oder Ablenkbleche (70) zugeordnet sind, das (die) gegen den Boden (15) des Behälters gerichtet und bestimmt ist (sind) zu verhindern, daß der dynamische Druck des Fluides, das durch die Pumpe, Turbine oder Entsprechendes (37) der Einrichtung (36, 111) zum Ingangbringen des Fluides die in der Umgebung der Anschlußrohre in dem Behälter angeordneten Güter beschädigt.

20. Einrichtung nach Anspruch 19, dadurch gekennzeichnet, daß der Behälter (10) in der Umgebung seines Endes, das jenem, die Eingangs- und Ausgangstür (11) der Materialträger (PM) aufweisenden gegenüberliegt, aufweist: eine im wesentlichen vertikale Trennwand (71), die von der Endstirnwand (12) des Behälters (10) entfernt liegt und eine im wesentlichen horizontale Wand (71a) über den Ablenkblechen zwischen der Trennwand (71) und der Stirnwand (12).

21. Einrichtung nach Anspruch 20, dadurch gekennzeichnet, daß die im wesentlichen vertikale Trennwand (71) eine kleinere Höhe aufweist als jene des Behälters und daß in dem Raum (72), der durch die Trennwand (71) begrenzt ist und der selbst die Materialträger (PM) nicht enthält, eine Pumpe oder Entsprechendes (73) zur Wiederaufnahme des Bades vorgesehen ist.

22. Einrichtung nach irgendeinem der Ansprüche 14 bis 21, dadurch gekennzeichnet, daß der Einrichtung (111) zum Bewegen des Fluids ein drittes Anschlußrohr (114) zugeordnet ist, das in den Behälter in einer Einführungsöffnung eines Baumträgerrohres (T) mündet, das zum Ausrüsten der Einrichtung geeignet ist, wobei diese außerdem Ventile (118, 119) aufweist, um den Weg eines für die Fasergüter geeigneten Fluids beim Behandeln von der Turbine oder Entsprechenden an festzulegen, welche die Einrichtung (111) aufweist.

23. Einrichtung nach irgendeinem der Ansprüche 14 bis 22, dadurch gekennzeichnet, daß ihr Boden (15) mit Leitungsmitteln (87) versehen ist, welche die Verteilung und/oder die Wiederaufnahme des Behandlungsfluids unterstützen.

24. Einrichtung nach irgendeinem der Ansprüche 1 bis 23, dadurch gekennzeichnet, daß der Behälter (310) eine longitudinale mittlere Leitung (323) für die Zirkulation des Fluids in eine Richtung aufweist, mit der der oder die in dem Behälter aufgenommene(n) Materialträger ($P_1$, $P_2$) verbunden werden kann (können) und dieser (diese) sich im wesentlichen in der mittleren Ebene und in dem Boden desselben erstreckt (erstrecken) und daß er zumindest einen und bevorzugt zwei longitudinale Kanäle (370, 371) für die Zirkulation des Fluids in die andere Richtung aufweist, die sich auch in dem Behälter in der Umgebung der mittleren Leitung (323) erstrecken.

25. Einrichtung nach Anspruch 24, dadurch gekennzeichnet, daß es ebenfalls vorgesehen ist, daß die Verbindung der mittleren longitudinalen Leitung mit einem oder mit Materialträgern für den Durchlauf des Behandlungsfluids von einer oder vorteilhafterweise mehreren Öffnungen (331, 332) an erfolgt, die in einer Wand angeordnet ist (sind), welche die Leitung begrenzt und mit welcher (welchen) unter Dazwischenlegen von Dichtungsmitteln (342, 343) Verbindungsansätze (345, 346) verbunden werden können, die auf jeder Kammer oder Entsprechenden (340) für eine Verteilung eines Behandlungsfluids vorgesehen sind, die einem Materialträger (P) zugeordnet ist.

26. Einrichtung nach einem der Ansprüche 24 oder 25, dadurch gekennzeichnet, daß die Dichtungsmittel (342, 343) automatisch wirksam werden, wenn Anhaltemittel (341₁, 341₂) des oder der Materialträger in Betrieb gesetzt werden, die in einem oberen Teil der Umfassung (310) vorgesehen sind.

27. Einrichtung nach irgendeinem der Ansprüche 24 bis 26, dadurch gekennzeichnet, daß die longitudinalen Kanäle (370, 371), die sich in dem Boden des Behälters in der Umgebung der mittleren Leitung (323) erstrecken, seitliche Kanäle sind, die von dem Boden des Behälters (310) und/oder einem Gestell, das mit ihm verbunden ist und durch welches er auf dem Boden ruht, von einer ersten Seite, von den Wänden (325, 326) der mittleren Leitung (323) von einer zweiten Seite und von Siebplatten, Gittern oder Entsprechenden (380) von einer dritten Seite begrenzt sind, die sich zwischen den Wänden (325, 326) der mittleren Leitung und der Umfassung (310) auf der gesamten oder nahezu gänzlich der gesamten Länge derselben erstrecken.

28. Einrichtung nach irgendeinem der Ansprüche 24 bis 27, dadurch gekennzeichnet, daß die seitlichen Kanäle (370, 371) für eine Zirkulation des Behandlungsfluids im wesentlichen von den Wänden (325, 326) der mittleren Leitung (323) dem Behälter (310) und der unteren Seite des oder der Materialträger (P) begrenzt sind.

29. Einrichtung nach Anspruch 24, dadurch gekennzeichnet, daß die longitudinale mittlere Leitung (323) für eine Zirkulation des Fluids in eine Richtung einen Querschnitt in Form eines Kreissegmentes (Figur 45c) aufweist und daß die Zirkulation des Fluids in die andere Richtung über der mittleren Leitung erfolgt.

30. Einrichtung nach irgendeinem der Ansprüche 24 bis 29, dadurch gekennzeichnet, daß die Mittel zum Bewegen des Behandlungsfluids, wie eine Turbine (31), ein Wärmetauscher (321), und die Anschlußrohrmittel (317, 319, 320), die ihnen zugeordnet sind, seitlich bezüglich des Behälters angebracht sind, wobei dieser sodann vorteilhafterweise eine Eingangsund Ausgangstür (315a, 315b) der Materialträger (P) an jedem seiner longitudinalen Enden aufweist.

31. Einrichtung nach irgendeinem der Ansprüche 24 bis 30, dadurch gekennzeichnet, daß die seitlichen Kanäle (370, 371) benachbart zu Kammern (386, 387) sind und mit ihnen kommunizieren, die in einem Rahmen (385) angeordnet sind, über welchem der Behälter auf dem Boden (S) ruht.

32. Einrichtung nach irgendeinem der vorgehenden Ansprüche, dadurch gekennzeichnet, daß jedes der Anhaltemittel (341) der Materialträger (P) in ihrem Innern eine Platte (460) mit einer Form und zugeordneten Abmessungen der Materialträger (P), welche die Einrichtung aufnehmen kann und/oder der Module (440, ...) aufweist, die zum Ausrüsten der Materialträger (P) bestimmt sind, wobei die Anhalteplatten (460) der Materialträger in Betriebsstellung ebenfalls das Klemmen und die Dichtheit der Rollen oder der Entsprechenden (B) gewährleisten, die von den Modulen (440) getragen sind, mit denen sie zusammenwirken.

33. Einrichtung nach irgendeinem der Ansprüche 24 bis 32, dadurch gekennzeichnet, daß jeder Handhabungsmodul für die Behandlung von Garnrollen (B) oder Entsprechenden mit Mitteln (443) zum Halten der Rollenstapel versehen ist, denen Klemmund Dichtungskappen (446) der Stapel zugeordnet sind, die untereinander entsprechend einer Einrichtung der Art "Spinne" verbunden sind, die in einem oberen Teil der Mittel zum Halten der Stapel befestigt sein kann.

34. Einrichtung nach irgendeinem der Ansprüche 24 bis 33, dadurch gekennzeichnet, daß sie bewegliche Verbindungen (480) für die Verbindung der Leitung (323) mit den Materialträgern (P) aufweist, die in der Leitung mit der sie kommunizieren, dicht montiert sind und mit den Ansätzen (345) zusammenwirken können, die mit den Materialträgern (P) verbunden sind.

35. Einrichtung nach irgendeinem der vorgehenden Ansprüche, dadurch gekennzeichnet, daß sie seitliche Bojenkörper von einem Block oder mit Aushöhlungen aus einem Bienenwabenmaterial aufweist und deren ebenen Seiten, die zu der vertikalen mittleren Ebene parallel und in einem Abstand voneinander gegenüberliegen, der ein wenig größer ist, als die Breite der Materialträger (P) oder Entsprechenden, welche die Einrichtung bestimmt ist, aufzunehmen, behandelt sind, um Temperaturen und Drucke auszuhalten, die in dem Behälter herrschen, dessen Wärmeisolierung über das Innere sie zugleich gewährleisten.

36. Materialträger, der in einer Einrichtung zum nassen Behandeln von Fasergütern nach irgendeinem der vorgehenden Ansprüche verwendet werden kann, der einen Unterteil (50) mit rechteckigem Umriß aufweist, dadurch gekennzeichnet, daß der Unterteil eine Kammer mit vollem Boden (51) ist, der zumindest mit einer Öffnung (52, 53) an seinem Umfang und/oder seinem Boden für den Eintritt oder den Austritt eines Behandlungsfluids durchgebohrt ist.

37. Materialträger nach Ansprüch 36, dadurch gekennzeichnet, daß er auf den longitudinalen Rändern seines Bcdens (51) Rollbahnen (62, 63) aufweist, die mit zugeordneten Mitteln (64) zusammenwirken können, die auf dem Boden (15) des Behälters (10) angeordnet sind, um die Materialträger (PM) in den und/oder aus dem Behälter oder Autoklav einzuführen und/oder zu entfernen.

38. Materialträger nach einem der Ansprüche 36 oder 37, dadurch gekennzeichnet, daß er Mittel zum Tragen in vertikalen oder horizontalen Reihen angeordneter Rollen sowie zum Zuführen und/oder Zurückführen eines Behandlungsfluids zu den Rollen (B, BH) aufweist.

39. Materialträger nach einem der Ansprüche 36 oder 37, dadurch gekennzeichnet, daß er Mittel zum Tragen von Abgängen (BO) oder eines Seils aufweist (Figuren 10-10B).

40. Materialträger nach einem der Ansprüche 36 oder 37, dadurch gekennzeichnet, daß er Mittel zum Tragen von Garnsträhnen (EG) auf rechteckigen Stöcken (ba) aufweist.

41. Materialträger nach einem der Ansprüche 36 bis 40, dadurch gekennzeichnet, daß er einen Bojenkörper aufweist, der mit seiner Kammer verbunden ist.

42. Materialträger nach Anspruch 41, dadurch gekennzeichnet, daß der Bojenkörper geschlossen und druckfest ist.

43. Gesamtheit von einem Materialträger und einem Modul, insbesondere zum Behandeln von Rollen (B) von Garn, Webfäden oder entsprechenden in einer Einrichtung nach irgendeinem der Anmsprüche 1 bis 35, dadurch gekennzeichnet, daß der Materialträger (P) nur eine Kammer (340) zum Verteilen eines Bades aufweist, der ein Verbindungsansatz (345) der Kammer zu der mittleren Leitung (323) des Behälters zugeordnet ist und daß der dem Materialträger zugeordnete Modul Mittel zum Halten von Rollen (443) aufweist, bei denen gewisse zumindest an ihren freien Enden gegebenenfalls entsprechend Befestigungshälsen (445) der Klemm- und Dichtungskappen (416) mit Hilfe elastischer Ringe oder Entsprechender (447) ausgebildet sind.

44. Baumträger, der in einer Einrichtung nach einem der Ansprüche 1 bis 35 verwendet werden kann, dadurch gekennzeichnet, daß er einen viereckigen Querschnitt, bevorzugt einen quadratischen oder einen rechteckigen aufweist, um zum Tragen eines oder mehrerer Stoffbaumes (-Bäume) zu dienen, der (die) dazu bestimmt ist (sind), daß er (sie) naß in der Einrichtung behandelt wird (werden) (Figuren 12A; 19; 32A).

FIG.2

FIG.1

EP 0 276 616 B1

FIG.3

FIG.4

EP 0 276 616 B1

FIG.5

FIG.6

FIG.15

EP 0 276 616 B1

FIG.7

## FIG.8

## FIG.9

EP 0 276 616 B1

FIG. 10

EP 0 276 616 B1

FIG. 10A

FIG. 10 B

FIG. 12 A

EP 0 276 616 B1

# FIG. 11

ap

13

41₁

11A

PM    RU    14    10    41₂

37

36

37A

EP 0 276 616 B1

FIG. 12

35

B
16
ba
EC

11A

10
38
36
37

45A

PM1    15    PM2    39    40

EP 0 276 616 B1

FIG.13

FIG.14

EP 0 276 616 B1

## FIG.16

PM₁ PM₂
71
10
72
73
11
37
BH 91 50 90 201 70 40

## FIG.17

37
105 104 103 100
101 102
PM₁ PM₂

EP 0 276 616 B1

FIG.18

110
N
19
71
12
114
119
118
W
111
112
T
73
113
E
70
19

FIG.19

N
E
114a
74
42
70₁
70₂
43

FIG.20

N
BH
74
43
42
44

EP 0 276 616 B1

## FIG. 21

## FIG. 22

FIG.23

FIG24

FIG25

FIG.26

FIG.27

EP 0 276 616 B1

FIG.28

FIG.29

EP 0 276 616 B1

FIG.30

FIG.31

EP 0 276 616 B1

FIG.32

FIG.33

# FIG. 32A

EP 0 276 616 B1

FIG34

# FIG35

FIG. 36

# FIG.37

EP 0 276 616 B1

FIG.38

$341_2$

$P_1$

$324b$

316

$340_1$

321

318

352

350 342 323 345 353 351

S

EP 0 276 616 B1

63

# FIG.39

P2   P1

3412

316

321

318

350   352   342   353   351

EP 0 276 616 B1

FIG40

EP 0 276 616 B1

# FIG.41

EP 0 276 616 B1

FIG.42

# FIG.43

FIG.44

# FIG.45

EP 0 276 616 B1

# FIG.45A

# FIG.63

EP 0 276 616 B1

## FIG.45c

310

375

324b

376

330    323    324f

## FIG.45b

341₂

310 PM

375

376

382a    383a

382    323    383

EP 0 276 616 B1

# FIG.46

315  47  341₁  P1  341₂  P2  310  321  318  324a  47  323  385

EP 0 276 616 B1

# FIG.47

# FIG.48

FIG.49

FIG.50

EP 0 276 616 B1

# FIG.51

315  316  318  396  395  392  390

EP 0 276 616 B1

# FIG.52

EP 0 276 616 B1

FIG.53

# FIG.54

EP 0 276 616 B1

# FIG.54B

# FIG.54A

310

415

310

311

416

319

318

317

321

311        PM₁        PM₂        312

EP 0 276 616 B1

FIG.55

## FIG.56

## FIG.57

## FIG.58

## FIG.59

## FIG.60

## FIG.61

FIG. 65

FIG. 62

EP 0 276 616 B1

FIG. 64

EP 0 276 616 B1